# EUROPEAN PATENT SPECIFICATION

(11) **EP 2 667 739 B1**
(45) Date of publication and mention of the grant of the patent: **22.08.2018**
(21) Application number: 11702436.4
(22) Date of filing: 28.01.2011
(51) Int. Cl.: A41D 31/00, A62B 17/00, B32B 5/26, B32B 3/28, B32B 3/30

(54) **LAMINAR STRUCTURE PROVIDING ADAPTIVE THERMAL INSULATION**
SCHICHTVERBUND MIT ADAPTIVER WÄRMEDÄMMUNG
STRUCTURE STRATIFIÉE OFFRANT UNE ISOLATION THERMIQUE ADAPTATIVE

(43) Date of publication of application: 04.12.2013
(73) Proprietor: W.L. Gore & Associates GmbH, 85640 Putzbrunn (DE)
(72) Inventor: KIEDERLE, Günter, 85640 Putzbrunn (DE); HAUER, Stefan, 85635 Höhenkirchen-Siegertsbrunn (DE); KASEMANN, Reiner, 85521 Ottobrunn (DE)
(74) Representative: Schmitt-Nilson Schraud Waibel Wohlfrom Patentanwälte Partnerschaft mbB
(86) International application number: PCT/EP2011/051264
(87) International publication number: WO 2012/100840

(56) References cited:
- EP-A1- 1 579 830
- WO-A2-2009/025892
- US-A1- 2005 050 619
- US-A1- 2009 111 345

## Description

The present invention relates to structures providing adaptive thermal insulation, and in particular relates to a laminar structure providing adaptive thermal insulation. Such laminar structure may be used in the design of fabrics or textiles, in particular in applications for personal protective equipment, e.g. garment, like protective garment or other functional garment like gloves.

Protective garment or functional garment is typically used in applications, like fire fighting, law enforcement, military or industrial working, where protection of the wearer against environmental influence is required, or where it is required to provide desired functional characteristics under given environmental conditions. The garment may be required to protect a wearer against heat, flame, or impact by liquids. On the other hand, it is desired that the garment provides sufficient comfort for the wearer that he is able to do the work he is supposed to do.

To mention fire fighter's garment, as one application where protective garment or functional garment is used, such garment is required to provide, on the one hand, a significant degree of thermal insulation against flame and heat. This requires the garment to efficiently suppress heat transfer through the garment from the outside to the inside. On the other hand, fire fighter's garment is required to provide sufficient flexibility and breathability to allow the fire fighter to do his work efficiently while wearing the garment. This requires the garment to allow to some degree water vapor transfer (breathability) through the garment from the inside to the outside.

Thermal insulation to be provided by fire fighter's garment is required to be effective under a wide range of environmental temperatures: To mention an extreme case, fire fighter's garment is required to provide sufficient thermal insulation to protect a fire fighter when exposed to a "flashover" of flames in a fire where environmental temperatures may be about 1000 °C and higher. In such case the garment will, at least temporarily, be exposed to a temperature at the outer shell of the garment of about 800 - 900 °C. In case of severe fires, still the outer shell of the garment is expected to be at temperatures up to about 350°C when the fire fighter has to approach flames closely. The temperatures at the skin of the fire fighter preferably should be reduced to an increase in no more than about 24 °C.

In technical non fire related tasks the traditional fire fighter garment offers a level of thermal performance which is usually not needed and leads to low comfort (like low breathability of the garment) due to thick and heavy garment layers. In applications like the fire fighter's garment mentioned above, where the garment is required to provide for a wide range of thermal insulation, it is typically difficult to meet all requirements by static structures, i.e. by structures providing thermal insulation, as required in a worst case scenario, for all time.

A number of dynamic concepts have been suggested. The idea behind such dynamic concepts is to create a structure that provides different degrees of thermal insulation according to given environmental conditions. The thermal insulation provided may adapt to environmental temperatures as experienced by the structure, on its outer side and/or on its inner side.

In the field of fire protection the concept of intumescent systems has been developed and is used in a variety of applications, e.g. in intumescent gaskets for fire doors, or in the form of intumescent coatings for pipes. Such intumescent systems typically involve an intumescent substance having a solid body that is subject to a foaming process under exposure to heat, thus increasing the volume and therefore of the insulative property. Usually such foaming process starts when the intumescent substance is subject to a predetermined activation temperature. As a result of the foaming process, the intumescent substance becomes porous, i.e. reduces its density and increases its volume, but still remains to have a solid structure. Typical intumescent substances are sodium silicate, expandable graphite or materials containing carbon and significant amounts of hydrates.

It has been suggested to use intumescent materials for producing fire fighter's garment or other functional garment. US 2009/0111345 A1 discloses a structure providing adaptive insulation for waterproof water vapor permeable fabrics/garments to protect the wearer from heat or flame while maintaining breathability. An intumescent substance based on a polymer resin-expandable graphite mixture is positioned in between a flame barrier and a liquid-proof barrier. US 2009/0111345 A1 specifies an activation temperature of about 200°C and a volume increase of the intumescent substance of at least 200% after exposure to 300 °C for 90 s. Tests have shown that this approach when applied to fabrics of fire fighter's garment has limitations.

A further approach for manufacturing a flame retardant flexible material that provides thermal protection through an intumescent mechanism is shown in WO 2009/025892 A2. In this material a plurality of discrete guard plates are affixed to an outer surface of a flexible substrate fabric in a spaced relationship to each other. The guard plates include an intumescent material which significantly expands upon exposure to sufficient heat. Thereby a continuous thermally insulating and flame retardant outer shell film is formed upon activation. In an embodiment, the guard plates include heat expandable microcapsules that include water or a water based solution which evaporates upon exposure to heat, thereby absorbing heat from the flame source and expanding the microcapsules until they rupture and release their content to drive oxygen away and quench the flame. Activation temperatures of the water-encapsulating microcapsules are reported to be about 100°C - 400 °C.

As alternative to intumescent systems, it has been suggested to provide adaptive thermal insulation for fire fighter's garments using shape memory alloy material or bi-metallic material, see WO 99/05926 A1. According to this approach a dynamic, thermally adaptive, insulation system is based on a spacer material arranged in between an outer shell fabric and an inner liner fabric. The spacer material may be a shape memory alloy trained in helical shape, trough shape, or coil shape, or may be bi-metallic strips or snap disks. Activation temperatures of about 65°C-75°C (shape memory alloy), and 50°C (bi-metallic strips) are reported. In contrast to the suggestions based on intumescent systems discussed above, WO 99/05926 A1 in principle provides for a reversible system that can run through a plurality of activation/deactivation cycles.

WO 2008/097637 A1 discloses a composite fabric system having a thermal barrier comprising an outer shell fabric, a moisture barrier and a thermal liner. The thermal liner comprises at least one thermally expanding flame resistant fabric made from crimped, heat resistant fibers held in a state of compression by a thermoplastic binder in an unactivated condition. When the thermal liner is exposed to heat or flame, the liner is reported to increase its thickness by at least three times.

EP 1 579 830 A1 discloses a hot or cold water bottle with an insulation layer. The bottle has a waterproof inner cover containing water and surrounded by an outer cover. Waterproof hollow bodies are situated between the inner cover and the outer cover. The hollow bodies are filled with a medium having an evaporation temperature between 40°C and 80°C. In case the inner cover is filled with a liquid (particularly water) having a temperature above the evaporation temperature of the medium filled in the hollow bodies, the medium evaporates and expands the hollow bodies, thus increasing or decreasing thermal isolation of the bottle in response to heating or cooling of the water in the bottle.

The invention aims in providing an improved laminar structure allowing adaptive thermal insulation with respect to high temperatures. In a particular application, the invention aims in providing a fabric for use in protective and/or functional garment, particularly for use in fire fighter's garment, said fabric including such improved laminar structure.

The invention provides for a laminar structure providing adaptive thermal insulation, comprising a first layer, a second layer, at least one outer cavity provid ed in between the first layer and the second layer, at least one inner cavity enclosed by an envelope, the envelope being included in the outer cavity, and a gas generating agent having an unactivated configuration and an activated configuration, the gas generating agent being adapted to change from the unactivated configuration to the activated configuration, such as to increase a gas pressure at least inside the inner cavity, in response to an increase in temperature in the inner cavity, the first layer, the second layer, the outer cavity and the inner cavity being arranged such that a distance between the first layer and the second layer increases in response to the increase in gas pressure inside the inner cavity.

The invention provides an adaptive thermal insulation structure that increases its thermal insulation capability in response to increase in temperature. It has been demonstrated recently that such structure may show a distinct increase in thermal insulation capability when temperature increases from a range of normal or operation temperatures to a range of elevated temperatures. In some embodiments a distinct increase from a first (usually lower) thermal insulation capability at lower temperatures to a second (usually larger) thermal insulation capability at higher temperatures can be obtained. In preferred embodiments the distinct increase in thermal insulation capability may be associated with an activation temperature, i.e. the structure is activated when temperature increases to the activation temperature or above. The laminar structure of the invention may particularly allow for provision of an increase in thermal insulation capability in a plurality of distinct stages, according to different activation temperatures.

Laminar structure as used herein defines a structure having, at least in the unactivated configuration of the gas generating agent, a planar or sheet like configuration extending essentially in lateral directions as defined by a length and width direction, and being thin. A configuration is considered thin if it has a thickness in the direction orthogonal to length and width directions that is much smaller than length and width. In typical applications, the laminar structure as defined herein will be a flexible laminar structure with respect to bending or a rigid laminar structure.

The first and second layers may be layers arranged such as to face each other in thickness direction of the laminar structure. The first and second layers do not necessarily need to be adjacent layers. Besides the outer cavity and the inner cavity, other structural elements of the laminar structure, e.g. insulating material, may be interposed in between the first and second layers. The first and second layers will usually extend essentially parallel to each other and orthogonal to the thickness direction. Distance between the first and second layers can be measured in thickness direction. In case the first and/or second layers are not in the same plane, but have a structure with embossments and/or depressions, distance between the layers is meant to refer to a given reference plane. In practical implementations, the first and second layers may e.g. be layers of a fabric, e.g. an inner fabric layer and an outer fabric layer, with the outer cavity and the inner cavity being sandwiched in between the first layer and the second layer. The first and second layer may be referred to as inner layer and outer layer, respectively. In applications of the inventive laminar structure to fabrics used in garment, the term "inner layer" means a layer that is directed to the body of the wearer and typically is arranged as close as possible to the skin of the wearer, whereas the term "outer layer" means a layer directed away from the body of the wearer to the environment.

When being subject to increasing temperature, the gas generating agent will start to produce gas in the inner cavity, and hence gas pressure in the inner cavity will increase. Increasing gas pressure inside the inner cavity leads to an "inflation" of the inner cavity. As a result of the inflation, the inner cavity increases its thickness, and thereby increases the distance between the first layer and the second layer. The result is a "gas containing layer" being formed in between the first layer and the second layer, which provides for efficient thermal insulation because of the low thermal conduction of gas, and because of the increased distance between the first and the second layer.

The gas generating agent is the "driver" for movement of the first and second layers away from each other, in order to increase the distance in between the first and second layers and to increase an insulating volume. Depending on temperature, the gas generating agent may have an unactivated configuration and an activated configuration. In the unactivated configuration of the gas generating agent the adaptive thermal insulation structure is in its unactivated condition. The activated condition of the adaptive thermal insulation laminar structure is obtained by the change of the configuration of the gas generating agent. The gas generating agent may be any of a liquid, a solid, or a gel, or combinations thereof. The gas generation may occur via a physical transformation (i.e. a phase transition from liquid to gas and/or from solid to gas and/or release of adsorbed gases), or via a chemical transformation (i.e. a chemical reaction releasing at least one gaseous product), or by combinations thereof. It has been found that a desired activation threshold of the gas generating agent, e.g. an activation temperature, can be adjusted suitably well by providing the gas generating agent in the form of a mixture of at least two compounds. As an example a liquid gas generating agent having a desired boiling temperature can be provided by mixing two or more liquids.

According to the invention, the outer cavity, the inner cavity, and the gas generating agent form a thermally activated, inflatable composite structure that, when subject to increased temperature, increases its volume. The invention thus provides for an effect resembling the behavior of intumescent substances when subject to increased temperature, but uses a process entirely different from intumescence. In the laminar structure described herein the outer cavity, the inner cavity and the gas generating agent are configured in such a way that the increase in volume leads to a pronounced increase in distance between the first and second layers. Thereby an insulating volume filled essentially by air and/or gas is created in between the first and second layers. Different from known intumescent substances which change configuration from a compact solid structure into a porous solid structure with increasing temperature, the "quasi-intumescent" composite structure according to the invention changes its configuration from an uninflated condition at lower temperatures to at least one inflated condition at higher temperatures. In contrast to known intumescent substances where a foaming process is started after activation and with the result that a vast plurality of individual cavities are formed, the invention provides for a cavity of predetermined geometry already present in the unactivated condition. After activation this cavity changes its shape such as to increase volume and/or to increase the distance in between the first layer and the second layer.

The inventors have found that such a "quasi-intumescent" composite laminar structure can be much better adjusted and controlled in terms of its activation temperature and the rate of activation (i.e. rate of increase in thermal insulation capability with increase in temperature when temperature has reached the activation temperature) than any known intumescent substances. Moreover, it has been shown that even reversible "quasi-intumescent" composite laminar structures can be produced, which allow to reset the system from an activated condition into an unactivated condition, even in a plurality of cycles if desired.

The gas generating agent which, in the unactivated configuration, may be included in the inner cavity, may be adapted to generate gas in the inner cavity in response to the temperature in the inner cavity exceeding a predetermined first activation temperature, such that the distance between the first layer and the second layer increases from a first distance in the unactivated configuration of the gas generating agent to a second distance in the activated configuration of the gas generating agent, thereby reaching a primary activation condition in which the gas generating agent in its activated configuration will be enclosed in the inner cavity. The gas generating agent might be released to the outer cavity in a subsequent secondary activation condition.

Activation temperature is meant to be a temperature at which the gas generating agent starts to produce a significant amount of gas in the inner cavity, the gas pressure in the inner cavity starts to increase and such increasing gas pressure inside the inner cavity leads to a volumetric increase ("inflation") of the inner cavity. Such inflation of the inner cavity changes the shape of an inner envelope enclosing the inner cavity and thereby will also increase the volume of the outer cavity. As a result, a distance of opposing walls enclosing the outer cavity in thickness direction of the laminar structure will increase and lead to the laminar structure adopting its primary activation/inflation condition. Typically, no irreversible structural change has occurred in the laminar structure the process of changing into the primary activation condition. Particularly, the inner envelope may have changed its shape, e.g. may have been elongated in at least one direction, but is not irreversibly changed in its material structure in the primary activation condition. Hence, the laminar structure, after having been transferred into the primary activation condition, may be retransferred into the unactivated condition in a reversible way.

The second distance between the first layer and the second layer in the primary activation condition may be larger by 1 mm, or more than the first distance between the first layer and the second layer in the unactivated configuration of the gas generating agent. In particular embodiments the second distance may be larger than the first distance by 3 mm, or more, or may even be larger by 6 mm, or more.

The laminar structure may further comprise an inner envelope enclosing the inner cavity and being adapted to release gas to the outer cavity, such that the distance between the first layer and the second layer increases from the second distance in the primary activation condition to a third distance in the secondary activation condition. The secondary activation condition will typically be reached when the inner envelope is exposed to increased temperature for a time sufficiently long to cause rupture of the inner envelope. As temperature in the inner cavity increases, gas pressure in the inner cavity increases correspondingly. The inner envelope therefore is subject to increased pressure according to increase in temperature in the inner cavity. Under pressure, stress will be produced in the material from which the inner envelope is made, with the result that the material of the inner envelope will be subject to stress induced strain.

The inner cavity may be adapted to release gas produced by the gas generating agent into the outer cavity in response to temperature in the inner cavity exceeding a predetermined second activation threshold. Secondary activation threshold is determined by temperature inside the inner cavity and the time for which the inner envelope is exposed to the temperature inside the inner cavity. For given temperature in the inner cavity the time the inner envelope is exposed to such temperature must exceed a predetermined threshold time. The threshold time will be the shorter the larger the temperature in the inner cavity is.

In such secondary activation/volumetric increase condition the gas pressure in the outer cavity increases with increasing temperature and induces a further inflation of the outer cavity (independent of the inner cavity) with corresponding further movement of the first and second layers away from each other. By such process the distance between first and second layers further increases and thermal insulation capability of the laminar structure increases. This process usually will be irreversible.

In one embodiment the third distance between the first layer and the second layer in the secondary activated condition may be larger than the first distance between the first layer and the second layer in the unactivated configuration of the gas generating agent by 6 mm or more, in some embodiments by even 15 mm or more.

In typical embodiments, the laminar structure may further comprise an outer envelope enclosing the outer cavity. Such outer envelope and the inner envelope enclosing the inner cavity thereby form an envelope shell structure. The envelope shell structure may be configured such that a volume of the inner cavity and a volume of the outer cavity both increase in response to the increase in gas pressure inside the inner envelope.

In a preferable embodiment, the inner envelope is adapted to enclose the inner cavity in a fluid tight manner.

The inner envelope may be fluid-tight in such a way as to prevent in the unactivated condition of the laminar structure a leakage of gas generating agent in the form of a fluid out of the inner cavity.

A fluid is a substance that flows under an applied shear stress. Fluids are a subset of the phases of matter and may include liquid phases, gaseous phases, plasmas and plastic solid phases, including mixtures thereof. A fluid may also include to be a supercritical phase. Thus, the inner envelope is considered to be essentially impermeable to the gas generating agent if being in its unactivated condition.

Fluid tightness of the inner envelope according to a first aspect is relevant with respect to considerably long timescales of months or even years. An example how to test fluid tightness according to the first aspect is described below.

In a second aspect, the inner envelope may be even fluid-tight with respect to gas generated from the gas generating agent when being activated. Such fluid tightness, being provided at least temporarily for the time the laminar structure is activated, allows for activation of the laminar structure without significant loss of gas generating agent. The better the fluid tightness of the inner envelope according to the second aspect is the larger will be the number of activation/deactivation cycles that can be obtained for the laminar structure with a reversible gas generating agent.

It is not absolutely necessary that the inner envelope comprises, at least in part, a stretchable or elastic material. Surprisingly, a sufficiently large increase in the volume of the inner envelope can even be obtained in case the inner envelope is made of a non-stretchable material with respect to being subject to gas pressure produced in the inner cavity in the activated configuration of the gas generating agent. The advantage of using a non-stretchable material for the inner envelope is that much more robust materials are available that allow to maintain fluid tight properties even after a number of activation/deactivation cycles. Furthermore the size of the envelope in the activated configuration is much more controllable with a non-stretchable material.

The term "non-stretchable" is to be understood in the sense that the material from which the inner envelope is made does not significantly elongate in any direction when being subject to increased gas pressure inside the inner envelope after activation. This at least applies before reaching the secondary activation threshold at which gas generating agent starts to be released to the outer cavity. An increase in distance between the first and the second layer and/or an increase in volume of the envelope may result in changing the shape of the inner envelope from a "flat shape" towards a "convex shape". Such change in shape is due to the tendency of the inner cavity to increase its volume for given surface area of the inner envelope under the gas pressure created as more and more gas generating agent changes from the unactivated configuration to the activated configuration. This process leads to an increase in mean "thickness" or "height" of the inner cavity, and thereby increases the distance between the first and the second layers.

In a particular embodiment, the inner envelope may be made of a temperature resistant material with respect to a range of temperatures in the inner cavity in the activated configuration of the gas generating agent. Again, this at least applies before reaching the secondary activation threshold at which gas generating agent starts to be released to the outer cavity.

The term "temperature resistant" is understood to specify that the material is able to withstand a loading temperature, which is higher than the activation temperature by a predetermined temperature increase, e.g. by an increase of 10°C, for a predetermined time. Typically the temperature is 10°C above the activation temperature, and the time is 1 minute or longer. The required temperature resistant properties depend on the application of the laminar structure, e.g. on the position of the laminar structure in a garment with respect to other layers in the garment. The more the laminar structure will be located towards the source of heat, the higher will be the requirements for the temperature resistance. In one embodiment the temperature is at least 10°C above activation temperature for 1 minute. In another embodiment the temperature is 50°C above activation temperature for 2 minutes. In a preferred embodiment for fire fighter applications the temperature is around 150°C above activation temperature for 2 minutes.

The inner envelope may be made up of a single piece, or may be made up of several pieces that are bonded together.

In an embodiment the one or several pieces of the inner envelope may have a composite structure of a plurality of inner envelope layers attached to each other. In one embodiment the inner envelopes comprises a composite structure having inner envelope layers which may be bonded together by lamination, either bonded in discrete areas or bonded over the entire areas thereof. One inner envelope layer may comprise two or more layers being laminated onto each other. An inner envelope having such layered structure, it will be sufficient if at least one layer of said layered structure provides for fluid tightness and therefore forms a fluid tight layer.

In another embodiment the envelope layers may be made of a fluid tight single layer (monolayer). Said layer might be formed to the envelope by welding or gluing.

In some embodiments the envelope may be made of at least two inner envelope pieces. The at least two inner envelope pieces may be bonded together such as to enclose the inner cavity in between. In such configuration, preferably each of the inner envelope pieces provides for fluid tightness, as desired, and each two adjacent inner envelope pieces are bonded together in a fluid tight manner. Fluid tightness should be provided in the unactivated condition (see first aspect of fluid tightness above), but preferably fluid tightness should also be maintained in the activated condition (see second aspect of fluid tightness above). Preferably the fluid tightness of the envelope should be maintained even after a plurality of activation/deactivation cycles.

A number of materials may be used to form a fluid tight layer, materials that include but are not limited to, like metals or alloys (aluminium; gold; ferrum; mild steel; stainless steel; iron based alloys; aluminium based alloys; brass), polymers (polyolefins like polyethylene (PE), polypropylene (PP); polyvinylchloride (PVC); polystyrole (PS); polyester (e.g. polyethylene terephtalate PET); polycarbonate; polyimide; polyether ether ketone (PEEK); polytetrafluoroethylene (PTFE); polychlorotrifluoroethylene (PCTFE); ethylene chlorotrifluoroethylene (ECTFE); polyvinylidene fluoride (PVDF)), glass, ceramics, nanomaterials (organically modified ceramics, e.g. ormocers®), inorganic organic nanocompos-ites). The fluid tight layer may be formed of a plurality of single monolayers of any of the materials mentioned before, or any combination of these materials, in order to obtain a desired fluid tightness. In general the fluid tight layer will be thin with a thickness of 2 mm or below, in order to have sufficient flexibility. In a preferred embodiment the fluid tight layer has a thickness of less than 1 mm.

An additional sealing layer may be applied to the fluid tight layer at least on one side thereof, e.g. by calendering. The sealing layer may include a thermoplastic polymer (e.g. polyurethane (PU); PP; PE; polyester). The sealing layer may improve the fluid tightness of the fluid tight layer and may allow welding of two envelope pieces together to generate the fluid tight envelope. To enhance the adhesive characteristics of the fluid tight layer, a pretreatment of the layer surfaces, e.g. by corona discharge, plasma discharge, primers, can be used. Possible welding methods include heat sealing, ultrasonic welding, laser welding and microwave welding.

In a further possible embodiment, one or a plurality of glue beads e.g. made from a thermoplastic glue, silicones, contact adhesives, reactive glue systems is applied to at least one of the surfaces of the fluid tight layer to be bonded, and then the other surface is attached to the glue bead.

As an example, the inner envelope may be made of a metal/plastics composite material.

In one embodiment an aluminum/plastics composite material is used for forming the inner envelope. Such a composite may comprise a polyethylene terephtalate (PET) - layer, an aluminium (Al)-layer and a polyethylen (PE) - layer. A reasonable thickness range for the Al-layer is between 4 µm and 25 µm. Such a composite has shown in one embodiment to be sufficiently fluid tight if the Al-layer has a thickness of at least 12 µm. In a further embodiment of the invention the Al-layer can comprise one or more than one Al-sheets. In the case of more than one Al-sheets, said sheets are attached to each other to form one single Al-layer. The attachment of the several Al-sheets might be done in using continuous adhesive polymer sheets to bond the Al-sheets together. In another embodiment the Al-sheets can be formed using a vapor deposition process. The PE - layer may be used as sealing layer by which adjacent inner envelope layers can be bonded fluid tightly together in specific areas in order to create the inner envelope. The thickness of the PE-layer can be between 20 µm and 60 µm. A preferable thickness is about 40 µm. The PET - layer may be used as a cover layer to provide for desired characteristics of the outer surface of the inner envelope. In one example a 12 µm thick PET - layer may be used. The composite layer structure as described before may be obtained by the company Kobusch-Sengewald GmbH, Germany.

Other possible composite layers for forming the inner envelope include, but are not limited to:
- a layered composite structure formed with:
   PET/aluminium/polypropylene (sealing layer) (available under the tradename: Flexalcon® by the company Alcan Packaging GmbH, Germany)
- a layered composite structure formed with: PET/adhesive/aluminium/adhesive/copolymer/polyethylene (available under the tradename:
   Tubalflex® by the company Alcan Packaging GmbH, Germany)

In an embodiment the gas generating agent in the unactivated configuration may have the form of a liquid. In that case the activation temperature of the adaptive thermal insulation laminar structure may corresponds to the boiling temperature of the gas generating agent.

In another embodiment a solid or gel may be used as gas generating agent. Such solid is preferably in the form of a powder which provides for large surface area. A gel is a compound having functional groups embedded therein according to chemical and/or physical bonding mechanisms (e.g. chemical mechanisms like covalent bonding or physical mechanisms like van der Waals-bonds, sterical bonding effects). Examples for gels are hydrogels. Gels may have a limited fraction of solids. A solid or a gel is easier to handle than a liquid due to the requirement of fluid tightness of the envelope. Typically, gas is released by a chemical reaction, see below.

The activation of a liquid or solid gas generating agent involves a physical transformation, namely a phase transition into gaseous phase. The gas generating agent may be in the form of a liquid, and then vaporization of the gas generating agent takes place by activation. It is also possible to use a solid gas generating agent which is able to undergo sublimation into the gas phase.

It is not desired to transform thermal energy into latent heat, in order to slow down increase in temperature. Rather, it is intended to transform all thermal energy into an increase of the distance between first layer and second layer. In case the phase transition does not need to provide for latent heat, gas production in the cavity is fast, and hence a fast increase in the distance between the first layer and the second layer can be achieved at the activation temperature. This is particularly advantageous at low activation temperatures, since it has been found that fast activation rates can be obtained down to rather low activation temperatures of about 50 °C. In a garment, therefore, the inventive laminar structure does not need to be located close to the outer side of the garment which is usually exposed to highest temperatures, e.g. in a flame. Rather, it is possible to locate the laminar structure more to the inner side of the garment, i.e. towards the skin of a wearer. Such an arrangement reduces the requirements concerning the thermal resistance of the materials used.

In an embodiment, the gas generating agent may have a non-significant enthalpy of vaporization or enthalpy of sublimation. The enthalpy of vaporization may be 150 J/g or even lower. In another embodiment the gas generating agent may have a low activation energy in case of physical desorption or chemical reaction.

In case of a fluid gas generating agent, the gas generating agent may have a boiling temperature below 200 °C. In particular embodiments a boiling temperature between 30 °C and 100 °C, preferably between 30 and 70 °C, even more preferably between 40 and 60 °C and most preferably between 45 °C and 55 °C has been used. In a particular embodiment a fluid has been used with a boiling point at about 49 °C. An example for such fluid is a fluid comprising 1,1,1,2,2,4,5,5,5-nonafluoro-4-(trifluoromethyl)-3-pentanone CF₃CF₂C(O)CF(CF₃)₂ (available as "3M NOVEC® 1230 Fire Protection Fluid").

In some embodiments a fluid gas generating agent with one or more of the following characteristics may be used: freezing point of the liquid below room temperature; non flammable or ignition temperature above 200 °C; non hazardous; non or at least low toxicity; low ozone depletion potential; low global warming potential; high chemical and/or temperature stability. In the case thermal decomposition of the fluid occurs it is preferred that such thermal decomposition is reversible.

The gas generating agent may be selected from the group including, but not limited to, the following compounds or mixtures thereof: hydrochlorofluorocar-bons; hydrofluoropolyethers; hydrofluoroethers; hydrofluorocarbons; hydrofluoroketones and the like. Typically such liquids are used for applications like heat exchangers, refrigeration, air conditioning, fire fighting, cleaning/cooling fluids in the electronic industry.

Examples for conceivable fluids are: Galden® HT55, Galden®SV55, Galden®ZV60, all available from Solvay Solexis; Novec® 1230 Fire Protection Fluid, Novec® 649 Engineered Fluid, Novec® HFE 7100, Novec® HFE 7200, Novec® HFE 7500, all available from 3M; Vertrel® XF 2,3-dihydrodecadfluro-pentane available from DuPont; Asahiklin® AE, Asahiklin® AK, available from Ashahi Glass Company, Daikin HFC available from Daikin.

In a further embodiment the gas generating agent, in the unactivated configuration, may have the form of a liquid, a gel or a solid, and the activation temperature of the adaptive thermal insulation laminar structure will be a temperature which corresponds to the activation energy of a chemical reaction leading to release of at least one gaseous compound from the gas generating agent.

When gas generating agent is a solid or a gel, activation may more easily be achieved by a chemical process producing a compound that is released into the gaseous phase. A number of chemical reactions producing gaseous reaction products are known. Examples are: release of gaseous compounds embedded in a gel; soda-reaction; release of ammonia and hydrochloric acid from ammonium chloride. Preferable chemical reactions for releasing gaseous compound have kinetics with very steep increase in reaction rate at the activation temperature, and fast reaction rate.

A gas generating agent in a solid state is preferably provided in the form of a powder or granular substance. The powder is composed of particles with grain sizes. When undergoing chemical reaction, at least one gaseous product is produced from the powder. Using a gas generating agent in powdery form has the advantage of relatively unproblematic handling. The gaseous product preferably is not soluble in water.

When the gas generating agent is a solid or a gel, activation may more easily be achieved by a chemical process producing a compound that is released into the gaseous phase. In such embodiment, the activation temperature of the adaptive thermal insulation laminar structure will be a temperature which corresponds to the activation energy of a chemical reaction leading to release of at least one gaseous compound from the gas generating agent. A number of chemical reactions producing gaseous reaction products are known. Examples are: release of gaseous compounds embedded in a gel; soda-reaction; release of ammonia and hydrochloric acid from ammonium chloride.

An example of a solid gas generating agent is sodium bicarbonate (NaHCO₃, also known as "baking soda", CAS-No 144-55-8) powder. Starting at 55 °C, sodium bicarbonate gradually decomposes into sodium carbonate (Na₂CO₃), water (H₂O) and carbon dioxide (CO₂). The conversion rate increases with increasing temperature:

2 NaHCO₃ → Na₂CO₃ + H₂O + CO₂.

Sodium bicarbonate as well as mixtures of substances including sodium bicarbonate are conceivable.

Further examples of gas generating agent systems showing decomposition reactions are gas generating agents including ammonium carbonate (NH₄)₂CO₃ which decomposes under heat into ammonia (NH₃) and carbon dioxide (CO₂) and H₂O; and the decomposition of ammonium formate to HCN and H₂O.

Another example is a gas generating agent including ammonium chloride (NH₄Cl) which decomposes into ammonia (NH₃) and hydrogen chloride (HCl). This reaction is in principle reversible and may provides a plurality of activation/deactivation cycles.

To facilitate handling of the gas generating agent, in particular to facilitate placement of the gas generating agent in the inner cavity when manufacturing the inner envelope or envelope structure including the inner envelope and the outer envelope a dosing aid might be used. In one embodiment the inner envelope or envelope structure may include a dosing aid wherein the dosing aid extending into the inner cavity and having a portion to which the gas generating agent is applied, said portion being included in the inner cavity. The gas generating agent may be in many cases a substance that is difficult to handle, e.g. because of its viscosity, fugacity, stickiness and/or because it is hazardous. In such cases the use of a dosing aid will be helpful as it is much easier to handle than the gas generating agent alone. When the gas generating agent is activated the pressure in the inner cavity will increases. Should the gas generating agent be deactivated at a later stage, the deactivated gas generating agent might be collected by the dosing aid at least in parts. This is, however, not absolutely necessary. It is conceivable that the gas generating agent, once re-converted into its inactivated configuration will be included in the inner cavity separate from the dosing aid.

The dosing aid may be made of a material that is able to absorb the gas generating agent in its unactivated configuration. Alternatively, the dosing aid may be made of a material that is able to adsorb the gas generating agent in its unactivated configuration. Typically, a dosing aid which absorbs the gas generating agent will allow a better handling of the gas generating agent during manufacture, as the gas generating agent is safely included in the structure of the dosing aid. However, it may happen that desorption of the gas generating agent is hindered or at least retarded. In such cases a dosing aid to which the gas generating agent adheres only at the surface may be beneficial.

In an embodiment the dosing aid may be smaller than the inner cavity in the unactivated configuration of the gas generating agent, such that the dosing aid can be safely enclosed by the inner envelope enclosing the inner cavity.

In a further embodiment the dosing aid is being welded together with the material of the envelope. In such a case the dosing aid may be made of a material that is able to support the formation of a fluid tight seal when it is being welded together with the material of the inner envelope. Such configuration of the dosing aid is beneficial as it allows the dosing aid to be sandwiched between and to be welded together with the layers that have to be bonded together to form a fluid tight seal. As an example, the dosing aid may be provided as a sheet forming a weldable dosing aid layer.

In an embodiment the inner envelope may include an intermediate layer separating the inner cavity into an inner first subcavity and an inner second subcavity. Such intermediate layer may be made of a fluid tight material and may be configured to support formation of a fluid tight seal when being welded together with the material of the inner envelope. The gas generating agent may be applied to one or both sides of the intermediate layer.

In a further embodiment an inner envelope cluster may be provided, such envelope cluster being formed by at least two inner envelopes bonded together. Such inner envelope cluster allows an increase in distance between the first and second layers when the gas generating agent becomes activated. This particularly holds for a configuration in which the inner envelopes are bonded together at lateral ends thereof. The increase in thermal insulation capacity of a laminar structure can be enhanced very efficiently by providing such an inner envelope cluster. Alternatively, to achieve a desired increase in thermal insulation capacity after activation, inner envelopes can be used that cover a smaller surface area of the laminar structure. Thereby, the breathability of the laminar structure can be increased efficiently.

The laminar structure may comprise a plurality of inner cavities and each of the inner cavities may be encased by a respective inner envelope. Preferably each of the inner envelopes is fluid tight. In such arrangement the inner envelopes will be arranged next to each other and with distance to each other.

Such an arrangement provides breathability of the laminar structure, especially in case the inner envelopes themselves are not water vapor permeable. Rather, breathability is maintained by spaces between the inner envelopes. Such spaces are formed at least in the unactivated condition of the laminar structure.

In the activated condition the spaces between the inner envelopes preferably do not shrink much, since the inner envelopes are inflated only and do not substantially increase their surface area. Hence, breathability is maintained also in the activated condition of the laminar structure.

The inner envelope may have the form of a pad or chip, the pad or chip being flat in the unactivated condition and changing shape to the shape of an inflated pillow in the activated condition.

Breathability as used herein is understood to specify the characteristic of a layer or structure, e.g. the envelope or the laminar structure, or of a fabric or garment including such a laminar structure, to be able to transport water vapor from one side of the layer or structure to its other side. In embodiments the layer or structure may be also water tight in comprising at least one water-tight and water vapor permeable (breathable) functional layer. In one embodiment the first layer and/or the second layer comprises said functional layer. In another embodiment said functional layer forms an additional layer of the laminar structure.

The functional layer can be realized using suitable membranes, e.g. microporous membranes made from expanded polytetrafluoroethylene (PTFE).

The term "water vapor permeable layer" or "breathable layer" as used herein is intended to include any layer which ensures a water vapor transmission through a layer or said laminar structure or layered composite. The layer might be a textile layer or a functional layer as described herein. The functional layer may have a water vapor permeability measured as water vapor transmission resistance (Ret) of less than 30 (m²Pa)/W.

The water vapor transmission resistance or resistance-evaporation-transmission (Ret) is a specific material property of sheet-like structures or composites which determine the latent evaporation heat flux through a given area under a constant partial pressure gradient. A laminar structure, fabric composite, textile layer or functional layer according to the invention is considered to be water vapor permeable if it has a water vapor transmission resistance Ret of below 150 (m²Pa)/W. The functional layer preferably has a Ret of less than 30 (m²Pa)/W. The water vapor permeability is measured according to ISO EN 11092 (1993).

The term "functional layer" as used herein defines a film, membrane or coating that provides a barrier to air penetration and/or to penetration of a range of other gases, for example gas chemical challenges. Hence, the functional layer is air impermeable and/or gas impermeable. The functional layer is in this particular embodiment air impermeable, but it might be air permeable in other applications.

In a further embodiment the functional layer also provides a barrier to liquid water penetration, and ideally to a range of liquid chemical challenges. The layer is considered liquid impermeable if it prevents liquid water penetration at a pressure of at least 0.13 bar. The water penetration pressure is measured on a sample of the functional layer based on the same conditions described with respect to the ISO 811 (1981).

The functional layer may comprise in one embodiment one or more layers wherein the functional layer is water vapor permeable and air-impermeable membrane to provide air impermeable but water vapor permeable (breathable) characteristics. Preferably the membrane is also liquid impermeable, at least water impermeable.

A suitable water impermeable and water vapor permeable flexible membrane for use herein is disclosed in US Patent No. 3 953 566 which discloses a porous expanded polytetrafluoroethylene (PTFE) material. The expanded porous PTFE has a micro-structure characterized by nodes interconnected by fibrils. If desired, the water impermeability may be enhanced by coating the expanded PTFE with a hydrophobic and/or oleophobic coating material US 6 261 678.

The water impermeable and water vapor permeable membrane might also be a micro-porous material such as high molecular weight micro-porous polyethylene or polypropylene, micro-porous polyurethane or polyester, or a hydrophilic monolithic polymer such as polyurethanes or polyester, e.g. polyether polyurethanes or polyether polyesters.

In a particular embodiment the laminar structure and/or the inner envelope may be configured to reversible change. In such embodiment the gas generating agent is configured to decompose or evaporate, and recombine or condensate again in response to a respective change in temperature. In an activation cycle, in response to an increase in temperature, the distance between the first layer and the second layer will increase from the first distance (in the unactivated configuration of the gas generating agent) to the second distance (in the activated configuration of the gas generating agent). In a deactivation cycle, in response to a decrease in temperature, the distance between the first layer and the second layer will decrease from the second distance (in the activated configuration of the gas generating agent) to the first distance (in the unactivated configuration of the gas generating agent). Such a sequence of activation cycle plus deactivation cycle may be repeated multiple times.

The inner envelope is intended not to rupture after activation, as long as temperatures remain below the threshold for change to the secondary activation condition of the laminar structure. Thereby the activation process, at least from the unactivated condition to the primary activation condition, is in principle reversible, and may be repeated multiple times. This requires a gas generation process that is in principle reversible and that the gaseous product(s) released remain within the inner cavity (i.e. the inner envelope should be, at least temporarily, gas tight with respect to the gases released). Typical examples for reversible gas generating processes are a physical phase transition of the gas generating agent (in the form of a pure compound or in the form of a mixture), or a sublimation process, e.g. sublimation of jodine. Another example for a reversible gas generating process is the reversible decomposition of e.g. ammonium chloride.

Preferably, the laminar structure and/or the inner envelope are flexible and have a "self-recovering capability". Thereby, in a deactivation cycle the inner envelope automatically recovers its original shape, i.e. its shape before activation of the gas generating agent started. No further mechanical action is necessary to support this process. The "self-recovering capability" of the inner envelope is greatly supported by the fluid tightness of the inner envelope: In a deactivation cycle, the gas generating agent generally will increase its density when undergoing a transformation from the gaseous phase into the liquid phase. Hence the gas generating agent will occupy a much smaller volume in the unactivated configuration than in the activated configuration. In the absence of air flowing into the inner envelope during a deactivation cycle, the transformation of the gas generating agent will induce a contraction of the inner envelope into a (flat) shape in which it encloses a cavity of minimum volume. By such process also the distance between the first layer and the second layer will return to the original distance in the unactivated configuration of the gas generating agent.

The configuration of the laminar structure, as outlined above, allows for provision of macroscopic inner cavities enclosed by respective inner envelopes, which can be activated when subject to heat. Such inner envelopes may have the form of "pillows" or "pockets". The inner envelope may have in the unactivated configuration of the gas generating agent a lateral dimension of 1 mm or more. In particular embodiments the inner envelope may have a lateral dimension of 5 mm or more, preferably of 15 mm or more. Typically, the inner envelope may have a thickness dimension of less than 1 mm. Lateral dimension, as used in this context, refers to the smallest dimension of an inner envelope in a width/length plane. i.e. in a plane orthogonal to the thickness direction, which in general is the by far smallest dimension of an inner envelope in the unactivated configuration of the gas generating agent. Therefore, the lateral dimension basically defines the maximum increase in thickness which an inner envelope can reach in the activated configuration of the gas generating agent. A plurality of such flat inner envelopes may be used to form a flat laminar structure (as described above) which allows a high breathability of the laminar structure and therefore a higher comfort level for the wearer.

Expressed in term of volume increase, the inner cavity may have, in the activated configuration of the gas generating agent, a volume increase of between 10 and 1000 with respect to the volume in the unactivated configuration of the gas generating agent. Preferably the volume increase may be above 40. The laminar structure comprises an outer envelope enclosing the outer cavity, the inner envelope being located within the outer envelope. The outer cavity is enclosed by a semipermeable outer envelope. The outer envelope may comprises at least one functional layer or functional laminate.

The term "semipermeable" as used herein refers to the outer envelope and the material from which the outer envelope is made being, on the one hand, permeable for polar (hydrophilic) gases like water vapor and, on the other hand, at least temporarily gas impermeable. Gas impermeable means at least impermeable for at least one of the gases that are produced by the gas generating agent when changing its configuration from the unactivated configuration to the activated configuration.

Being at least temporarily gas impermeable implies that the outer envelope has gas retention capability for a desired time and with respect to at least one of the gases that are produced by the gas generating agent when changing its configuration to the activated configuration. In particular embodiments, the outer envelope is impermeable for unpolar gases like CO₂, N₂, O₂.

Preferably, the outer envelope is made of a gas impermeable material having a Gurleynumber of 500s and more, preferably 1500s and more, measured in a Genuine Gurley Densometer Model 4340 Automatic Densometer. The Gurley air flow test measures the time in seconds for 100 cc of air to flow through a one square inch sample of the material at 4.88 inch (124 mm) of water pressure.

In one embodiment the outer envelope is water vapor permeable and at least temporarily gas impermeable.

Particularly, the outer envelope may be configured such that a volume of the outer cavity increases in response to the increase of the gas pressure inside the inner cavity and/or inside the outer cavity. An outer cavity enclosed by a water vapor permeable or breathable envelope maintaining breathability of the laminar structure over the whole area covered by the outer cavity. This applies in the unactivated condition of the laminar structure when the gas generating agent is in its unactivated configuration, as well as in activated condition of the laminar structure when the gas generating agent is in its activated configuration. In this way, the whole area of the laminar structure may be covered by an outer envelope or a plurality of outer envelopes without significant loss in breathability of the laminar structure. Breathability will only be affected in those areas where the laminar structure is covered by an inner envelope, in case such inner envelope is made from non-breathable material.

For definition of the terms "breathable"/"water vapor permeable" and "functional layer"/"functional laminate", see the detailed remarks above.

The outer envelope is at least temporarily gas impermeable. Gas impermeable means at least impermeable for at least one of the gases that are produced by the gas generating agent when changing its configuration to the activated configuration, i.e. when temperature increases to the activation temperature or above. At least temporarily gas impermeable is intended to specify that the outer envelope is able to hold gas generated by the activation of gas generating agent within the inner and/or outer cavity for a time longer than the expected duration of a high temperature event as for example in the event of a flash over of a flame.

Flame resistant materials are specified in international standard DIN EN ISO 14116 (2008). EN ISO 15025 (2003) specifies test methods for assessing flame resistance of materials. According to DIN EN ISO 14116 (2008), different levels of flame resistance are specified. As an example, flame resistant materials to be used for fire fighter's garments are required to pass the test procedures specified for level 3 in DIN EN ISO 14116 (2008). For other applications less strict criteria, as specified for levels 1 and 2, may be sufficient.

A suitable water impermeable and water vapor permeable flexible membrane for the use with the outer envelope is disclosed for example in US Patent No. 3,953,566 which discloses a porous expanded polytetrafluoroethylene (ePTFE) material. The expanded porous PTFE material has a micro-structure characterized by nodes interconnected by fibrils. If desired, the water impermeability may be enhanced by coating the expanded PTFE with a hydrophobic and/or oleophobic coating material as described in US 6 261 678.

The water impermeable and water vapor permeable membrane might also be a micro-porous material such as high molecular weight micro-porous polyethylene or polypropylene, micro-porous polyurethane or polyester, or a hydrophilic monolithic polymer such as polyurethanes or polyesters, e.g. polyether polyurethanes or polyether polyesters.

In further embodiments the first layer and/or the second layer may comprise a functional layer. In other embodiments a functional layer may form an additional layer of the laminar structure.

The functional layer may be made of a laminate material, e.g. as described in US 4 194 041.

In a further embodiment the outer envelope may include a water absorbing material. In particular, the outer envelope can be made of material that has water absorbing characteristics. A water absorbing material has the capability of integrating water molecules into its structure. Water molecules (water vapor) may permeate through such material in case of differences in partial pressure of water vapor across the material. Therefore, such material is generally breathable. However, despite being water vapor permeable such water absorbing material will be impermeable to gases, in case such material is not capable to integrate other (gaseous) molecules than water molecules into its structure. Gas impermeability may be given for a wide range of molecules other than water molecules, or may be given selectively for a number of molecules only. In an embodiment the material is permeable for hydrophilic (polar) gases (e.g. water vapor) and lower permeable for unpolar gases (CO₂, N₂, O₂, etc).

Using a water absorbing material for the outer envelope allows to maintain water vapor permeability, but provides for gas impermeability with respect to gas produced after activation of gas generating agent.

Another example for a water vapor permeable and water absorbing material is a closed cell microporous material.

One example for a water absorbing material as specified above is polyurethane (PU).

In further embodiments, the outer envelope may comprise a stretchable material or an elastic material. The outer envelope may even be made of a stretchable material or an elastic material. Stretchable is to be understood in the sense that the outer envelope is able to elongate in at least one direction when being subject to an increased gas pressure after activation. In particular, a material may be considered to be stretchable if a layer or structure of such material, e.g. an envelope layer or envelope part, achieves a strain at break of at least 50% or more according to the specification set out in EN-ISO 527-1,2,3 (1996), when measured at a deformation rate of 200 mm/min.

At least parts of the outer envelope according to the invention may be made of stretchable material.

By elongation in at least one direction of the outer envelope after activation, an even larger separation of first layer and second layers after activation may be provided.

Besides the elongation, the outer envelope may change its shape from a "flat shape" towards a "convex shape" after activation, such as to increase distance between the first and the second layer. Such change in shape is due the tendency of the cavity to increase its volume for given surface area of the outer envelope under the gas pressure created as more and more gas generating agent changes from unactivated configuration to activated configuration. This process leads to increase in mean "thickness" or "height" of the outer cavity, and thereby increases the distance between the first and the second layer. The outer envelope may have the form of a pad or chip, the pad or chip being flat in the unactivated condition and changing shape to the shape of an inflated pillow in the activated condition.

In principle, the outer envelope may be made up of a single piece, but in most cases will be made up of several pieces that are bonded together.

In an embodiment the outer envelope may have a composite structure of a plurality of outer envelope layers attached to each other. In one embodiment the outer envelope layers may be bonded together by lamination, either bonded in discrete areas or bonded over the entire areas thereof. Two or more layers may be laminated onto each other. In an outer envelope having such layered structure, each layer of said layered structure provides for water vapor permeability. It is generally sufficient if at least one of the layers provides for gas impermeability, as defined herein.

In some embodiments the outer envelope may be made of at least two outer envelope pieces. The at least two outer envelope pieces may be bonded together such as to enclose the cavity in between. In such configuration, preferably each of the outer envelope pieces provides for water vapor permeability and gas impermeability.

In an embodiment the outer envelope may be made of at least a first outer envelope layer and a second outer envelope layer, each of a sheet like material being semipermeable as described above. These two outer envelope layers may be bonded together along a sealing structure forming a closed loop, such that the outer cavity is enclosed by the outer envelope layers. Each of the outer envelope layers may have a monolayer structure, but may also have a composite laminated structure made up from a plurality of layers laminated onto each other, as described or the first envelope layer may have a monolayer structure and the second envelope layer may have a composite laminate structure.

The first and second outer envelope layers can be made of different material, providing the outer envelope with different characteristics in different sections thereof. In an example the outer envelope can be made of two envelope layers of different material, a first outer envelope layer of an essentially non-stretchable material, and a second envelope outer layer of a stretchable material. In the activated configuration of the gas generating agent, under pressure generated in the inner/outer cavity, predominantly the second outer envelope layer will expand, i.e. extend its surface area by elongation in at least one direction, whereas the first outer envelope layer will not significantly elongate in any direction. In such configuration the second outer envelope layer will provide for increase of the distance between the first layer and the second layer of the laminar structure, thereby providing for a thick insulating volume, on the one hand. The first outer envelope layer, on the other hand, will provide for dimensional stability and thus a fabric including a laminar structure as described here will remain its shape and size even when being subject to very high temperatures as they do occur in certain emergency events (e.g. a fire flashover). Further, the direction of inflation of the outer envelopes can be adjusted particularly well.

As an example, DIN EN 469 (2007) requires for protective firefighter's garments, that a fire protective fabric does not shrink by more than 3% when being subject to 180°C in an oven. Such requirement can be met in case the outer envelope includes at least one outer envelope layer which does increase its surface after activation. In one embodiment of a garment the outer envelope layer which is closer to the body of the wearer, could be made of a stretchable material, whereas the outer envelope layer which is directed away from the body of the wearer could be made of a non-stretchable and low shrinking material.

In a particular embodiment, the outer envelope may be made of a temperature resistant material with respect to a range of temperatures in the outer cavity in the activated configuration of the gas generating agent.

The term "temperature resistant" with regard to the outer envelope material is understood to specify that the material is able to withstand a loading temperature, which is higher than the second activation temperature by a predetermined temperature increase, e.g. by an increase of 10°C, for a predetermined time. Typically the temperature is 10°C above the second activation temperature, and the time is 1 minute or longer. The required temperature resistant properties depend on the application of the laminar structure, e.g. on the position of the laminar structure in a garment with respect to other layers in the garment. The more the laminar structure will be located towards the source of a heat, the higher will be the requirements for the temperature resistance. In one embodiment the temperature is at least 10°C above activation temperature for 1 minute. In another embodiment the temperature is 50°C above activation temperature for 2 minutes. In a preferred embodiment for fire fighter applications the temperature is around 150°C above activation temperature for 2 minutes.

A number of materials may be used to form an outer semi permeable envelope layer with gas retaining properties. In some examples the laminar structure may comprise:
1. A first and a second outer envelope layer, each made of a monolithic layer of polyurethane or a similar material. The outer envelope is formed by bonding the first and second outer envelope layers together along a bonding portion forming a closed loop.
2. A first and a second outer envelope layer, each made of a laminate structure with a monolithic layer of polyurethane or a similar material to which is attached a layer of expanded porous PTFE. The outer envelope is formed by bonding the first and second outer envelope layers together along a bonding portion forming a closed loop.
3. A first and a second outer envelope layer, each made of a laminate structure with a monolithic layer of polyurethane or a similar material which is sandwiched in between two layers of expanded porous PTFE. The outer envelope is formed by bonding the first and second outer envelope layers together along a bonding portion forming a closed loop.
4. A first outer envelope layer and a second outer envelope layer of different material:
   a) A first outer envelope layer comprising a barrier laminate including an ePTFE membrane, as described in US 4 194 041. The barrier laminate is adhered with its ePFTE side to a textile layer, and
   b) a second outer envelope layer in the form of a barrier laminate including an ePFTE membrane. The barrier laminate is made according to US 4 194 041.

The outer envelope is formed by bonding the first and second outer envelope layers together along a bonding portion forming a closed loop. Layers made of polyurethane (PU) can be used as bonding layers by melting of the PU material. In case any of the layers to be bonded with another layer is made of ePTFE, bonding can be achieved by use of suitable adhesives, e.g. silicone adhesives.

An additional sealing layer may be applied to the outer envelope layer at least on one side thereof, e.g. by calendering. The sealing layer may include a thermoplastic polymer (e.g. polyurethane (PU); polypropylene (PP);polyethylene (PE); polyester (PES)). The sealing layer may improve the tightness of the outer envelope and may allow welding of two outer envelope layers together to generate the envelope. To enhance the adhesive characteristics of the outer envelope layer, a pretreatment of the layer surfaces, e.g. by corona discharge, plasma discharge, primers, can be used. Possible welding methods include heat sealing, ultrasonic welding, laser welding and microwave welding.

In a further possible embodiment, one or a plurality of glue beads e.g. made from a thermoplastic glue, silicones, contact adhesives, reactive glue systems is applied to at least one of the surface of the outer envelope layers to be bonded, an then the other surface is attached to the glue bead.

The inner envelope may even be designed in such a way as to intentionally rupture after activation in a secondary activation condition. This implies that activation process is irreversible, and that the increase in thermal insulation is only temporarily, as the gas generating agent will escape from the inner cavity after the inner envelope has ruptured. However, a single use design of the envelope structure including the inner envelope and the outer envelope, as described here, implies that the envelope structure stretches to the maximum possible extent, and hence allows the laminar structure to increase distance between the first and second layers to a maximum possible extent. This is an efficient way to increase the thermal insulation capability of the laminar structure fast and efficiently. In a catastrophic event, e.g. a flashover of flames, this may provide the only way to survive. In such single use design it is acceptable if the chemical conversion of the gas generating agent is an irreversible chemical reaction. It is more important that a large amount of gas is produced in a short time once temperature exceeds the activation threshold.

Unless the envelope structure has undergone rupture after activation, the laminar structure and/or the envelope(s) may be designed such as to be flexible and/or elastic, and hence has a "self-recovering capability". Thereby, after having been activated the envelope(s) may automatically recover its/their original shape, i.e. its shape before activation of the gas generating agent started, when temperature decreases again. No further mechanical action is necessary to support this process. Such "self-recovering capability" of the envelope(s) may be supported if the envelope(s) is/are substantially gas tight at least for a predetermined time until temperatures decrease below the activation temperature of the gas generating agent: With decreasing temperature the activated and hence gaseous gas generating agent generally will increase its density. A dramatic increase in density occurs when the gas generating agent undergoes a transformation from the gaseous phase into the liquid phase. In such situation the gas generating agent will occupy a much smaller volume in the unactivated configuration than in the activated configuration. In the absence of air flowing into the envelope(s) during decrease in temperature, the transformation of the gas generating agent will induce a contraction of the envelope(s) into a (flat) shape in which it encloses a cavity of minimum volume. By such process also the distance between the first layer and the second layer will return to the original distance in the unactivated configuration of the gas generating agent.

In further embodiments the laminar structure may comprise a plurality of outer envelopes. The outer envelopes may be arranged contiguously to each other. In such contiguous arrangement of outer envelopes at least two adjacent outer envelopes follow each other without a gap. Typically such adjacent outer envelopes share a common bonding area or sealing area. Alternatively, some or all of the outer envelopes may be arranged such as to overlap each other at least partly, e.g. in a structure similar to roof tiles. In such arrangements, the laminar structure as a whole may be formed by the outer envelopes arranged substantially without any open spaces between the first layer and the second layer. A laminar structure is obtained having no spaces or gaps uncovered by any of the outer envelopes, neither in the unactivated condition nor in the activated condition.

As mentioned before, the outer envelope may have the form of a pad or chip, the pad or chip being flat in the unactivated condition and changing its shape to the shape of an inflated pillow in the activated condition. Such structure may be formed in an embodiment by a first semipermeable outer envelope layer of water vapor permeable and at least temporarily gas impermeable material, and a second semipermeable outer envelope layer of water vapor permeable and at least temporarily gas impermeable material, the first outer envelope layer being located adjacent to the second outer envelope layer. Practically, the first outer envelope layer will be arranged on top of the second outer envelope layer in a laminated structure. The first and second outer envelope layers may be bonded together along at least one bonding portion, such as to form the outer cavity in between the first and second layers. The bonding portion typically will have the form of a closed loop, in order to form an outer cavity enclosed by the first and second outer envelope layers. For providing a plurality of outer cavities, a plurality of bonding portions may be provided, each bonding portion forming a closed loop for defining the respective outer cavity. The bonding portions may have the form of a grid with a first subset of bonding portions extending parallel to each other in a first direction and a second subset of bonding portions extending parallel to each other in a second direction.

Each of the outer envelopes enclosing a respective outer cavity may have the form of a "pocket" formed in between first and second layers of the laminar structure by bonding the first and second layers together. The first and second layers thereby form the first and second outer envelope layers of each outer envelope.

Other embodiments may provide a laminar structure having at least one outer cavity structure made of a plurality of outer cavities interrelated with each other after activation of the gas generating agent. Such outer cavity structure may comprise a plurality of contiguous outer envelopes each enclosing a respective outer cavity. Each of these outer cavities, in the unactivated configuration of the gas generating agent, may be separated from its neighbouring outer cavities via respective bonding portions formed in between the respective adjacent outer envelopes. The bonding portions preferably provide for essentially fluid tight separation of the outer cavities from each other. Hence, gas generating agent cannot pass from one outer cavity to another, irrespective of being in the activated or in the unactivated configuration. However, the bonding portions may include predetermined breaking portions, respectively. Such breaking portions are adapted to rupture or break when being subject to increased gas temperature and correspondingly increased gas pressure for an exposure time larger than a threshold time. Therefore, after activation of the gas generating agent in only a part or even in each of the outer cavities of the outer cavity structure, the increasing gas pressure produced in the outer cavities in the activated configuration of the gas generating agent provides for a gas communication between adjacent outer cavities of the outer cavity structure. As a result, an outer "macro-cavity" or "super-cavity" is produced by effectively combining all outer cavities in the outer cavity structure. The time for which the bonding portions have to be exposed to increased gas temperature, in order to rupture and provide a fluid communication between adjacent outer cavities is determined in an analogous way as set out above with respect to the time necessary to cause rupture of the inner envelopes under exposure to increased gas temperature and pressure, and to cause a corresponding change from the primary activation condition to the secondary activation condition.

It is sufficient if the gas temperature and gas pressure in one outer cavity increases sufficiently strong to drive first and second layers away from each other to combine at least 2 cavities with each other.

In further embodiments, such cavity structure may comprise a plurality of cavities arranged in a cluster. The cavities of the cluster are, in principle, separated from each other in a configuration preventing that gas generating agent, at least when being in its unactivated configuration, is able to be transferred from one cavity to another. Nevertheless, under specific conditions, in particular after activation of the gas generating agent, the configuration of the cavities allows a fluid communication between the cavities for the activated, and thus gaseous, gas generating agent. Because of such fluid communication, rupture of the portions separating the cavities may be facilitated, and thus formation of a macro-cavity from the cavities of the cluster may be promoted.

In an embodiment connecting channels may be provided between respective adjacent cavities of the cluster. Such connecting channels may have a structure, e.g. being thin enough and/or having an angled structure, to prevent passage of gas generating agent when being in the unactivated configuration, but to allow for passage of the gas generating agent when being in the activated configuration.

Efficient increase in thickness of the outer cavities, corresponding to a significant increase in thermal insulation capability, after activation of the gas generating agent can be achieved, because there will be a threshold pressure above which the bonding portions between the plurality of adjacent outer cavities in the outer cavity structure rupture at their breaking portions, such that all the (original) outer cavities are combined to a large common outer "macro-cavity" or "super-cavity".

The configuration of the laminar structure, as outlined above, allows for provision of macroscopic outer cavities enclosed by respective macroscopic outer envelopes, which can be activated when subject to heat. Also such outer "macro-envelopes" may have the form of "pillows".

Just by way of example, a typical outer envelope may have in the unactivated configuration of the gas generating agent a lateral dimension of 1 mm or more. In particular embodiments the outer envelope may have a lateral dimension of 5mm or more, preferably of 15mm or more. Typically, the outer envelope in an unactivated condition may have a thickness dimension of less than 2 mm. Lateral dimension, as used in this context, refers to the smallest dimension of an outer envelope in a width/length plane. i.e. in a plane orthogonal to the thickness direction, which in general is the by far smallest dimension of an outer envelope in the unactivated configuration of the gas generating agent. Therefore, the lateral dimension basically defines the maximum increase in thickness an outer envelope can reach in the activated configuration of the gas generating agent. A plurality of such flat outer envelopes may be used to form a flat laminar structure (as described above) which allows a high breathability of the laminar structure and therefore a higher comfort level for the wearer.

The outer cavity may increase its thickness in the activated configuration of the gas generating agent up to a thickness of at least 2mm or more, preferably 6 mm or more.

Expressed in term of volume increase, the outer cavity may have, in the activated configuration of the gas generating agent, a volume increase of between 10 and 2000 with respect to the volume in the unactivated configuration of the gas generating agent. Preferably the volume increase may be above 40.

Besides in a laminar structure, as described above, the principles of the invention may be employed in an envelope structure comprising an outer envelope enclosing an outer cavity, an inner envelope enclosing an inner cavity, and a the gas generating agent, as described above. The inner envelope is included in the outer envelope. In fact such envelope structure is considered to be an inventive contribution on its own and may be used to provide adaptive thermal insulation to a wide range of laminar structures, including textile laminar structures used to produce garments. Envelope structures of the type described may even be used to provide adaptive thermal insulation functionality to existing laminar structures, for example those used with garments, or to improve the thermal insulation functionality of existing conventional laminar structures, for example those used with garment. Therefore, in another aspect the invention provides an envelope structure adapted to be used with a laminar structure providing adaptive thermal insulation, the envelope structure comprising an outer envelope enclosing at least one outer cavity, and at least one inner envelope enclosing an inner cavity, the inner cavity being included in the outer cavity. The envelope structure further comprises a gas generating agent having an unactivated configuration and an activated configuration, the gas generating agent being adapted to change from the unactivated configuration to the activated configuration, such as to increase a gas pressure inside the inner cavity, in response to an increase in temperature in the inner cavity. The envelope structure is configured such that a volume of the inner cavity and a volume of the outer cavity increase in response to the increase in gas pressure inside the inner cavity. An envelope structure of such type may have any configuration as described above with respect to a laminar structure.

The laminar structure outlined above may be incorporated into a fabric composite structure. The term "fabric" refers to a planar textile structure produced by interlacing yarns, fibers, or filaments. The textile structure may be a woven, a non-woven, a fleece or combinations thereof. A "non-woven" textile layer comprises a network of fibers and/or filaments, felt, knit, fiber batts, and the like. A "woven" textile layer is a woven fabric using any fabric weave, such as plain weave, crowfoot weave, basket weave, satin weave, twill weave, and the like. Plain and twill weaves are believed to be the most common weaves used in the trade.

Such fabric composite structure typically will comprise a plurality of fabric layers arranged to each other. The plurality of fabric layers may include an outer heat protective shell structure having an outer side and an inner side. The plurality of fabric layers may also include the laminar structure providing adaptive thermal insulation, as described above.

In a particular embodiment, the laminar structure providing adaptive thermal insulation may be arranged on the inner side of the outer heat protective shell structure.

As an embodiment the outer heat protective shell structure denotes an outer layer of an article (such as a garment) that provides primary flame protection. The outer heat protective shell structure may comprise at least one flame resistant, thermally stable textile layer, like a woven, knit or non-woven textile comprising flame resistant materials like polyimides (meta-aramid, para-aramid) or blends thereof. Specific examples for flame resistant or thermally stable textiles comprise polybenzimidazole (PBI) fiber; polybenzoxazole (PBO) fiber; poly di-imidazo pyridinylene dihydroxy phenylene (PIPD); modacrylic fiber; poly(metaphenylene isophthalamide) which is marketed under the tradename of Nomex® by E.I. DuPont de Nemours, Inc; poly (paraphenylene terephthalamide) which is marketed under the tradename of Kevlar® by E.I. DuPont de Nemours, Inc.; melamine; fire retardant (FR) cotton; FR rayon, PAN (poly acryl-nitril). Fabrics containing more than one of the aforementioned fibers may also be utilized, (a Nomex®)/Kevlar® textile for example). In an embodiment an outer shell layer made with woven Nomex® Delta T fibers is used.

Flame resistant materials are specified in international standard DIN EN ISO 14116 (2008). EN ISO 15025 (2003) specifies test methods for assessing flame resistance of materials. According to DIN EN ISO 14116 (2008), different levels of flame resistance are specified. As an example, flame resistant materials to be used for fire fighter's garments are required to pass the test procedures specified for level 3 in DIN EN ISO 14116 (2008). For other applications less strict criteria, as specified for levels 1 and 2, may be sufficient.

The fabric may also comprise a barrier structure. In one embodiment the barrier structure will be arranged on the inner side of the outer heat protective shell structure.

In particular applications, the barrier structure comprises at least one functional layer. Said functional layer may be water vapor permeable and waterproof and comprising at least one water vapor permeable and water proof membrane.

The barrier structure is a component that serves as a liquid barrier but can allow moisture vapor to pass through the barrier. In garment, such as firefighter turn out gear, such barrier structures keep water away from inside the garment and thereby minimize the weight which the firefighter carries. In addition, the barrier structure allows water vapor (sweat) to escape - an important function when working in a hot environment. Typically, the barrier structure comprises a membrane laminated to at least one textile layer like a nonwoven or woven fabric. Membrane materials which are used to be laminate to at least one textile layer (also known under the term laminate) include expanded polytetrafluoroethylene (PTFE), polyurethane and combinations of those. Commercially available examples of such laminates include laminates available under the name CROSSTECH® moisture barrier laminates or a Neoprene® membrane on a nonwoven or woven meta-aramid fabric.

In one embodiment a barrier structure comprising a membrane of expanded PTFE (ePTFE) made as described in EP 0 689 500 B1 is used. The barrier layer may be adhered to a textile layer made of non-woven aramide textile. Such a barrier structure is commercially available under the name GORE-TEX® Fire-blocker N. In another embodiment a barrier structure available under the name CROSSTECH®/Nomex® PJ moisture barrier is used. Such moisture barrier comprises an ePTFE film with a polyurethane layer attached to a polyamide textile (Nomex®IIIA). Other barriers may be used, e.g. as described in US 4 493 870, US 4 187 390, or US 4 194 041.

Barriers other than moisture barriers are conceivable, e.g. barriers providing at least one functional layer that prevents permeation of gases and/or liquids like chemical compounds in the form of gases, liquids and/or aerosols, or like substances comprising biological material in the form of gases, liquids and/or aerosols. In particular embodiments such other barrier layers may also be breathable.

The barrier structure may be positioned in between the outer heat protective shell structure and the laminar structure that provides adaptive thermal insulation. The barrier structure may also comprise the laminar structure providing adaptive thermal insulation.

The fabric may be used in protective garment or functional garment typically used in applications, like fire fighting, law enforcement, military or industrial working, where protection of the wearer against environmental influence is required, or where it is required to provide desired functional characteristics under given environmental conditions. Such garment may be required to protect a wearer against heat, flame, or impact by liquids. On the other hand, it is desired that such garment provides sufficient comfort for the wearer that he is able to do the work he is supposed to do.

In particular, it is intended that the fabric be adapted for use in a fire/heat protective garment.

Exemplary embodiments of the invention will be described in greater detail below taking reference to the accompanying drawings which show embodiments.
- Fig. 1a: shows a simplified and schematic cross sectional view of a layer used to form an inner envelope in an embodiment;
- Fig. 1b: shows a simplified and schematic cross sectional view of a further layer used to form an inner envelope in an embodiment;
- Fig. 1c: shows a simplified and schematic cross sectional view of a monolithic layer used to form an inner or outer envelope in an embodiment;
- Fig. 1d: shows a simplified and schematic cross sectional view of a layer used to form an inner or outer envelope in an embodiment;
- Fig. 1e: shows a simplified and schematic cross sectional view of a further layer used to form an inner or outer envelope in an embodiment;
- Fig. 1f: shows a simplified and schematic cross sectional view of a further layer used to form an inner or outer envelope in an embodiment;
- Figs. 2a - 2d: show in simplified and schematic form a possibility of the manufacture of inner envelopes being filled with a predetermined quantity of gas generating agent;
- Fig. 3a: shows a simplified and schematic cross sectional view of an inner envelope enclosing an inner cavity which includes a gas generating agent according to an embodiment, wherein the inner envelope layers are welded to each other such as to form the inner envelope;
- Fig. 3b: shows a simplified and schematic cross sectional view of an inner envelope enclosing a cavity according to a further embodiment which includes a gas generating agent applied on a dosing aid;
- Fig. 3c: shows a simplified and schematic cross sectional view of an inner envelope enclosing an inner cavity according to a further embodiment which includes a gas generating agent applied on a weldable dosing aid layer;
- Fig. 3d: shows a simplified and schematic cross sectional view of an inner envelope according to a further embodiment, the inner envelope enclosing two inner cavities each including a gas generating agent;
- Fig. 4a: shows a schematic arrangement of two identical inner envelopes bonded together one on top of the other to form an inner envelope cluster;
- Fig. 4b: shows a further schematic arrangement of two inner envelopes of different shape bonded together one on top of the other to form an-other inner envelope cluster;
- Fig. 4c: shows a further schematic arrangement of two inner envelopes bonded together at one of their lateral ends to form another inner envelope cluster;
- Fig. 5: shows a simplified and schematic cross sectional view of an envelope structure including an inner envelope enclosed in an outer envelope;
- Fig. 6a: shows a simplified and schematic cross sectional view of an envelope structure including an inner envelope enclosed in an outer envelope, as shown in Fig. 5, in an unactivated condition;
- Fig. 6b: shows a simplified and schematic cross sectional view of the envelope structure of Fig. 6a in a primary activation condition;
- Fig. 6c: shows a simplified and schematic cross sectional view of the envelope structure of Fig. 6a in a secondary activation condition;
- Fig. 7a: shows a simplified and schematic cross sectional view of a laminar structure according to an embodiment, in an unactivated condition, the laminar structure including a plurality of outer envelopes formed by bonding together two outer envelope layers of sheet like material;
- Fig. 7b: shows a simplified and schematic cross sectional view of the envelope structure of Fig. 7a in a primary activation condition;
- Fig. 7c: shows a simplified and schematic cross sectional view of the envelope structure of Fig. 7a in a secondary activation condition
- Fig. 8a: shows a simplified and schematic cross sectional view of a laminar structure formed with a plurality of envelope structures, according to a further embodiment, in a primary activation condition;
- Fig. 8b: shows a simplified and schematic cross sectional view of the laminar structure of the embodiment shown in Fig. 8a, in a first stage of the secondary activation condition;
- Fig. 8c: shows a simplified and schematic cross sectional view of the laminar structure of the embodiment of Fig. 8a and 8b in a further progressed stage of the secondary activation condition with a number of bonding portions separating adjacent outer envelopes broken under gas pressure in the respective outer cavities;
- Fig. 9a: shows a simplified and schematic cross sectional view of a fabric including a laminar structure providing adaptive thermal insulation according to an embodiment of the invention;
- Figs. 9b to 9d: show other possible configurations of fabrics 50 including the laminar structure providing adaptive thermal insulation according to an embodiment of the invention.
- Fig. 10: shows a fire fighter's jacket including a fabric as shown in Fig. 9a;
- Fig. 11: shows a schematic sketch of an apparatus to measure increase in distance between the first layer and the second layer when the laminar structure is being brought from the unactivated condition into the activated condition;
- Fig. 12: shows a schematic sketch of a laminar structure test piece for measuring the increase in distance between the first layer and the second layer when the laminar structure is being brought from the unactivated condition into the activated condition;
- Fig. 13: shows schematically the result of a first and second functionality test for a laminar structure configured to reversibly undergo a plurality of activation/deactivation cycles; and
- Fig. 14: shows schematically the result of a third functionality test for a laminar structure.

In all Figs. components of respective embodiments being identical or having corresponding functions are denoted by the same reference numerals, respectively. In the following description such components are described only with respect to the first one of the embodiments comprising such components. It is to be understood that the same description applies in respective following embodiments where the same component is included and denoted by the same reference numeral. Unless anything is stated to the contrary, it is generally referred to the corresponding description of that component in the respective earlier embodiment.

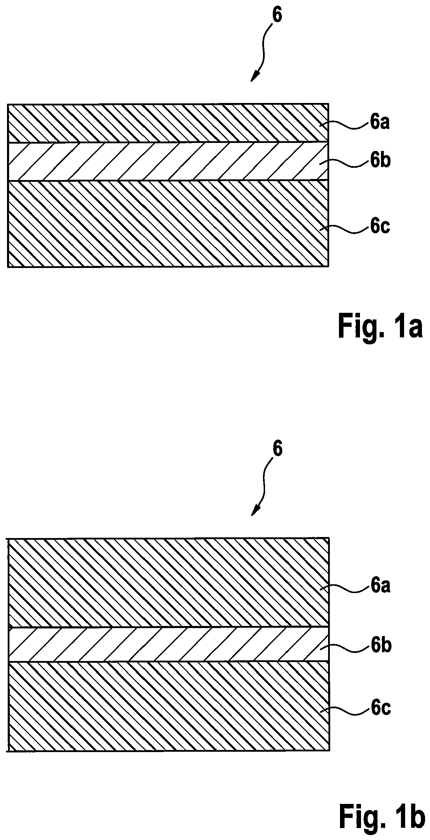

Fig. 1a discloses in a simplified and schematic cross sectional view of a layer 6 according to an embodiment. Such layer 6 may be used to prepare an inner envelope 20. The layer 6 is a laminate comprising a cover layer 6a, a fluid tight layer 6b and a sealing layer 6c. In one example the layer 6 is made of an aluminum/plastics composite material comprising a polyethylene terephtalate (PET)-cover layer 6a, an aluminium (Al)-fluid tight layer 6b and a polyethylene (PE)-sealing layer 6c. A reasonable thickness range for the Al-layer 6b is between 4 µm and 25 µm. The Al-layer 6b has a thickness of at least 12 µm, in order to provide sufficient fluid tightness. The PE-layer 6c is used as sealing layer by which adjacent laminate layers 6 can be bonded together fluid tightly, in order to create the inner envelope 20. The thickness of the PE-layer 6c can be between 20 µm and 60 µm. A preferable thickness is about 40 µm. The PET - layer 6a may be used as a cover layer to provide for desired characteristics of the outer surface of the inner envelope 20 (not shown). In the example a 12 µm thick PET - layer 6a is used. The composite layer structure 6 as described may be obtained by the company Kobusch-Sengewald GmbH, Germany.

An alternative layer 6 for forming the inner envelope 20 (not shown) is shown in Fig. 1b. This layer 6 also is a laminate including a cover layer 6a made of PE with a thickness of 40 µm, an Al-layer 6b with a thickness of at least 12 µm, and a PE sealing layer 6c with a thickness of 40 µm. In this embodiment the cover layer 6a is made of the same material as the sealing layer 6c. The cover layer 6a may be used as an additional sealing layer.

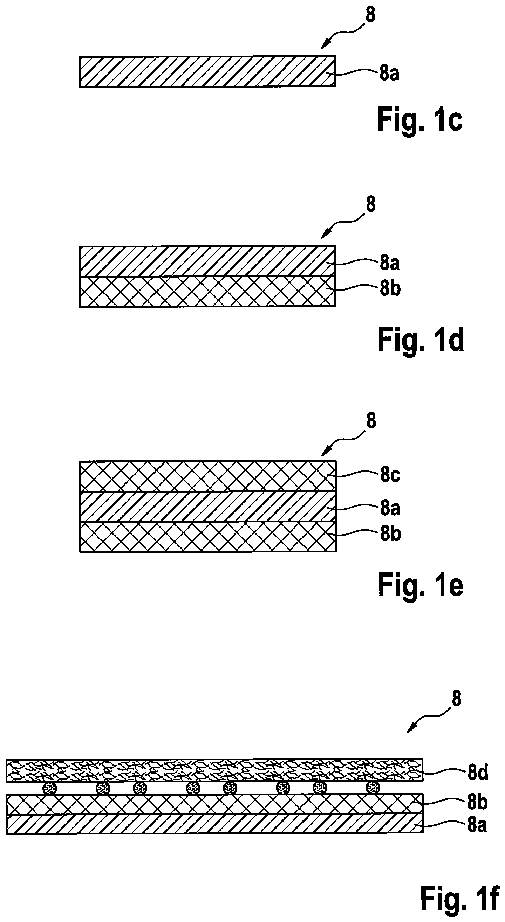

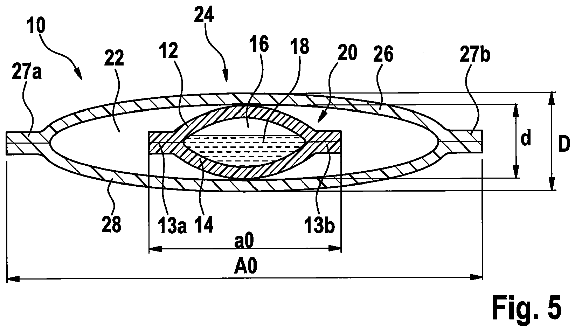

Fig. 1c discloses in a simplified and schematic cross sectional view a sheet like layer 8 according to an embodiment. Such layer 8 may be used as an inner or outer envelope layer to prepare an inner envelope 20 or an outer envelope 24 (both not shown). The laminate layer 8 is made of a semipermeable monolithic layer 8a of hydrophilic material which is at least temporarily gas impermeable, but water vapor permeable. An example for such material is a film of polyurethane (PU) which can have in one embodiment a thickness of **12 *µ*m.** To produce an inner or outer envelope 20, 24, a first and a second envelope layer each made of a monolithic layer 8a of hydrophilic material, as shown in Fig. 1c, may be bonded together along a bonding portion forming a closed loop (see Figs. 5 to 8).

An alternative laminate layer 8 for forming the inner or outer envelope 20, 24 is shown in Fig. 1d. This sheet like semipermeable layer 8 is in the form of a laminate and includes a first layer 8a made of a hydrophilic material similar to the embodiment of Fig. 1c, and a second layer 8b made of microporous material as for example microporous expanded PTFE. In one embodiment the first layer 8a can have a thickness of 12 µm and the second layer 8b can have a thickness of 40*µ*m. The first layer 8a may be attached to the second layer 8b by any known lamination technique, e.g. as described in US 4 194 041.

A further alternative sheet like semipermeable layer 8 for forming the inner or outer envelope 20, 24 is shown in Fig. 1e. This laminate layer 8 includes a first layer 8a made of hydrophilic material, e.g. PU and a second layer 8b made of microporous material, e.g. microporous expanded PTFE, similar to the embodiment of figs. 1c and 1d. The laminate layer 8 further includes a third layer 8c of microporous material, e.g. microporous expanded PTFE, similar to the embodiment of Fig. 1d. The first layer 8a of hydrophilic material is sandwiched in between the second and third layers 8b, 8c. Also in this example, the first layer 8a may be attached to the second layer 8b and the third layer 8c, respectively, by any known lamination technique, e.g. as described in US 4 194 041. In one embodiment the layer 8a can have a thickness of 12 µm, the layer 8b can have a thickness of 40 µm and the layer 8c can have a thickness of 40 µm.

A further alternative sheet like semipermeable layer 8 for forming the outer envelope 24 is shown in Fig. 1f. In this alternative the laminate layer 8 of Fig. 1d is attached to a textile layer 8d. In one example the laminate layer 8 is adhered with its ePFTE side 8b to a non-woven textile layer 8d.

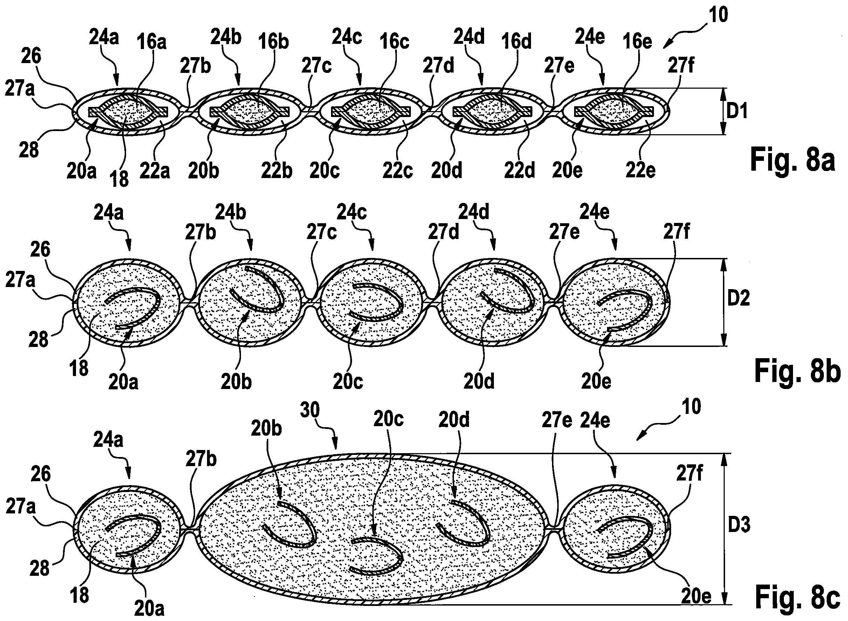

Typically, at least the microporous layer 8b provides for the semipermeable properties (water vapour permeable, gas impermeable) of the laminate layer 8 The microporous layer is especially gas impermeable with respect to gas produced by gas generating agent. Such microporous material usually will also have water proof characteristics. An example for such microporous material is expanded PTFE, as described in US 3 953 566. In most cases also the hydrophilic layer 8a, 8c may have gas impermeable characteristics, at least with respect to the gas produced by the gas generating agent, and typically also with respect to liquid water. However, the gas impermeability of the hydrophilic layer is a requirement only in case the layer 8 includes the hydrophilic material only and no microporous material, as shown in Fig. 8a.

Both the hydrophilic layer and the microporous layer(s) are permeable to water vapour, and hence breathable.

In this application, any structure made up from hydrophilic and/or microporous layers being water vapour permeable, but at least temporarily gas impermeable, as described, and at least with respect to the gas produced by the gas generating agent, is referred to as a functional layer or functional structure.

In addition to the functional layer or functional structure as described, the laminate layers 8 used with the invention may include further layers of breathable textile material, e.g. for purposes of support or protection of the functional layer or functional structure or for purposes of insulation.

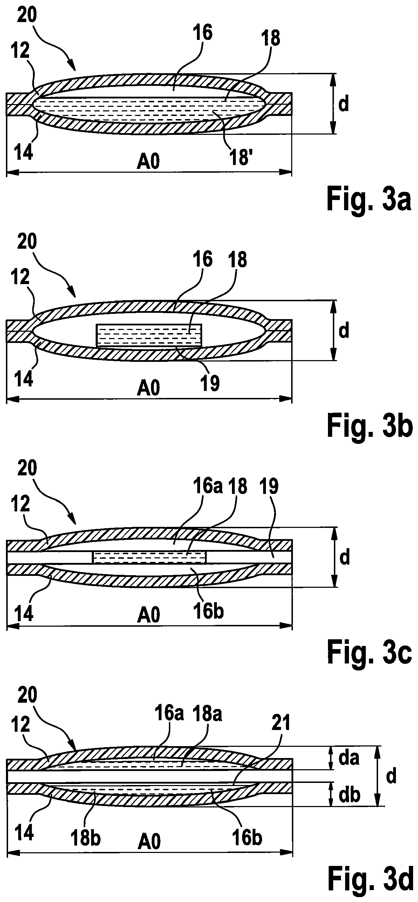

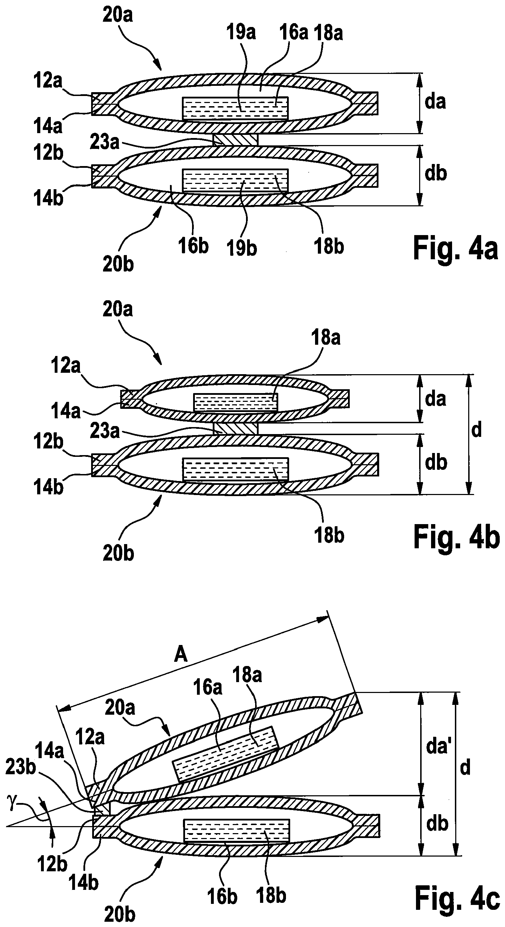

Fig. 3a shows a simplified and schematic cross sectional view of an inner envelope (generally designated as 20) enclosing an inner cavity 16 which includes a gas generating agent (generally designated by 18). In Fig. 3a, as well as in each of Figs. 3b, 3c, 3d, 4a, 4b, 4c the inner envelope 20 is shown in an unactivated configuration of the gas generating agent 18, and hence the inner envelope 20 has an uninflated, essentially flat shape, also referred to as the unactivated condition. In a flat configuration as shown in Figs. 3a to 3d and Figs. 4a to 4c, the envelope 20 has a dimension in thickness direction being significantly smaller than the dimensions of the envelope 20 directions orthogonal to the thickness direction, i.e. in lateral directions. Dimension of the envelope 20 in thickness direction is designated by d in Figs. 3a to 4c. Dimension of the envelope 20 in lateral direction is designated by A0 in Fig. 3a to 4c. Here, A0 designates the length from one end of the weld to the end of the opposite weld of the envelope 20. In embodiments with a generally "round" or quadrangular shape of the envelope, dimensions A0 of the envelope may be substantially equal for all lateral directions. In other embodiments of the envelope with a generally elongate shape, dimension A0 in a width direction may be smaller than dimension A0 in a length direction.

In one embodiment the inner envelope 20 is made of two inner envelope layers 12, 14. Inner envelope layers 12, 14 may each have a configuration as the layer 6 shown in Figs. 1a or 1b. Particularly, although not explicitly shown, the inner envelope layers 12, 14 may be each made up of three layers, as the layer 6 depicted in Fig. 1a. The envelope layer 12 forms an upper part of the inner envelope 20 which encloses an upper part of inner cavity 16. The envelope layer 14 forms a lower part of the inner envelope 20 which encloses a lower part of inner cavity 16. The layer 12 enclosing an upper part of the inner cavity 16 and the layer 14 enclosing a lower part of the inner cavity 16 have an identical configuration, e.g. a laminate like described in Fig 1a. The inner envelope 20 has an innermost sealing layer, an intermediate fluid tight layer, and an outside cover layer.

Alternatively, the inner envelope 20 may be made up of two inner envelope layers as depicted in Fig. 1b or of one inner envelope layer as depicted in Fig. 1a and one inner envelope layer as depicted in Fig. 1b. Alternative materials, in particular monolayers or laminate layers of more or less complicated configuration, may be used for making the inner envelope 20, as outlined above. In case a gas generating agent is used that is substantially liquid in its unactivated configuration it is preferable that the laminates used to form the inner envelope are fluid tight and are bonded together fluid tightly such that a fluid tight inner envelope 20 is produced.

The inner envelope 20 encloses inner cavity 16 which is filled with gas generating agent 18. Gas generating agent 18 is chosen to be a liquid having a suitable equilibrium vapor pressure at room temperature defining an unactivated configuration of gas generating agent 18. In the unactivated configuration of the gas generating agent 18 shown in Fig. 3a gas generating agent 18 is substantially in its liquid phase designated by 18' with some amount in the gas phase, according to its equilibrium vapor pressure. The inner envelope 20 provides a substantially fluid tight enclosure of inner cavity 16, and hence inner cavity 16 contains sufficient amount of gas generating agent 18, and the remaining volume of inner cavity 16 is filled with other gas, in particular with a rest amount of air or other gas having been enclosed in inner cavity 16 at the time gas generating agent 18 was filled in. In the example disclosed, gas generating agent 18 is a fluid having the chemical formula CF₃CF₂C(O)CF(CF₃)₂. Such fluid is typically used for extinguishing fires and is commercially available under the trade name "Novec® 1230 Fire extinguishing fluid" from 3M. Other fluids may be used for the gas generating agent, as set out above. Alternatively, the gas generating agent 18 may be chosen to be a solid in the unactivated configuration, e.g. in the form of a powder. In such case it will be sufficient if the inner envelope is tight enough to protect gas generating agent from contamination.

A first method for producing an inner envelope 20 as shown in Fig. 3a is as follows:
1. Inner envelope, method 1:first sealing step:
   Two inner envelope layers 12, 14 made from a material according to Fig. 1a or 1b are put on top of each other, such that their respective sealing layers face each other. For forming a quadrangular inner envelope 20 a hot bar (sealing width: 2mm) is brought into contact with the inner envelope layers 12, 14 such as to bring the sealing layers into contact and to weld the sealing layers together. This procedure is done for three of four sides of the quadrangular envelope 20. Thus an inner envelope 20 with one side open is formed.
2. Inner envelope, method 1:filling step:
   The inner envelope 20 is put onto a precision scale and the gas generating agent 18 is filled into the inner envelope, e.g using a syringe needle. The amount of gas generating agent to be filled in is controlled by the scale.
   As an example: A quantity of 0.07 g gas generating agent 18 will be filled into the inner envelope 20, in case the inner envelope 20 has the following specification: the inner envelope 20 is formed from two inner envelope layers 12, 14 made up of PET/AI/PE as described above, outer size of the inner envelope 20 is 20 mm length and 20 mm width (corresponding to an inner size of the cavity of 16 mm length and 16 mm width), and gas generating agent 18 is selected as Novec® 1230.
3. Inner envelope, method 1:second sealing step:
   After the filling step is finished the open side of the inner envelope 20 is closed by a fourth 2mm sealing line. The inner envelope 20 is then cut precisely along the sealing line.

Correctness of the filling quantity for inner envelopes produced as outlined above can be measured as follows:
A predetermined quantity of inner envelopes 20 (e.g. 10 inner envelopes) are produced according to the first sealing step, each of these inner envelopes 20 is marked and weighed individually on a 4 digit scale (e.g. Satorius BP121S). A predetermined quantity of gas generating agent 18 in the form of a liquid is injected through a pipe from a gravity feed reservoir, including a time-triggered valve, through a syringe needle into the interior of the inner envelope. A predetermined time for valve opening is ensured by an adjustable electrical timer.

Each inner envelope 20 is closed immediately by the second sealing step. Each of the filled inner envelopes 20 is weighed, and the weight of the empty inner envelope 20 (measured before filling) is subtracted. A maximum deviation of plus/minus 10 % from the mean value of the sample set is achievable.

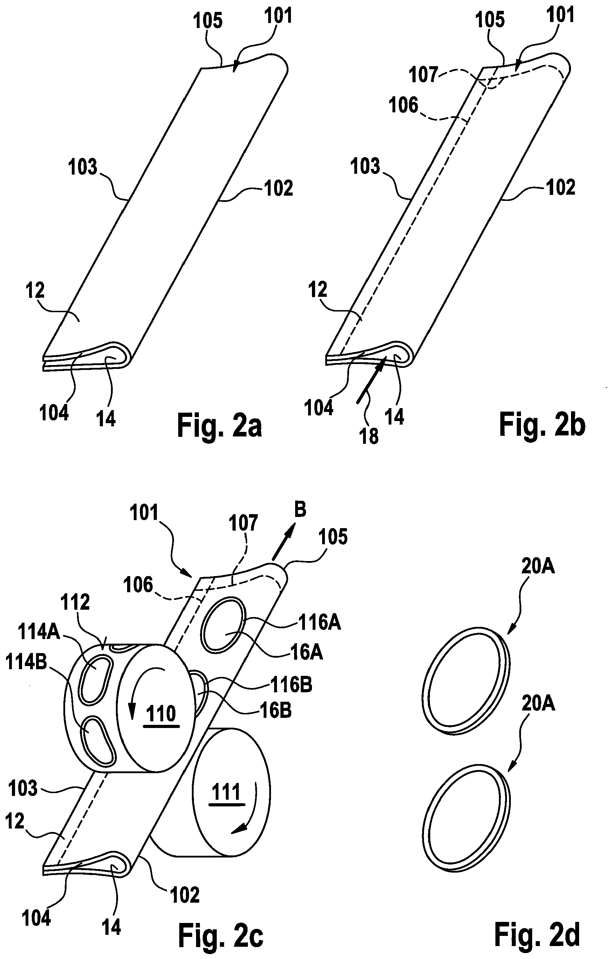

A second method for producing an inner envelope 20 as shown in Fig.2a to 2d is as follows:

### Inner envelope, method 2: First step (Fig. 2a):

An elongate inner envelope laminate sheet, e.g. a sheet being 65 mm wide and 1.3 m long, made from a laminate material 6 according Fig 1a is used. Alternatively, a sheet of different size and/or made from another laminate material, e.g. made from a laminate material 6 as shown in Fig. 1b, may be used. The inner envelope laminate sheet is folded it along its long side in such a way that the cover layer 6a of the laminate 6 is located outside, and the sealing layer 6c is located inside. Thereby, an upper inner envelope layer 12 and a lower inner envelope layer 14 are formed in such a way that the sealing layers 6c, 6c are facing each other. In this way a pre-envelope 101 is created. The pre-envelope 101 has a width of 32.5 mm and a length of 1.3 m. The pre-envelope 101 is closed at its one long side 102 and is open along its opposite long side 103. Both short sides 104 and 105 of the pre-envelope 101 are open.

### Inner envelope, method 2: Second step (Fig. 2b):

A rotating ultrasonic welding wheel (e.g. 5 mm wide) is brought into contact with the laminate 6 at the open long side 103, such as to bring the two sealing layers 6c into contact with each other. The sealing layers 6c are welded together continuously along a sealing line 106 extending parallel to the open long side 103 of the pre-envelope 101. Thereby the long side 103 is closed and the pre-envelope 101 has a tubular shape with two open short sides 104, 105. A hot sealing bar (sealing width: 2mm) is brought into contact with the laminate 6 of the pre-envelope 101 at one of the shorter sides 105, such as to bring the sealing layers 6c into contact with each other. The sealing layers 6c are welded together along a sealing line 107 extending parallel to the shorter side 105 such as to close the pre-envelope 101 at the shorter side 105. The pre-envelope 101 then has a shape of a tube with one end closed.

Then, holding open short side 104 higher than closed short side 105, gas generating agent 18 is filled into the open tubular pre-envelope 101 via the open short side 104. As an example, for a pre-envelope 101 as described and forming an inner cavity with inner size of 23 mm in width and 1m in length, the pre-envelope 101 being made of a laminate layer 6 made up of PET/AI/PE, as described above and shown in Fig. 1a, and for a as gas generating agent 18 being a liquid known as Novec® 1230, as described above, a quantity of 4 ml of gas generating agent 18 is filled into the pre-envelope 101.

### Inner envelope, method 2:Third step (Fig. 2c)

The pre-envelope 101 is held with its open short side 104 facing upwards, and is held in an up-right position, such that the gas generating agent 18 filled in the cavity concentrates at the closed shorter side 105 of the pre-envelope 101. Starting from the closed shorter side 105, the pre-envelope 101 is brought into intimate contact with a second rotating ultrasonic welding wheel 110. Welding wheel 110 is part of an ultrasonic welding machine having a pair of welding wheels 110, 111. The welding wheel 110 has a circumferential face 112 formed with a plurality of circumferential seal contours 114A, 114B, .... Each of the seal contours 114A, 114B, ... has a shape corresponding to the shape of the sealing line of the envelopes 20A, 20B,... to be produced. In this configuration welding wheel 111 has a planar circumferential surface.

The pre-envelope 101 is transported through the pair of welding wheels 110, 111 starting with its short closed side 105, see arrow B in Fig. 2c indicating the direction of movement of the pre-envelope 101. In this way the welding wheel 110 first contacts first the closed short side 105 of the pre-envelope 101 and finally contacts the open short side 104 of pre-envelope 101.

When the welding wheel 110 contacts the pre-envelope 101, the gas generating agent 18 is pushed away by the rotating ultrasonic welding wheels 110, 111 in areas where one of the sealing contours 114A, 114B, comes into contact with the pre-envelope 101, since in such areas the sealing layers are brought into contact with each other and are welded together. In this way, a closed sealing contour 116A defining the sealing portions of the final envelope 20A is formed in the pre-envelope 101.

As the pre-envelope 101 travels through the gap between the rotating welding wheels 110, 111 a plurality of consecutive sealing contours 116A, 116B,... are formed in the pre-envelope 101. Each sealing contour 116A, 116B,... encloses a respective cavity 16A, 16B,... filled by a predetermined amount of gas generating agent 18.

It has been found that, following the procedure described above, each cavity 16A, 16B, .... formed in pre-envelope 101 can be filled by the approx. same predetermined amount of gas generating agent 18. Particularly good reproducible results can be obtained by using an ultrasonic welding tool, e.g. in the form of a pair of ultrasonic welding wheels 110, 111, to produce the sealing contours 116A, 116B, ... in the pre-envelope 101.

In one example having dimensions as outlined above 40 filled sealing contours 116A, 116B, ...., each having outer dimensions of 20mm width and 23mm length and a cavity size of 16mm width and 18mm length, can be created.

### Inner envelope, method 2: Fourth step (Fig. 2d):

Finally, the final pre-envelope 101 having sealing contours 116A, 116B,... formed therein, is cut, e.g. using a hand operated or automated standard dye cut machine with a cutting dye having the shape of the outer dimensions of the sealing contours 116A, 116B. In this way individual inner envelopes 20A, 20B, ..., as shown in Fig. 2d, are produced.

Correctness of the filling quantity for inner envelopes produced according to the second method above can be measured as follows:
A predetermined quantity of inner envelopes 20 (e.g. 10 envelopes) are produced according to the first to fourth sealing/filling steps above, each of these inner envelopes 20 is marked and weighed individually on a 4 digit scale (e.g. Satorius BP121S). Each of the inner envelopes 20 is put on a hot plate with a temperature well above the activation temperate of the gas generating agent 18 to ensure that each of the inner envelopes 20 will burst and release the gaseous gas generating agent 18 completely. The empty inner envelopes are weighed individually on a 4 digit scale. The weight loss of each inner envelope is calculated. In case of humidity pick-up of the inner envelope material, the inner envelopes must be conditioned for at least 1 h in the same environment, ideally at 23 °C and 65% relative humidity.

Fluid tightness of the inner envelope can be measured according to one of the following methods:

### Method 1 for measurement of the fluid tightness of the inner envelopes:

Each inner envelope 20 is marked individually. Each inner envelope 20 is weighed on a 4 digit scale (e.g. SatoriusBP121S). The inner envelopes 20 are stored under predetermined environmental conditions (20 °C, 65% relative humidity). The weighing procedure described is repeated after 1 month of storage. This procedure is continued for at least 6 months. The weight loss after 6 months should be less than 20 %, better 10 %, ideally less than 1 % of the filling weight. Additionally, functionality of each inner envelope 20 is checked after 6 months on a hot plate or in a water bath. The inner envelope 20 must show thickness increase when subjected to temperature above activation temperature.

Fig.3b shows an inner envelope 20 enclosing an inner cavity 16 according to a further embodiment. The inner envelope 20 shown in Fig. 3b includes a gas generating agent 18 applied on a dosing aid 19. The dosing aid 19 may be made of any material that is able to absorb gas generating agent 18, e.g. an absorbent paper material, a woven or non-woven textile material, or a sponge like material. In Fig. 3b a blotting paper is used as the dosing aid 19. The dosing aid 19 is soaked with a predefined amount of gas generating agent 18, and then is inserted into the inner cavity 16. This can be done in a way similar to the first method described above. As an alternative to the procedure described above, the dosing aid 19 may be provided with the gas generating agent 18 in a first step, and then the dosing aid 19 may be arranged in between the first and second inner envelope layers 12, 14, before the first and second inner envelope layers 12, 14 are bonded together. Gas generating agent 18, once activated, will be released from dosing aid 19 and inflate inner cavity 16.

In the embodiment of Fig. 3b the dosing aid 19 is smaller in lateral dimensions than the inner cavity 16, such that the dosing aid 19 does not interfere with the bonding (e.g. along seaming lines) of the first and second inner envelope layers 12, 14.

Fig. 3c shows an inner envelope 20 enclosing an inner cavity 16 according to a further embodiment. Also in this embodiment, the inner envelope 20 includes a gas generating agent 18 applied on a dosing aid 19. In this embodiment the dosing aid 19 is made of a material that does not interfere with the bonding process used to bond the inner envelope layers 12, 14 together, or may even be made of material that does support such bonding process as a sealing layer. This allows the dosing aid 19 to be applied in a sandwich type arrangement between the first and second inner envelope layers 12 ,14 before these are bonded together. The dosing aid 19 may even cover the sealing areas where the first and second inner envelope layers 12, 14 are to be bonded together, and hence dosing aid 19 may have a sheet like configuration and be used in the form of a dosing aid layer 19 interposed in between the first and second inner envelope layers 12, 14 and covering the whole sealing area of the first and second inner envelope layers 12, 14. The first and second inner envelope layers 12, 14 are bonded together along the sealing areas, e.g. by welding, with the dosing aid 19 interposed.

Given the gas generating agent 18 does not interfere with the bonding of the first and second inner envelope layers 12, 14, gas generating agent 18 may be applied to the dosing aid 19 as a whole. To restrict areas where gas generating agent is applied to the dosing aid in a sealing portion, the gas generating agent 18 may be applied in the form of discrete stripes onto the dosing aid 19. Distance between the stripes can then be selected such that each inner envelope is crossed by one stripe of gas generating agent. It will generally be more advantageous to apply the gas generating agent 18 only at those portions of the dosing aid 19 which will be inside the inner cavity 16, i.e. which will be fully enclosed by sealing areas where the first and second inner envelope layers 12, 14 are bonded together. In this way, the desired predetermined amount of gas generating agent 18 for proper activation and inflating of the inner envelope 20 can be adjusted more precisely. E.g. the gas generating agent 18 may be applied to the dosing aid 19 in an array of a plurality of discrete spots or areas, all of which are fully enclosed in a respective inner cavity 16.

In an embodiment where the first and second inner envelope layers 12, 14 are bonded together by welding having the dosing aid in between, the dosing aid 19 may be of a textile structure like polypropylene non-woven; or may be made of a porous material like expanded polyethylene (ePE); or may be made of an expanded polypropylene (ePP). Each of these materials allows welding of the first inner envelope layer 12 to the second inner envelope layer 14 with a layer of that material interposed in between.

In a further embodiment, the first inner envelope layer 12 and/or the second inner envelope layer 14 may provide the function of the dosing aid 19. This can be achieved by forming the innermost layers of the first inner envelope layer 12 and/or the second inner envelope layer 14, which come into contact when welding the first inner envelope layer 12 to the second inner envelope layer 14, from a suitable material, e.g. the materials mentioned before.

In the embodiment shown in Fig. 3c the dosing aid 19 is interposed in the form of a further layer in between the first and second inner envelope layers 12, 14 in such a way that two inner sub-cavities 16a and 16b are formed. Inner subcavity 16a is enclosed by upper laminate layer 12 and dosing aid layer 19, inner subcavity 16b is enclosed by upper laminate layer 12 and dosing aid layer 19. Gas generating agent 18, once activated, will be released from dosing aid layer 19 and inflate inner subcavities 16a and 16b. As dosing aid 19 is not fluid tight with respect to gas generating agent 18, at least not while the gas generating agent 18 is in the activated configuration (gaseous configuration), some exchange of gas generating agent 18 between inner subcavities 16a and 16b remains possible. This embodiment has the advantage that the convection of the gas generating agent within the envelope is limited.

Fig. 3d shows another inner envelope 20 according to a further embodiment. The envelope 20 of Fig. 3d has first and second inner envelope layers 12, 14 and an intermediate layer 21, according to the layer 6 in Fig.1b. The intermediate layer 21 is interposed between layer 12 and layer 14 in a sandwich type arrangement. This arrangement provides for two inner subcavities 16a and 16b being formed. The gas generating agent 18 is provided separately as first gas generating agent 18a for first inner subcavity 16a and a second gas generating agent 18b for second inner subcavity 16b. In a further embodiment the first gas generating agent 18a may be provided by a first dosing aid, similar to the embodiment of Fig. 3b. The second gas generating agent 18b may be provided by second dosing aid, also similar to the embodiment of Fig. 3b.

Further, intermediate layer 21 is made of essentially fluid tight material with respect to gas generating agent 18 in the unactivated configuration as well as with respect to gas generating agent 18a, 18b in the activated configuration. Intermediate layer 21 is also made of material that provides a fluid tight bonding between first and second inner envelope layers 12, 14, as described above. A suitable combination of materials in the embodiment of Fig. 3a is: First inner inner envelope layer 12: PET/AI/PE (see Fig.1a); intermediate layer: PE/AI/PE (see Fig. 1b); second inner envelope layer 14: PET/AI/PE (see Fig. 1a).

It is also possible to use an intermediate layer 21 being coated with a first dosing aid layer and a second dosing aid layer on both of its sides, such coating layers acting as a dosing aid for the first and second inner subcavities 16a, 16b, respectively.

In the embodiment of Fig. 3d, the size/volume of inner subcavities 16a and 16b, and correspondingly the amount of gas generating agent 18a, 18b to be filled in the inner subcavities 16a, 16b can be adjusted as desired. It is also possible to use different gas generating agents 18a and 18b in inner subcavities 16a and 16b, respectively. This can be important, as regularly one of the inner subcavities 16a, 16b will be arranged closer to a source of heat than the other inner subcavity. Thus, the envelope 20 of Fig. 3d can be designed in such a way that the gas generating agent 18a or 18b in the inner subcavity 16 or 16b which is arranged closer to the source of heat has a higher activation temperature than the other inner subcavity. Further, provision of two "independent" inner sub-cavities provides for redundance in the sense that the adaptive insulation system still works in case one of the inner subcavities is broken.

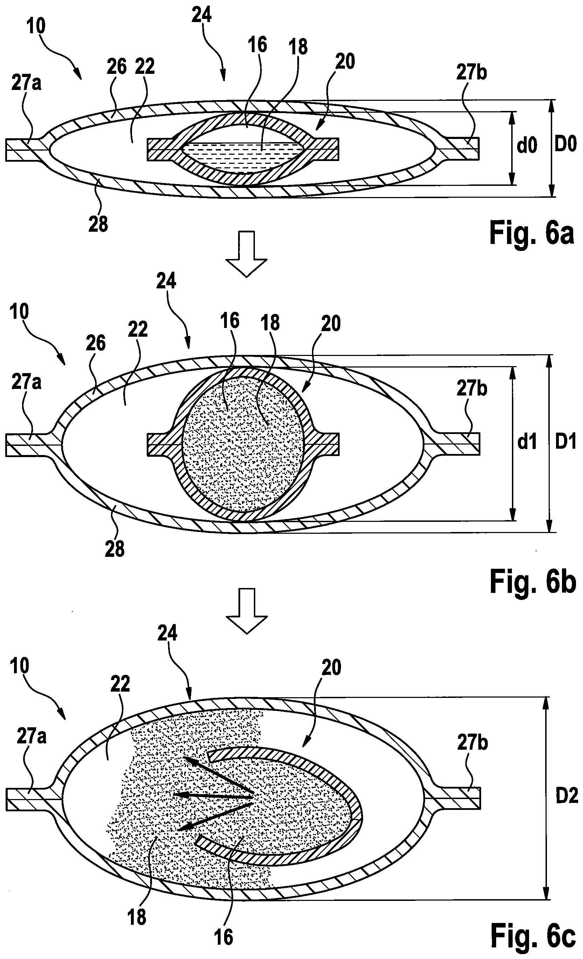

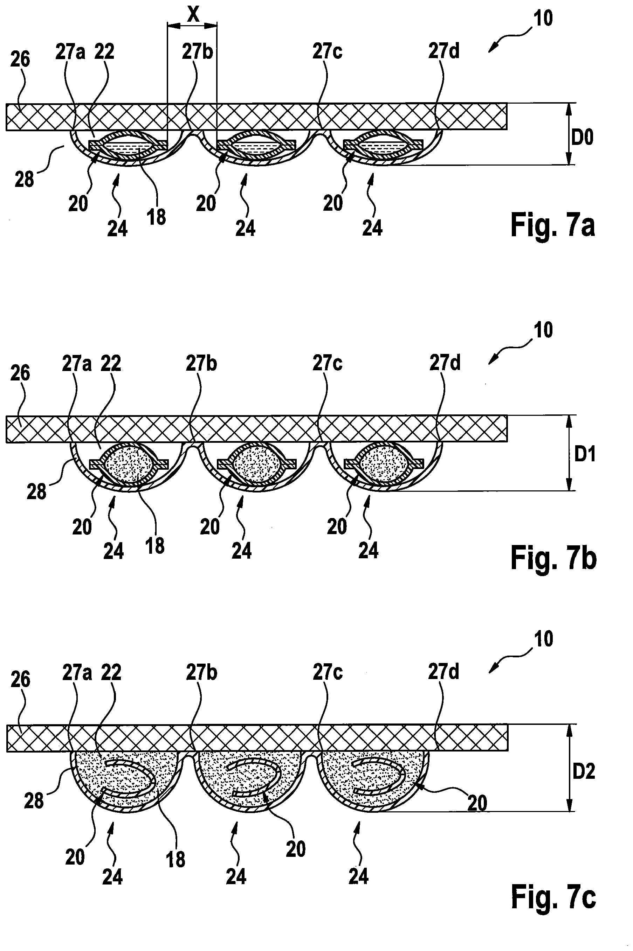

Fig. 3d further indicates that the thickness d of inner envelope 20 will be determined by two distances da (thickness of first inner subcavity 16a), and db (thickness of second inner subcavity 16b). Both da and db will increase in case gas generating agents 18a, 18b will change from the unactivated configuration to the activated configuration, respectively. Increase in distance between the first layer and the second layer of the laminar structure according to the invention after activation of the gas generating agents 18a and 18b from D0 to D1 (see Figs. 6a and 6b or Figs. 7a and 7b) will be substantially identical to the increase in thickness d of the inner envelope 20, and hence given by increase in thickness da of the first inner subcavity 16a plus the increase in thickness db of second inner subcavity 16b.

Besides facilitating the accurate dosing of gas generating agent 18, dosing aid 19, as shown in Fig. 3c, provides the advantage that it can be applied in a sandwich type configuration as an intermediate sheet in between the first and second inner envelope layers 12 and 14. This allows for greatly simplified manufacture of the inner envelopes 20. It is possible to manufacture a plurality of inner envelopes 20 using only one sheet of inner envelope layer 12, one sheet of dosing aid 19 and one sheet of inner envelope layer 14. It is even conceivable to omit the last cutting step, i.e. not to provide a plurality of single inner envelopes 20, but to provide a sandwich type laminate sheet layer including an array of a plurality of inner envelopes. By cutting non-used portions in between adjacent inner envelopes 20, either individual inner envelopes 20 may be produced, or a mesh of inner envelopes 20 can be produced. For producing a mesh of inner envelopes, cutting is not done along the complete sealing lines of the inner envelopes, but webs are left connecting adjacent inner envelopes with each other.

Similar considerations apply with respect to the intermediate layer 21.

Figs. 4a, 4b and 4c show arrangements of two inner envelopes 20a and 20b which are bonded together via a bond 23a to form an inner envelope structure. Such arrangement has in use very similar properties to the embodiment shown in Fig. 3d. Each of the inner envelopes 20a, 20b encloses a respective inner cavity 16a, 16b. First inner cavity 16a includes a first dosing aid 19a provided with first gas generating agent 18a in a manner similar to the embodiment of Fig. 3b. Second inner cavity 16b includes a second dosing aid 19b provided with second gas generating agent 18b in a manner similar to the embodiment of Fig. 3b. Alternatively to use of a dosing aid 19a, 19b according to the embodiment of Fig. 3b, gas generating agents 18a and 18b may be provided without using a dosing aid, similar to the embodiment of Fig. 3a, or using a dosing aid layer 19a, 19b, similar to the embodiment of Fig. 3c. Each inner envelope 20a, 20b is essentially fluid tight. As to the options for activation of first and second gas generating agents 18a, 18b, the same applies as outlined above with respect to the embodiment of Fig. 3d.

In the embodiment of Fig. 4a both inner envelopes 20a, 20b haven an essentially identical size. Fig. 4b shows a further embodiment which is identical to the embodiment of Fig. 4a except that the inner envelope 20a is smaller than the inner envelope 20b.

In the embodiments of Figs. 4a and 4b the inner envelopes 20a, 20b are bonded together by a bond located in a central portion of the inner envelopes 20a, 20b. Hence, similar to the embodiment of Fig. 3d thickness d of the inner envelope structure is determined by the sum of two distances da (thickness of first inner cavity 16a), and db (thickness of second inner cavity 16b). Increase in distance D between the first layer and the second layer after activation of the gas generating agents 18a and 18b will be substantially identical to the increase in thickness d of the inner envelope structure, and hence given by increase in thickness da of the first inner cavity 16a plus the increase in thickness db of second inner cavity 16b.

Bonding of the inner envelopes 20a and 20b can be effected by suitable adhesives, by welding or by stitching (in the case of stitching proper measures should be taken to maintain fluid tightness).

Fig. 4c shows a further schematic arrangement of two inner envelopes 20a, 20b bonded together to form an envelope structure. In this embodiment, inner envelopes 20a, 20b are bonded together by a bond 23b located at one of the lateral ends of inner envelopes 20a, 20b. As can be seen in Fig. 4c, by such lateral arrangement of bond 23b an angle γ larger than zero is formed in between the lateral plane of the first inner envelope 20a and the lateral plane of second inner envelope 20b. The lateral plane of an inner envelope 20a, 20b is defined as a plane orthogonal to the thickness direction of the inner envelope, respectively.

With a lateral bond 23b as shown in Fig. 4c, thickness d of the inner envelope structure is not determined by the sum of the thickness da of first inner cavity 16a plus the thickness db of second inner cavity 16b, wherein da and db are measured orthogonal to the planar planes of cavities 16a, 16b, respectively (as indicated for the embodiments of Figs. 4a and 4b). Rather, as shown in Fig. 4c, the thickness d of the inner envelope structure is determined by the thickness db of second inner cavity 16b plus an "effective thickness" da' of first inner cavity 16a. "Effective thickness" da' of first inner cavity is given approximately by da' = A sin γ, where A is the lateral dimension of first inner envelope 20a.

The angle γ will increase when, after activation of the gas generating agents 18a, 18b, the first and second inner envelopes 20a, 20b change their condition from the unactivated condition (both inner envelopes 20a, 20b being essentially flat) to the activated condition (both inner envelopes 20a, 20b being inflated and thus convex shaped). Thereby the increase in effective thickness da' of the first inner cavity 16a in the activated configuration of gas generating agents 18a, 18b becomes larger than the increase in thickness da of the first inner cavity 16a measured orthogonal to planar plane of inner cavity 16a (see Figs 4a and 4b). Increase in distance between the first layer and the second layer of the inventive laminar structure after activation of the gas generating agents 18a and 18b will be substantially identical to the increase in thickness d of the inner envelope structure, and hence given by increase in effective thickness da of the first inner cavity 16a plus the increase in thickness db of second inner cavity 16b.

By increasing the angle γ when changing from the unactivated condition to the activated condition, the inner envelope structure of Fig. 4c provides a function similar to a hinge. This is a very efficient way of increasing such distance, in particular in case the envelopes have an essentially flat configuration in the unactivated condition, since in such configuration the lateral dimension A of the inner envelopes is large, and the angle γ will increase significantly upon activation. Even more than two inner envelopes 20a, 20b can be bonded together in this way to provide pronounced hinge-type behaviour in the way of unfolding an accordion, when changing from the unactivated condition to the activated condition.

A consequence of this hinge-type behaviour is that the inner envelope structure allows for a large increase in distance between a first layer and the second layer in a fabric structure having the envelope structure of Fig. 4c sandwiched in between. Alternatively, to achieve a desired increase in distance between the first layer and the second layer, an inner envelope structure can be used covering much less area of the fabric than it would be necessary if single inner envelopes were used, or even if inner envelope structures as show in Fig. 4a and 4b were used.

By arranging a plurality of two or even more inner envelopes 20a, 20b,... on top of each other, as just described, very large increase in thickness of the inner envelope structure as a whole can be achieved, thereby enabling a very pronounced increase in distance between first layer and second layers. The result is a very effective increase in thermal insulating capability as a result of a temperature change. This particularly holds for the embodiment of Fig. 4c providing for a hinge-type effect when changing from the unactivated condition to the activated condition.

Also in the embodiment of Fig. 4c, bonding of the inner envelopes 20a and 20b can be effected by suitable adhesives, by welding or by stitching (in the case of stitching proper measures should be taken to maintain fluid tightness).

Fig. 5 shows a simplified and schematic cross sectional view of a laminar structure in the form of an envelope structure (generally designated as 10) comprising an inner envelope 20, e.g. of a type as shown in Figs. 3a to 4c, and an outer envelope 24. The inner envelope 20 encloses inner cavity 16. The outer envelope 24 encloses outer cavity 22. Inner envelope 20 is included in outer cavity 22. Inner envelope 20 is formed from two inner envelope layers 12, 14 of a material as shown in Figs. 1a or 1b. Inner envelope layers 12, 14 are bonded together fluid tightly along inner envelope bonding sections 13a, 13b. Outer envelope 24 is formed from two outer envelope layers 26, 28 of a material as shown in Figs. 1c, 1d or 1e. Outer envelope layers 26, 28 are bonded together along outer envelope bonding sections 27a, 27b. Inner cavity 16 includes a gas generating agent generally designated as 18. In Fig. 5 gas generating agent 18 is a liquid in the unactivated configuration. In alternative embodiments gas generating agent 18 may be a solid, e.g. a powder, in the unactivated configuration. Such single envelope structure 10 may be the simplest form of a laminar structure according to the invention. In Fig. 5, as well as in each of Figs. 6a, 7a, 9a to 9d, the laminar structure 10 is shown in an unactivated configuration of the gas generating agent 18, and hence the inner envelope 20 as well as the outer envelope 24 has an uninflated, essentially flat configuration, also referred to as the unactivated condition. In the unactivated condition the dimensions of the envelopes 20, 24 in length and width directions are much larger than the dimension of the envelopes 20, 24 in thickness direction, designated in Fig. 5 by d or D. Dimension in length direction is designated by a0 or A0 in Fig. 5. Dimension in width direction is orthogonal to the plane of projection and thus not designated. Length of envelopes 20, 24 in width dimension is in these examples equal to A0. In other embodiments dimension in width direction may be even larger.

The outer envelope 24 is made of two outer envelope layers 26, 28. Outer envelope layers 26, 28 may each have a configuration as described above with respect to Fig.1c, 1d, 1e, 1f or a similar configuration of monolithic or composite sheet like materials. Particularly, although not explicitly shown, the outer envelope layers 26, 28 may be each made up of composite structure with multiple sheets, e.g. as depicted in Figs. 1b to 1f and which are laminated to each other. Said composite structure forms a first part (in Fig. 5 the upper part) of the outer envelope 24, this first part enclosing a first part of outer cavity 22, and a second part (in Fig. 5 the lower part) of the outer envelope 24, this second part enclosing a second part of outer cavity 24, respectively. The outer envelope layer 26 enclosing the first part of the outer cavity 22 and the outer envelope layer 28 enclosing the second part of the outer cavity 22 may have an identical configuration, but this is not a necessary requirement. In some preferred embodiments, the first outer envelope layer 26 has a configuration different from the second outer envelope layer 28.

Furthermore, the first outer envelope layer 26 may be made from a different envelope material as the second outer envelope layer 28. In one embodiment the first outer envelope layer 26 is formed of a sheet like layer according to Fig. 1f and the second outer envelope layer 28 is form of a sheet like layer according to Fig. 1d.

The outer envelope 24 is formed by bonding together the two outer envelope layers 26, 28 along a bonding portion 27a, 27b forming a closed loop. In such way, outer cavity 22 is formed which is enclosed by the outer envelope 24. Outer envelope layers 26, 28 made of PU, or outer envelope layers 26, 28 each comprising a PU layer exposed to the other outer envelope layer, can be used as bonding layers for welding or by melting of the PU material to form an adhesive. In case any of the outer envelope layers to be bonded with another envelope layer is made of other material not useable for welding or as an adhesive, e.g. made of ePTFE, bonding can be achieved by use of suitable adhesives.

Alternative materials may be used for making the outer envelope 24, as outlined above, given the materials themselves are semipermeable (water vapor permeable and gas impermeable) with respect to at least one unpolar gas produced by gas generating agent 18. A further requirement is that the outer envelope layers 26, 28 may be bonded together sufficiently gas tight to make sure that gas remains included in the outer cavity 22 for sufficiently long time after activation of the gas generating agent 18.

The outer envelope 24 encloses outer cavity 22 which includes the inner envelope 20. Inner envelope 20 is filled with gas generating agent 18. As depicted in Fig. 5, gas generating agent 18 is chosen to be a liquid having a suitable equilibrium vapor pressure at room temperature defining an unactivated configuration of gas generating agent 18. In the unactivated configuration of the gas generating agent 18 as shown in Fig. 5, the gas generating agent 18 is substantially in its liquid phase with some amount in the gas phase, according to its equilibrium vapor pressure. The inner envelope 20 provides a substantially fluid tight enclosure of inner cavity 16, and hence inner cavity 16 is almost entirely filled by gas generating agent 18, and only a negligible volume of inner cavity 16 is filled with other gas, in particular with a rest amount of air having been enclosed in inner cavity 16 at the time gas generating agent 18 was filled in. In the example disclosed, gas generating agent 18 is a fluid having the chemical formula CF₃CF₂C(O)CF(CF₃)₂. Such fluid is typically used for extinguishing fires and is commercially available under the trade name "Novec® 1230 Fire extinguishing fluid" from 3M. Other fluids may be used for the gas generating agent, as set out above. Alternatively, gas generating agent 18 may be chosen to be a powder at room temperature defining an unactivated configuration.

The functionality of a laminar structure 10 in the form of an envelope structure, as shown in Fig. 5, in an activation process is demonstrated in Figs. 6a, 6b and 6c. Fig. 6a shows the envelope structure 10 of Fig. 5 in an unactivated condition with the gas generating agent 18 in the liquid phase. Fig. 6b shows the envelope structure 10 in a primary activation condition, i.e. after most of the gas generating agent 18 has been evaporated into its gaseous phase, but still is completely enclosed within the inner cavity 16. It can be seen by comparing Figs. 6a and 6b that the shape of the inner envelope 16 has changed from a flat shape with only small thickness d0 (corresponding to the distance d0 between the outer surfaces of first inner envelope layer 12 and the second inner envelope layer 14 in the unactivated condition) to a concave shape with much larger thickness d1 in the primary activation condition of Fig. 6b. Correspondingly in the primary activation condition, as shown in Fig. 6b, the dimension of the inner envelope 20 in lateral directions orthogonal to the thickness direction, as defined by direction in which distance d is measured, reduces slightly. As for the embodiment shown with a liquid gas generating agent 18 the first and second inner envelope layers 12, 14 are made of essentially non-stretchable or non-elastic material which does not significantly elongate in any direction after response to activation of the gas generating agent 18. However, in response to increasing pressure in the inner cavity 16 upon activation of the gas generating agent 18, the shape of the inner envelope 20 changes in such a way that a maximum volume of the inner cavity 16 is reached.

When increasing the thickness d of the inner envelope 20 from d0 to d1, at the same time the thickness of the envelope structure or the thickness D of the laminar structure 10 increases correspondingly, since the inner envelope 20 abuts the inside surfaces of the outer envelope 24, and hence pushes the respective opposing walls of the outer envelope 24 away from each other. Thereby, distance in thickness direction between the outer envelope layers 26 and 28 increases from a value of D0 in the unactivated configuration of the gas generating agent 18 (see Fig. 6a) to a value of D1 in the primary activation condition (see Fig. 6b).

As temperature increases further, gas pressure generated by gas generating agent 18 inside inner cavity 16 increases further. When the inner envelope 20 is exposed to increased temperature and increased gas pressure for some time, the material of the inner envelope 20 is no longer able to withstand such pressure, and the inner envelope 20 ruptures or becomes otherwise perforated. The threshold exposure time which it takes for the inner envelope 20 to rupture or become perforated depends on the pressure of gas generating agent 18 in the inner cavity 16, and on gas temperature in the inner cavity 16. The higher gas pressure in the inner cavity 16 is and the higher temperature in the inner cavity 16 is, the shorter will be the threshold exposure time. In such situation, which is shown in Fig. 6c, gas generating agent 18 will be released to outer cavity 22 and fill outer cavity 22. Thereby, gas generating agent 18 directly inflates outer envelope 24, until distance between first outer envelope layer 26 and second outer envelope layer 28 reaches a third distance D2 in the secondary activation condition. It is typically preferred that gas generating agent 18 has not yet been released into the gaseous phase completely at the time the inner envelope 20 ruptures or becomes perforated, such as to change to the second activation condition. The threshold exposure time may be adjusted by making the inner envelope from a suitable material and filling a suitable amount of a selected gas generating agent 18 into the inner cavity.

Figs. 7a, 7b, and 7c show a similar activation process for a further embodiment of a laminar structure 10 according to the invention.

The embodiment of Figs. 7a to 7c comprises a plurality of envelope structures as described in detail with respect to Figs. 6a to 6c above. Such envelope structures are formed in between a first layer 26 and a second layer 28.

In this embodiment the first layer 26 and second layer 28 are made of different materials, as follows:
a) The first layer 26 comprises a membrane structure including an ePTFE membrane and a hydrophyilic layer made of PU. The membrane structure is made according to US 4 194 041. The membrane structure is adhered with its ePFTE side to a non woven textile layer forming a sheet like two layer laminate (Fig. 1f). This first layer 26 is essentially non-elastic or non-stretchable.
b) The second layer 28 is a membrane structure including an ePFTE membrane and a hydrophyilic layer made of PU. The membrane is made according to US 4 194 041. This second layer 28 is essentially elastic or stretchable.

The layers 26, 28 are bonded together via the PU layers. In a cross section, the laminar structure 10 has a configuration as shown in Figs. 7a (unactivated condition), 7b (primary activation condition), and 7c (secondary activation condition).

In a possible configuration the layers 26, 28 may be connected at bonding portions 27a, 27b, 27c, 27d in such a way that pockets are formed, i.e. the bonding portions 27a, 27b, 27c, 27d form closed curves when seen in a top view. The pockets formed in this way are configured to be the outer envelopes 24 of the laminar structure. As an example, the first and second layers 26, 28 may be connected via stitches in the form of a quilted composite and sealed afterwards, or may be welded together in case better fluid or gas tightness of the outer envelopes 24 is desired.

In this embodiment, each of the outer envelopes 24 formed by connecting the first and second layers 26, 28 receives a respective one of the inner envelopes 20. Other embodiments are conceivable in which each outer envelopes 24 receives more than one inner envelope 20, or where part of the pockets do not receive any inner envelope 20. The inner envelopes 20 are thus fixed by their respective pocket/outer envelope 24 with respect to movement in the length/width plane defined by the layers 26, 28. In one embodiment the inner envelopes are fixed to the inner surface of the outer envelopes, for example by adhesive dots.

In this embodiment the gas generating agent 18 is chosen to be a powder in the unactivated configuration shown in Fig. 7a. Such powder may include sodium bicarbonate ("baking soda") NaHCO₃ which decomposes under heat with gaseous CO₂ being one of the decomposition products. Alternatively, a liquid gas generating agent (e.g the above mentioned CF₃CF₂C(O)CF(CF₃)₂) could be used, provided that the inner envelopes 20 are fluid tight with respect to such liquid.

The functionality of a laminar structure 10 including of one or a plurality of envelope 20 in an activation cycle is demonstrated in Figs. 7a, 7b and 7c. Fig. 7a shows the laminar structure 10 in an unactivated condition with the gas generating agent 18 in the solid phase. Fig. 7b shows the laminar structure 10 in a primary activation condition, i.e. after the gas generating agent 18 has been transferred into its gaseous phase, but with the gas generating agent being confined in the inner cavity 16. Similar to the embodiment of Figs. 6a to 6c, it can be seen by comparing Figs. 7a and 7b that the shape of the inner envelopes 20 has changed from a flat shape with only small thickness d0 in the unactivated condition to a concave shape with much larger thickness d1 in the primary activation condition. Comparing Figs. 7a and 7b, it is evident that activation of the gas generating agent 18 provides for an inflation of the inner envelopes 20 received in the outer envelopes 24. Such inflation of the inner envelopes 20 induces movement of the first layer 26 and second layer 28 away from each other and increases the distance D between the first layer 26 and the second layer 28 from a first distance D0 to a second distance D1.

The first outer envelope layer 26 can be made of essentially non-elastic or non-stretchable material, and the second outer envelope layer 28 is made of essentially elastic or stretchable material. Therefore, only the surface area of the second outer envelope layer 28 increases in response to activation of the gas generating agent 18. Thereby, in response to increasing pressure in the inner cavity 16 upon activation of the gas generating agent 18 and corresponding inflation of the inner envelopes 20, the outer envelopes 24 change shape in such a way that the first outer envelope layer 26 remains stable in an essentially unchanged configuration, but an expansion of the second outer envelope layer 28 takes place. The first outer envelope layer 26 is made of a substantially non-stretchable material which does not change shape after activation of gas generating agent. Stability of the first outer envelope layer 26 ensures that any fabrics produced with the laminar structure 10 will remain in shape under exposure to heat, e.g. shows low heat shrinkage.

In the embodiment of Figs. 7a and 7b both the first and second outer envelope layers 26, 28 are laminate layers which are bonded to each other by bonding regions 27a, 27b, 27c, 27d in a regular, grid like pattern, such as to form a plurality of outer envelopes 24, as described. Thereby each two adjacent outer envelopes 24 share at least one bonding portion 27a, 27b, 27c, 27d which separates the respective two adjacent outer cavities. The laminar structure 10 as a whole is covered by at least one of the outer envelopes 24. Still the laminar structure 10 remains to be breathable, because each of the outer envelopes 24 is made from water vapor permeable material.

Figs. 7a and 7b further show that in case the first outer envelope layers 26 and/or the second outer envelope layers 28 have a structure with embossments and depressions, it may be convenient to measure the distances D0 and D1 with respect to reference planes of the first and second outer envelope layers 26, 28, respectively. In the example shown the distances D0 and D1 are measured using reference planes touching the most distant points of the first and second outer envelope layers 26, 28, respectively.

Fig. 7a and 7b further show that the inner envelopes 20 are received in the pockets in such a way that gaps remain free in between each two neighbouring inner envelopes 20. The distance of these gaps is indicated by X in Figs. 7a and 7b. It can be seen that this distance X remains nearly constant or even increases slightly, when the gas generating agent 18 in the inner envelopes 20 changes from the unactivated configuration to the activated configuration.

In Fig. 7c it can be seen, similar to the embodiment of Fig. 6c, that the inner envelopes 20 have been broken under the increasing gas pressure produced by gas generating agent 18, and that gas generating agent 18 is released to the outer cavity 22. The pressure produced by gas generating agent 18 in the outer cavities 22 leads to even further expansion of the stretchable second outer envelope layer 28. As a result of such expansion the outer cavities 22 are inflated further, and hence distance between first and second layers increases to a third distance D2 in the secondary activation condition.

Figs. 8a to 8c show in simplified and schematic cross sectional views a laminar structure 10 according to a further embodiment. Fig. 8a shows the laminar structure 10 in the primary activation condition. Fig. 8b shows the laminar structure in a first stage of the secondary activation condition. Fig. 8c shows the laminar structure 10 in a further progressed stage of the secondary activation condition. Also the laminar structure 10 according to the embodiment of Figs. 8a to 8c comprises a plurality of envelope structures. Each envelope structure is formed by a respective outer envelope 24 enclosing an inner envelope 20 (for purposes of convenient description, in Figs. 8a to 8c the outer envelopes are designated as 24a to 24e and the inner envelopes are designated as 20a - 20e). The inner envelopes 20a - 20e may of any type as described above. Each of the outer envelopes 24a - 24e is made from two envelope layers 26, 28 which are bonded together along bonding portions 27a, 27b, 27c, 27d, 27e, 27f in a grid like pattern, as described, such that each two adjacent outer envelopes 24a - 24e share at least one common bonding portion 27a - 27f.

Gas generating agent is designated exemplary as 18 for one of the envelope structures in Figs. 8a to 8c. Upon activation of the gas generating agent 18 with evaporation of at least a significant part of the gas generating agent gas pressure in inner cavities 16a - 16e increases. This results in inflation of the inner envelopes 20a - 20e and expansion of the outer envelopes 24a - 24e.

In each of Figs. 8a to 8c gas generating agent 18 has already undergone transformation into the gaseous phase. In Fig. 8a expansion of the inner envelopes 20a - 20e and outer envelopes 24a - 24e has reached a stage where the distance D1 between the first layer 26 and second layer 28 has increased significantly with respect to the distance D0 in unactivated condition (see also the description of Figs. 6a and 6b), but the number of inner envelopes 20a - 20e and outer envelopes 24a - 24e, and the number of corresponding inner cavities 16a - 16e and outer cavities 22a - 22e, is still the same as in the unactivated condition (primary activation condition).

Gas pressure produced by gas generating agent 18 in inner cavities 16a - 16e formed by inner envelopes 20a - 20e increases further from the primary activation condition of Fig. 8a to the secondary activation condition of Figs. 8b and 8c. When the secondary activation condition is reached, the inner envelopes 20a - 20e break under the gas pressure inside, and gas generating agent 18 is released to outer cavities, see Fig. 8b. In the beginning stage of the secondary activation condition, still the number of outer envelopes 24a - 24e, and the number of corresponding outer cavities 22a - 22e, is the same as in the unactivated condition and in the primary activation condition.

Fig. 8c shows a further progressed stage of the secondary activation condition of the laminar structure 10. In the stage of Fig. 8c, a number of bonding portions 27c, 27d separating adjacent outer cavities 22b and 22c as well as 22c and 22d have been broken at least in part under gas pressure in the respective outer cavities 22b, 22c, 22d. As a result the formerly separated outer cavities 22b, 22c, 22d became unified to a single "macro-cavity" 30 in the stage shown in Fig. 8c.

Such unification of a plurality of separated outer cavities 22 at a predetermined stage of the secondary activation condition of the laminar structure 10 is considered of advantage, because an outer cavity 22 having larger volume is more efficient in increasing the distance between the first layer 26 and the second layer 28 than an outer cavity 22 with smaller volume. For this reason, with respect to achieve efficient increase in thermal insulation upon activation, it is advantageous to provide large outer cavities. After the activation, the outer envelopes might combine under gas pressure to form larger "macro-cavities" which allows further increased efficient in thermal insulation capability.

The bonding portions 27c and 27d of the outer envelopes 24b - 24d which separate adjacent outer cavities 22b - 22d from each other may even be designed in such a way to be somewhat weaker at predetermined portions thereof, such as to provide well defined breaking points upon a desired stage of activation in response to a respective increase in pressure inside the outer cavities 22b - 22d.

In the embodiment of Fig. 8a - 8c the first outer envelope layer 26 and the second outer envelope layer 28 are both made of a stretchable material, and hence are able to elongate in at least one direction and to change shape under gas pressure inside the cavity. However, a structure as shown in Fig. 8a - 8c with macro-cavities being formed when gas pressure inside the cavities increases beyond a threshold, may also be realized using a laminar structure 10 comprising a first outer envelope layer 26 and a second outer envelope layer 28 made of different materials, in particular using a laminar structure 10 comprising a first envelope layer 26 of non-stretchable material and a second outer envelope layer of stretchable material, as shown in Figs. 7a to 7b.

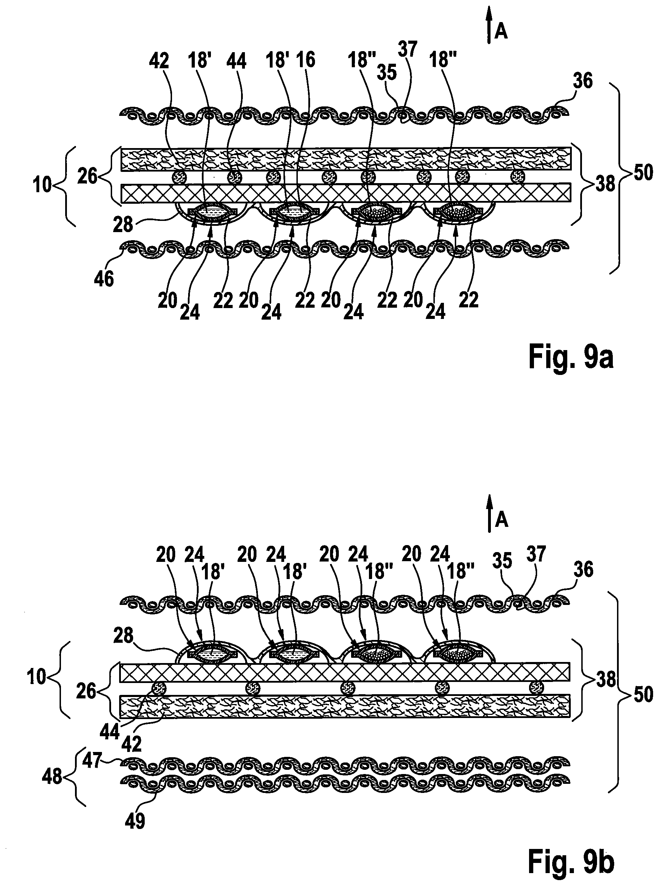

Figs. 9a - 9c show fabric composites 50 including a laminar structure 10 according to the invention. The fabric composites 50 comprise a plurality of layers arranged to each other.

An outer side A means for all embodiments in Figs. 9a to 9c said side of a garment made with such fabric composite 50 which is directed to the environment.

In the embodiment of Fig. 9a the following layers are arranged on top of each other, seen from the outer side A of a garment made with such fabric composite 50, as indicated by arrow A in Figs. 9a to 9d:
(1) an outer heat protective shell layer 36 having an outer side 35 and an inner side 37;
(2) a laminar structure 10 providing adaptive thermal insulation, as described above, arranged on the inner side 37 of the outer heat protective shell structure 36;
(3) an insulating textile structure 46 positioned at the inner side of the fabric structure 50.

The outer heat protective shell layer 36 is made of woven textile with a textile weight of 200g/m² using fibers available under the name Nomex Delta T, the textile is being available e.g from the company Fritsche, Germany.

The laminar structure 10 includes a first outer envelope layer 26 facing towards the outer heat protective shell layer 36, and a second outer envelope layer 28 facing towards the insulating textile structure 46. The first outer envelope layer 26 is attached to the inner side of the outer heat protective shell layer 36. Both the first outer envelope layer 26 and the second outer envelope layer 28 of the laminar structure 10 may, but do not necessary, include functional layers.

The first outer envelope layer 26 comprises a membrane structure 40 including an ePTFE membrane and a hydrophyilic layer made of PU. The membrane structure 40 is made according to US 4 194 041. The membrane structure 40 is adhesively attached (for example by adhesive dots 44) with its ePFTE side to a non woven aramide textile layer 42 forming a sheet like two layer laminate (Fig. 1f). The textile layer 42 is made of 15% para-aramide fibers and 85% meta-aramide fibers with a textile weight of 90g/m2. This first outer envelope layer 26 is essentially non-elastic or non-stretchable.

The second outer envelope layer 28 is a membrane structure including an ePFTE membrane and a hydrophyilic layer made of PU. The membrane is made according to US 4 194 041. This second outer envelope layer 28 is essentially elastic or stretchable.

The inner envelopes 20 of the laminar structure 10 are formed by several sealing steps as described with respect to Figs. 2a - 2d. The inner envelopes 20 may have other configurations, as described above. The envelope structures of the laminar structure 10 including outer envelopes 24 enclosing respective inner envelopes 20 have a configuration as described with respect to Figs. 7a - 7c. Other equivalent configurations are conceivable.

Outer envelopes 24 are formed from the outer envelope layers 26, 28 as described above. Each outer envelope 24 includes one inner envelope 20. Inner envelope 20 may be of any type described above.

The innermost woven textile layer 46 has for example a textile weight of 135g/m² and is made of Nomex /viscose (available from company Fritsche, Germany). The innermost woven textile layer 46 faces the wearer's skin in case the fabric composite 50 is used to manufacture garment."

In the embodiment of Fig. 9a the first outer envelope layer 26 made of substantially non-elastic or non-stretchable material is facing towards the outer heat protective shell layer 36, while the second outer envelope layer 28 made of substantially elastic or stretchable material is facing towards the insulating textile structure 46. Therefore, activation of the gas generating agent 18 results in inflation of the inner cavities 16 and outer cavities 22 of the laminar structure 10 substantially towards the inner side, i.e. towards the wearer's skin.

In the fabric of Fig. 9a the laminar structure 10 providing adaptive thermal insulation is positioned inside the outer shell 36 and outside the insulating textile structure 46. The outer shell has fire resistant and insulating properties, and therefore provides a shielding to the laminar structure 10 with respect to the source of heat. Hence, the laminar structure 10 is expected to experience much lower temperatures than existing at the outer shell 36 of the garment which will be exposed the a source of heat and/or flame. This has a benefit in that the temperature resistance of the materials used for the laminar structure 10 need not be as high as it would be required for material positioned closer to the outer shell 36. However, the adaptive thermal insulating structure 10 must be able to respond (i.e. to become activated) at relatively moderate temperature increase. Most importantly, such response must be precisely adjusted, in order to avoid unnecessary activation at only moderately increased temperatures, on the one hand, and in order to avoid a catastrophic failure to activation in cases of only slightly stronger increase in temperature than anticipated for an activating event. It has been shown that a relatively precisely controllable adaptive thermal insulation mechanism can be implemented using the laminar structure 10 with first layer 26, second layer 28 according to the invention.

Other exemplary configurations of fabrics 50 to which the laminar structure 10 can be applied are shown in Figs. 9b to 9d:
In the fabric 50 of Fig. 9a the laminar structure 10 includes first envelope layer 26 formed by a laminate as shown in Fig. 1f and second envelope layer 28 formed by a membrane laminate as shown in Fig. 1d. Hence the laminar structure 10 itself forms a barrier structure 38.

In the fabric 50 of Fig. 9b the laminar structure 10 has the same structure as described in Fig. 9a. The laminar structure 10 is arranged in the fabric in the opposite way than in Fig. 9a. The second envelope layer 28 faces the inner side 37 of the outer shell 36 and the first envelope layer 26 is directed to the innermost textile structure 48 including textile layers 47 and 49.

The outer heat protective shell layer 36 is made of woven textile with a textile weight of 200g/m² using fibers available under the name Nomex Delta T, the textile is being available e.g from the company Fritsche, Germany.

The textile layers 47 and 49 form an insulating textile structure 48. Said insulating textile structure 48 is made of one layer 47 of 55g/m² spunlace (available as Vilene Fireblocker from company Freudenberg) quilted together to an innermost liner 49 made of 135g/m² Nomex /viscose woven (available from company Fritsche). The innermost liner 49 faces the wearer's skin in case the fabric composite 50 is used to manufacture garment.

The laminar structure 10 is positioned in between the outer heat protective shell layer 36 and the insulating textile structure 48. In the embodiment of Fig. 9b the first outer envelope layer 26 made of substantially non-elastic or non-stretchable material is facing towards the insulating textile structure 48, while the second outer envelope layer 28 made of substantially elastic or stretchable material is facing towards the outer heat protective shell layer 36. Therefore, activation of the gas generating agent 18 results in inflation of the cavities 16 of the laminar structure 10 substantially towards the outer side A.

Also in the fabric 50 of Fig. 9b the laminar structure 10 includes first envelope layer 26 formed by a functional laminate and second envelope layer 28 also formed by a functional laminate. Hence the laminar structure 10 itself forms a barrier structure 38.

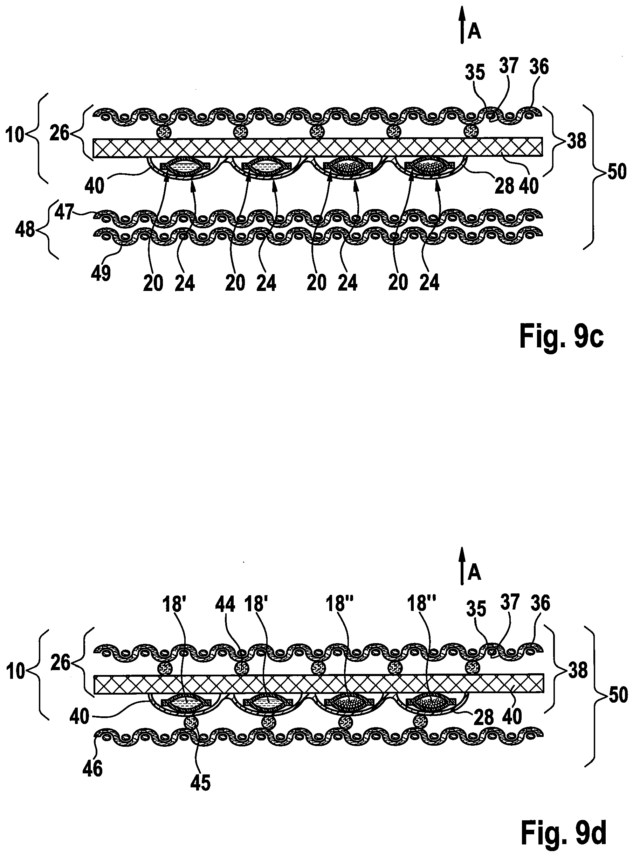

In Fig. 9c the laminar structure 10 includes a first outer envelope layer 26 and a second outer envelope layer 28. The second outer envelope layer 28 is a membrane structure 40 including an ePFTE membrane and a hydrophyilic layer made of PU. The membrane is made according to US 4 194 041. This second outer envelope layer 28 is essentially elastic or stretchable. The first outer envelope layer 26 comprises a membrane structure 40 including an ePTFE membrane and a hydrophyilic layer made of PU. The membrane structure 40 is made according to US 4 194 041. The membrane structure 40 is adhesively attached (for example by adhesive dots 44) with its ePFTE side to the outer heat protective shell layer 36 forming the first outer envelope layer 26.

The outer heat protective shell layer 36 is made of woven textile with a textile weight of 200g/m² using fibers available under the name Nomex Delta T, the textile is being available e.g from the company Fritsche Germany.

An insulating textile structure 48 including layers 47, 49 similar to the embodiment of Fig. 9b is provided to the second outer envelope layer 28 of the laminar structure 10.

The laminar structure 10 of this embodiment forms the outer layer of the fabric 50 and the envelope structures are positioned in between the outer heat protective shell layer 36 and the insulating textile structure 46. The first outer envelope layer 26 is made of substantially non-elastic or non-stretchable material. The second outer envelope layer 28 is made of substantially elastic or stretchable material and is facing towards the insulating textile structure 46.

Also in the fabric 50 of Fig. 9c the laminar structure 10 includes first envelope layer 26 formed by a functional laminate and second envelope layer 28 also formed by a functional laminate. Hence the laminar structure 10 itself forms a barrier structure 38.

The fabric of Fig 9d is identical to Fig. 9c, except that the laminar structure 10 providing adaptive thermal insulation is attached to the innermost insulating textile structure 46 via adhesive dots 45. The innermost insulating textile structure 46 has a configuration identical to Fig. 9a.

In each of Figs. 9a to 9d gas generating agent 18 may be a liquid gas generating agent, as indicated by reference sign 18' in Figs. 9a and 9b, or gas generating agent may be a solid gas generating agent, e.g. in the form of a powder, as indicated by reference sign 18" in Figs. 9a and 9b.

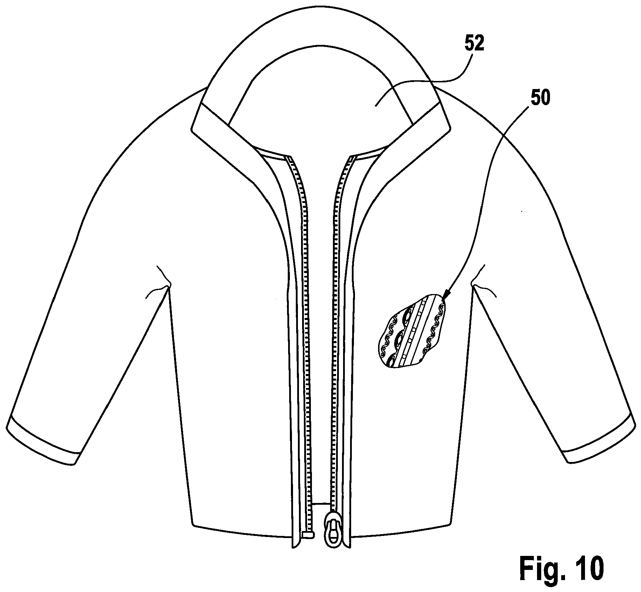

Fig. 10 shows a fire fighter's jacket 52 including fabric composite 50 as shown in Figs. 9a-9d. Other garments which may comprise fabrics 50 according to invention include jackets, coats, trousers, overalls, shoes, gloves, socks, gaiters, headgear, and the like or parts of them. The fabric composite may be used in other articles as well, for example in tents, blankets, or the like.

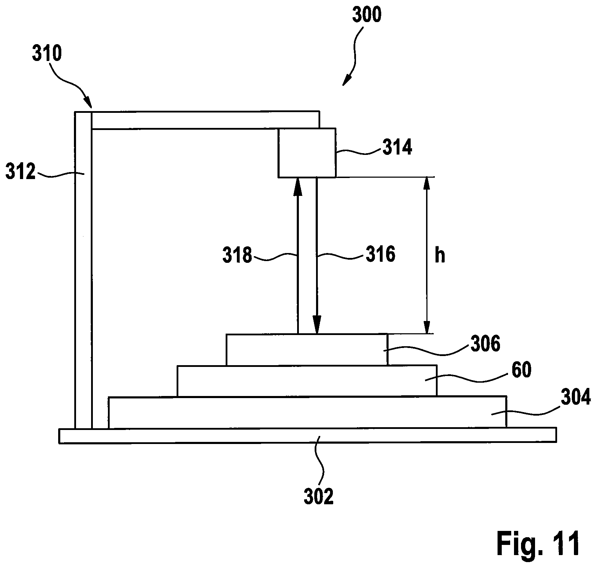

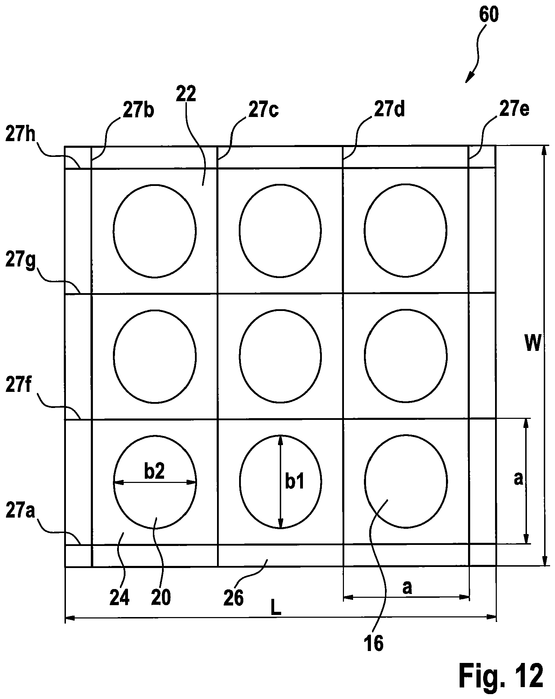

Fig. 11 shows a schematic sketch of an apparatus 300 to measure increase in distance D between the first layer 26 and the second layer 28 when the laminar structure 10 is being brought from the unactivated condition into the primary and/or secondary activation condition. In this context Fig. 12 shows a schematic sketch of a laminar structure 10 in the form of a test piece 60 to be used with the apparatus of Fig. 11 for measuring the increase in distance D between the first layer 26 and the second layer 28 when the laminar structure 10 of the test piece 60 is being brought from the unactivated condition into the primary and/or secondary activation condition. The test piece 60 is shown in top view in Fig. 12. A cross sectional view thereof corresponds to the cross sections shown in Figs. 7a, 7b and 7b with an inner envelope 20 as shown in Fig. 3a.

The test piece 60 as shown in Fig. 12 includes a plurality of inner envelopes 20 as shown in Fig. 3a and a plurality of outer envelopes 24 as described with respect to Figs. 7a to 7c. In cross section such sample laminar structure 10 is shown in Figs. 7a (unactivated condition), 7b (primary activation condition), and 7c (secondary activation condition), except that inner envelopes 20 filled with liquid gas generating agent 18, as shown in Fig. 3a, are included in outer envelopes 24.

The test piece 60 is 140 mm wide (W = 140 mm) and 140mm long (L = 140 mm), and forms a quadrangular array of 9 quadrangular outer envelopes 24 (only one outer envelope is exemplary designated by 24 in Fig. 12), each outer envelope 24 being 40mm wide and 40 mm long (a = 40 mm). Each of the inner envelopes 20 has a slightly elliptical shape when seen from above, with larger diameter of ellipse b1 = 23 mm and smaller diameter of ellipse b2 = 20 mm, and is filled with 0,07 g of "3M NOVEC® 1230 Fire Protection Fluid" (chemical formula: CF₃CF₂C(O)CF(CF₃)₂) as gas generating agent 18.

In the test piece 60 of Fig. 12 the first outer envelope layer 26 and the second outer envelope layer 28 are made of different materials, as follows:
a) The first outer envelope layer 26 comprises a barrier laminate including an ePTFE membrane, as described in US 4 194 041 (30g/m² total) and a hydrophyilic layer made of PU. The barrier laminate is adhered with its ePFTE side to a textile layer made of non woven textile (90g/m² 15%p-Aramid, 85%M-Aramid).
b) The second outer envelope layer 28 is a membrane structure including an ePFTE membrane and a hydrophyilic layer made of PU. The membrane structure is made according to US 4 194 041 (30g/m² total).

The outer envelope layers 26, 28 are bonded together via the PU layers.

For configuration of the inner envelopes 20, see the description with respect to Figs. 2a to 2d and Fig. 3a above.

The test piece 60 has been produced as follows:

### Outer envelope: First sealing step:

Two laminate layers 26, 28, each being 140 mm wide and 140 mm long are laid on top of each other with the hydrophilic layers facing each other. In the example of Fig. 12 each layer has a hydrophilic layer (e.g. PU layer) exposed on at least one side thereof (see e.g. the laminates 8 shown in Figs. 1c, 1d, 1e), and thereby the layers 26, 28 can be bonded together by welding of the PU material. For other configurations, other suitable bonding techniques may be used. A hot bar (sealing width: 2mm) is brought into contact with the layers 26, 28 such as to bring the hydrophilic layers into contact and to weld the hydrophilic layers together along one of the sides of the quadrangle. Thereby a first linear bonding portion 27a is formed.

### Outer envelope: Second sealing step

The hot bar is brought into contact with the laminates 26, 28 to weld the laminates together along four linear bonding portions 27b, 27c, 27d, 27e extending rectangular to the first linear bonding portion 27a. The four parallel bonding portions 27b, 27c, 27d, 27e each have a distance of 40 mm from each other. Linear bonding portions 27b, 27c, on the one side, and 27d, 27f, on the other side, are arranged symmetrical to the middle of the 140 mm wide test piece 60. In this way, three elongate pockets or outer cavities are produced.

### Outer envelope: First filling step

In order to put an inner envelope 20 into the elongate pockets, the test piece 60 is hold upright with the open side on top to enable the inner envelope 20 to be filled into the three elongate pockets from the open side and to drop down to the bottom of the elongate pockets. Each of the inner envelopes 20 is produced as described above with respect to Figs. 2a to 2d and is filled with a predetermined amount of gas generating agent 18, as required for one of the outer cavities 22. For the test piece 60 of Fig. 12 each of the inner envelopes has a slightly elliptical shape when seen from above, with larger diameter of ellipse b1 = 23 mm and smaller diameter of ellipse b2 = 20 mm and is filled with 0,07 g of "3M NOVEC® 1230 Fire Protection Fluid" (chemical formula: CF₃CF₂C(O)CF(CF₃)₂) as gas generating agent.

Each of the outer envelopes 24 receives one of the inner envelopes 20.

Alternatively, a gas generating agent in the form of a solid could be used. E.g. for the test piece 60 of Fig. 12 where each of the outer envelopes 24 is 40 mm wide and 40 mm long, powder made from sodium bicarbonate may be used as gas generating agent 18. The amount for gas generating agent 18 to be filled in is around of 0.3 g / per inner envelope 20.

### Outer envelope: Third sealing step:

Using the hot bar, a sixth linear bonding portion 27f is created which extends parallel to the first linear bonding portion 27a at a distance of 40 mm therefrom. Thereby three outer envelopes 24 in a first row are produced each enclosing a respective outer cavity 22 (in Fig. 12 only one of these outer cavities is designated by 22). Each of these outer cavities 22 has received one inner envelope 20.

The first filling step is repeated for each of the three remaining elongate pockets open on the upper side. Then the third sealing step is repeated to create a seventh linear bonding portion 27g which extends parallel to the first and sixth linear bonding portions 27a and 27f at a distance of 40 mm from the seventh linear bonding portion 27g. Thereby further three outer envelopes 24 in a second row are produced each enclosing a respective outer cavity 22.

The first filling step and the third sealing step are repeated, in order to create a further bonding portion 27h to complete the sample laminar structure 10 with in total 9 outer envelopes 24, each enclosing a respective outer cavity 22 having filled therein one inner envelope 20 filled with a gas generating agent 18.

Thickness change of such test piece 60 when subject to increased temperature has been measured as follows:

### Setup of measurement apparatus:

The arrangement 300 for measuring a thickness change of the test piece 60 in response to a change in temperature is shown in Fig. 11. The arrangement comprises a base 302, a heating plate 304, a top plate 306, and a laser based distance measuring device 314.

The heating plate 304 is connected to a heating apparatus (plate 300m-mx500mm out of a Erichsen, doctor blade coater 509/MC/1 + heating control Jumo Matec, with controler Jumo dtron16, connected to 220V/16A)

Test piece 60 is laid flat on the heating plate.

Top plate 306 has the form of flat disk with a diameter of 89 mm and is made of "Monolux 500" (available from Cape Boards & Panels, Ltd., Uxbridge, England) or an equivalent material. Top plate 306 is laid flat on top of test piece 60.

Laser based distance measuring device 310 includes a frame 312 and a distance laser device 314 (laser sensor: Leuze ODSL-8N 4-400-S 12 which is connected to a A/D converter Almemo 2590-9V5 having a reading rate of 3 measurements per second, the A/D converter translates the 0 - 10 V output of the laser sensor into a 0 - 400 mm distance reading, accuracy: 0.2 mm on a plain plate). The frame 312 is mounted to the base 302 and has mounted to a top arm thereof the distance laser device 314 in such a way that the distance laser device 314 emits a laser beam 316 towards the top surface of the top plate 306 and receives a reflected beam 318. The distance laser device 314 is able to detect a distance h between the distance laser device 314 and the top surface of top plate 106. Preferably, laser beam 316 is emitted orthogonally to top surface of top plate 306.

Temperature gradient of plate 304 is lower than 2K across the plate in the range of the measurement.

### First Measurement procedure:

### Increase in thickness with respect to increase in temperature

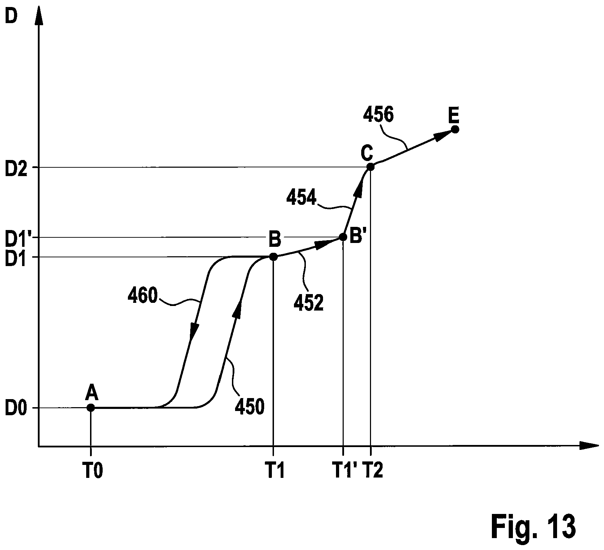

The test was done at room temperature, i.e. controlled climate of 23°C and 65% relative humidity. Test piece 60 as outlined above with each inner envelope 20 being filled with 0.07 g of 3M Novec® 1230 Fire Protection Fluid as gas generating agent was used.
(a) Top plate 306 was placed directly onto heating plate 304 (without test piece) to obtain a zero reading h_0.
(b) Then, test piece 60 was placed in between heating plate 304 and top plate 306. Heating plate 304 was heated to a temperature above ambient temparature and 5K below the expected activation temperature of the gas generating agent (up to 44 °C in case of 3M Novec® 1230 Fire Protection Fluid as gas generating agent) to obtain an initial height reading h_1. Thickness of test piece 60 (corresponding to distance between first layer 26 and second layer 28 in unactivated condition) D0 = h_0 - h_1.
(c) Temperature of heating plate was increased in steps of 5K, after each new step is adjusted, distance h was read after 1 minute to calculate a thickness change h_1 - h. This procedure was repeated until a first maximum expansion of the test piece 60 indicating the primary activation condition was reached. First maximum expansion was considered to be reached if thickness change h_1 - h in at least two consecutive 5K steps was identical within 0.4mm (two times of the accuracy of the distance measurement tool). Reading h_max1 is obtained.
   Thickness of test piece 60 increased as outlined schematically in Fig. 13 by curve section 450 from point A to point B. Point B indicates primary activation condition. In the primary activation condition temperature of heating plate was T1 and thickness of test piece 60 was D1.
   Thickness of test piece 60 in primary activation condition (corresponding to distance between first layer 26 and second layer 28 in primary activation condition): D1 = h_0 - h_max1
   Increase in thickness of test piece 60 (corresponding to increase in distance D between first layer 26 and second layer 28 in primary activation condition with respect to unactivated condition) D1 - D0 = h_1 - h_max1.
(e) Temperature of heating plate was increased again in steps of 5K, after each new step was adjusted, distance h was read after 1 minute to calculate a thickness change h_2 - h. This procedure was repeated until inner envelopes 20 broke under gas pressure inside inner cavities 16, and gas generating agent 18 was released to outer cavities 22. Under the conditions selected for the test and the configuration of the test piece 10 used, almost all of the 9 inner envelopes 20 of test piece broke at the same 5K temperature increase step. The point of rupture of the inner envelopes is indicated by B' in Fig. 13, and thickness of test piece 60 followed curve section 452 between points B and B' with only slight increase in thickness from D1 to D1'. In configurations where not all inner envelopes 20 break in the same temperature increase step, thickness of test piece 60 may increase somewhat in the curve section between B and B', as shown in Fig. 13. In configurations where all inner envelopes 20 break in the same temperature increase step, thickness of test piece 60 will not increase significantly or increase only slightly until the temperature step, where all envelopes 20 break, corresponding to point B' in Fig. 13. Thickness will increase pronouncedly in the following temperature steps.
(f) After rupture of the inner envelopes 20 occurred, gas generating agent 18 was released to outer cavities 22 for all 9 envelope structures, and the outer cavities 22 were inflated. Hence in the following 5K temperature increase steps thickness of test piece 60 further increased following curve section 454 in Fig. 13 between points B' and C. The temperature increase procedure was repeated further and height readings h_2 were obtained for each 5K temperature increase step. The height readings h_2 were converted into thickness D of the test piece 60 in each 5K step according to D = h_0 - h_2. As indicated schematically in Fig. 13, a decrease in slope of the D vs T curve was observed at point C from the steep slope in curve section 454 to a more shallow slope in curve section 456. Point C in Fig. 13 indicates that a secondary activation condition has been reached. In the secondary activation condition temperature of heating plate was T2 and thickness of test piece 60 was D2. Temperature increase steps were stopped at point E in Fig. 13.
   Thickness of test piece 60 in the secondary activation condition (corresponding to distance between first layer 26 and second layer 28 in the secondary activation condition): D2 = h_0 - h_max2 (h_max2 obtained at point C).
   Increase in thickness of test piece 60 (corresponding to increase in distance between first layer 26 and second layer 28 in the secondary activation condition with respect to unactivated condition) D2 - D0 = h_1 - h_max2.

### Second Measurement procedure: Thickness reversibility method:

For an example of a test piece 60 able to undergo a plurality of activation/deactivation cycles when being activated to the primary activation condition, the following test procedure was carried out to demonstrate reversibility:
The test was done at room temperature, i.e. controlled climate of 23°C and 65% relative humidity. A test piece 60 as outlined above with each inner envelope 20 being filled with 0.07 g of 3M Novec® 1230 Fire Protection Fluid as gas generating agent was used.

Set-up of thickness measurement apparatus, as described above, was used.
(a) Top plate 306 was placed directly onto heating plate 304 (without test piece) to obtain a zero reading h_0.
(b) Then, test piece 60 was placed in between heating plate 304 and top plate 306. Heating plate 304 was heated to a temperature above ambient temparature and 5K below the expected activation temperature of the gas generating agent (e.g up to 44 °C in case of 3M Novec® 1230 Fire Protection Fluid as gas generating agent), to obtain an initial height reading h_1. Thickness of test piece 60 (corresponding to distance between first layer 26 and second layer 28 in unactivated configuration of gas generating agent) D0 = h_0 - h_1.
(c) Heating cycle:
   Target temperature of heating plate 304 was set to a temperature 30°C above the activation temperature, for example the boiling point of the gas generating agent in the inner envelope 20 and heating plate 304 was heated with a heating rate of 1 K/min. Increase in thickness (corresponding to increase in distance D between first layer 26 and second layer 28) was measured by distance laser device 314 every 10 s. When heating plate 304 reached target temperature T1 this temperature was maintained for about 10 min and reading of increase in thickness was continued. After 10 min final increase in thickness was measured (corresponding to distance between first layer 26 and second layer 28 in the primary activation condition)
   A result of such measurement procedure is shown schematically in Fig. 13, curve section 450 extending from point A to point B.
(d) Cooling cycle:
   Target temperature of heating plate 302 was set to room temperature and heating plate 302 was cooling down by the environment within 1 hour. Decrease in thickness (corresponding to decrease in distance D between first layer 26 and second layer 28) was measured by distance laser device 314 every 10 s. When heating plate 304 reached target temperature this temperature was maintained for about 10 min and reading of decrease in thickness was continued. After 10 min final decrease in thickness was measured (corresponding to distance between first layer 26 and second layer 28 in unactivated configuration).
   A result of such measurement procedure is shown schematically in Fig. 13, curve section 460 extending from point B to point A.

Heating cycle (c) and cooling cycle (d) were repeated 3 times. Each time thickness increase at topmost temperature and thickness decrease at lowermost temperature was measured.

A result of the thickness reversibility test for one heating cycle and one cooling cycle from the unactivated configuration to the primary activation condition and reverse, is shown in Fig. 13 in the form of a distance D vs. temperature T diagram. It can be seen that a hysteresis loop with curve sections 450 and 460 was produced. From the topmost plateau of this hysteresis loop the distance D1 between the first layer 26 and second layer 28 in the primary activation condition, and from the lowermost plateau distance D0 between the first layer 26 and second layer 28 in the unactivated configuration of the gas generating agent 18 can be inferred.

### Third Measurement procedure:

### Increase in thickness with respect to time for given temperature

Test piece 60 was subject to a source of heat with fixed temperature, and change in thickness of test piece 60 over time was detected.

Test was done at room temperature, i.e. controlled climate of 23°C and 65% relative humidity. Test piece 60 as outlined above with each inner envelope 20 being filled with 0.07 g of 3M Novec® 1230 Fire Protection Fluid as gas generating agent was used.

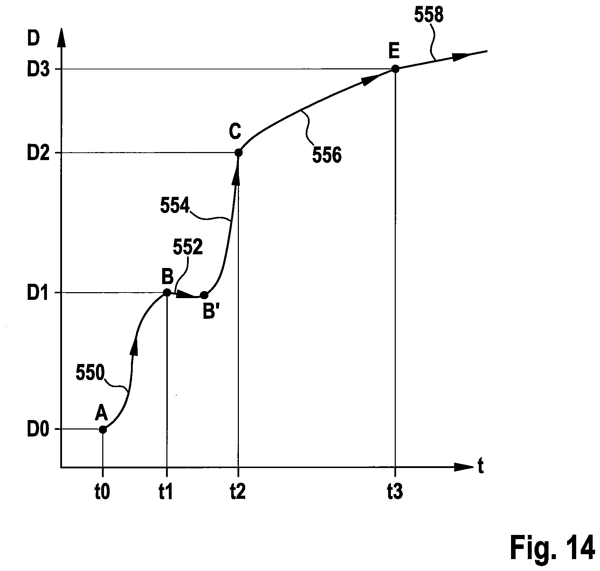

Set-up of thickness measurement apparatus, as described above, with a heating plate of type VHP C7-2 obtainable from www.vwr.com was used.
(a) Heating plate 304 was held at room temperature. Top plate 306 was placed directly onto heating plate 304 (without test piece) and a zero height reading h_0 was obtained.
(b) Then the heating plate 304 was heated to up to a temperature of 250 °C, and detection of height reading h over time was started. Height readings were obtained with high temporal resolution in order to determine thickness change of test piece 60 with time. Heating plate 304 was held at a temperature of 250 °C throughout the test.
(c) Test piece 60 together with top plate 306 positioned on top of the test piece 60 was put onto heating plate 304. A first height reading h_1 was obtained immediately to obtain initial thickness D0 of test piece 60 (corresponding to distance between first layer 26 and second layer 28 in unactivated condition) D0 = h_0 - h_1, see point A in Fig. 14 which shows schematically the change of thickness D of the test piece 60 vs. time t lapsed after start of heating of heating plate 304. At time t0, test piece 60 was put onto heating plate 304 (which was at temperature of 250 °C), and thickness D0 was determined.
(d) Since the heating plate 304 was already at a temperature of 250 °C, the gas generating agent 18 (in this example 3M Novec® 1230 Fire Protection Fluid as gas generating agent) changed its configuration quickly into the gaseous phase, and thus thickness D of the test piece 60 increased fast, as indicated by curve section 550 between points A and B in Fig. 14. The thickness vs. time curve reached a first intermediate maximum at point B. Height reading h_max1 at point B was obtained. Point B corresponds to primary activation condition where the inner envelopes 20 were expanded as much as possible, but still remained intact. As shown in Fig. 14, the primary activation condition was reached at time t1 and thickness of test piece 60 was D1.
   Thickness of test piece 60 in primary activation condition (corresponding to distance between first layer 26 and second layer 28 in primary activation condition): D1 = h_0 - h_max1.
   Increase in thickness of test piece 60 (corresponding to increase in distance between first layer 26 and second layer 28 in primary activation condition with respect to unactivated condition) is D1 - D0 = h_1 - h_max1.
(e) Having reached the intermediate maximum expansion at point B, the inner envelopes 20 broke under gas pressure inside inner cavities 16, and gas generating agent 18 was released to outer cavities 22. Following this, the thickness vs time curve first decreased slightly in curve section 552 in Fig. 14 showing a small intermediate minimum, as indicated at point B' in Fig 14. This dip in the thickness vs time curve is attributed to be due to the sudden increase in volume to be filled by gas generating agent 18, once gas generating agent 18 has been released from the inner envelopes 20 to the outer cavities 22. Increase in volume in this case was not compensated for fast enough by further conversion of still unactivated gas generating agent 18 into the activated configuration, and hence pressure inside the outer cavities 22 dropped slightly for short time. Whether an intermediate minimum is observed, as indicated by B', should depend on specific configuration of the test piece used, in particular on the nature and amount of gas generating agent 18 used. There may be other configurations where no intermediate minimum is observed at all once the inner envelopes 20 are broken.
   Once the outer cavities 22 were filled sufficiently with gas generating agent 18, gas pressure inside the outer cavities 24 recovered and subsequently increased steeply with time. Corresponding to this, the thickness D of the test piece 60 increased steeply with time, as indicated in curve section 554 in Fig. 14. The steep increase slowed down significantly at point C in Fig. 14. A corresponding height reading h_C at point C was obtained. The change in slope in point C indicates a first stage of the secondary activation condition of test piece 60.
   Thickness of test piece 60 in the secondary activation condition (corresponding to distance between first layer 26 and second layer 28 in secondary activation condition): D2 = h_0 - h_C.
   Increase in thickness of test piece 60 (corresponding to increase in distance between first layer 26 and second layer 28 in secondary activation condition with respect to unactivated condition): D2 - D0 = h_1 - h_C.
(f) Following point C in Fig. 14, thickness D of test piece still increased with time, but with lower slope. Slowing down of the increase in thickness of the test piece 60 is assumed to be due at least one of the following two effects: (i) gas generating agent has undergone conversion into the activated configuration completely, and therefore the amount of gas in the outer cavities does not increase any more, but pressure in the outer cavities only increases according to expansion of gas with temperature; (ii) the outer cavities have changed shape such as to optimize volume for given surface area (i.e. towards a spherical shape), and therefore further expansion is only possible as fast as the material of the outer envelopes stretches under gas pressure.
(g) A further slowing down of the increase in thickness D of the test piece with time was observed at point E in Fig. 14. At point E it was observed that bonding portions 27c, 27d, 27f, 27g separating the outer envelopes 24 broke under gas pressure inside outer cavities 22 (note that bonding portions 27a, 27b, 27h, 27e remained intact), and thus an outer macro-cavity was formed by combining outer cavities 22 to a single macro-cavity. The slowing down of the increase in thickness D with time following formation of the macro-cavity is attributed to the larger volume of the macro-cavity. Subsequent to point E in Fig. 14, the increase in thickness of test piece 60 continued until all thermal energy provided by heating plate 304 was converted into a pressure difference between inside the macro-cavity and outside the macro-cavity.

### Example of a fabric structure:

A fabric sample structure 50 with the configuration of Fig. 9a has been build up. Such fabric sample structure 50 includes a test piece 60 with a laminar structure 10 as described with respect to Fig. 12. The laminar structure 10 includes inner envelopes 20 produced according the production method described with respect to Figs. 2a to 2d and outer envelopes produced as described with respect to Fig. 12. As reference example the same set-up has been used without filling the inner envelopes 20 with gas generating agent 18.

The following test results were obtained:

### Example 1 Reference example

| | | |
|---|---|---|
| EN367-HTI24 -mean [s] | 29,1 | 18,9 |
| weight per area [g/m²] | 528 | 504 |
| RET [m² Pa/W] | 19,3 | 19,3 |

"EN367-HTI24 - mean" refers to "heat transfer index at 80 W/m²", as defined in DIN EN 367 (1992). This quantity describes the time it takes to obtain an increase of 24 K in temperature at the second side (inner side) of a sample fabric as shown in Fig. 11 when the first side (outer side 35) is subject to a heat source of 80 W/ m² with a flame.

RET refers to water vapor transmission resistance, as defined above.

## Claims

1. Laminar structure (10) providing adaptive thermal insulation, comprising
- a first layer (26), and a second layer (28) forming at least one outer envelope (24) enclosing an outer cavity (22) provided in between the first layer (26) and the second layer (28),
- at least one inner envelope (20) enclosing an inner cavity (16) being included in the outer cavity (22), and
- a gas generating agent (18) having an unactivated configuration and an activated configuration,
- the gas generating agent (18) being adapted to change from the unactivated configuration to the activated configuration, such as to increase a gas pressure at least inside the inner cavity (16), in response to an increase in temperature in the inner cavity (16),
- the first layer (26), the second layer (28), the outer cavity (22) and the inner cavity (16) being arranged such that a distance (D) between the first layer (26) and the second layer (28) increases in response to the increase in gas pressure inside the inner cavity (16); **characterized in that** the outer envelope (24) is water vapor permeable and gas impermeable with respect to at least one unpolar gas produced by gas generating agent (18); wherein the first and second layers (26, 28) are bonded together sufficiently gas tight to make sure that the at least one unpolar gas remains included in the outer cavity (24) for sufficiently long time after activation of the gas generating agent (18).

2. Laminar structure according to claim 1,
having, in an activated configuration of the gas generating agent (18), a primary activation condition of the laminar structure and a secondary activation condition of the laminar structure, in the primary activation condition the gas generating agent (18) being enclosed in the inner cavity (16), and in the secondary activation condition the gas generating agent (18) being released to the outer cavity (22).

3. Laminar structure according to claim 2,
wherein the gas generating agent (18) is adapted to generate gas in the inner cavity (16) in response to temperature in the inner cavity (16) exceeding a predetermined first activation temperature, such that the distance (D) between the first layer (26) and the second layer (28) increases from a first distance (D0) in the unactivated configuration of the gas generating agent (18) to a second distance (D1) in the primary activation condition,
wherein the second distance (D1) between the first layer (26) and the second layer (28) in the primary activation condition is larger than the first distance (D0) between the first layer (26) and the second layer (28) in the unactivated configuration of the gas generating agent (18) by 1 mm or more, preferably 3mm or more,

4. Laminar structure according to claim 2 or 3,
wherein the laminar structure further comprising an inner envelope (20) enclosing the inner cavity (16) and being adapted to release gas to the outer cavity (22), such that the distance (D) between the first layer (26) and the second layer (28) increases from the second distance (D1) in the primary activation condition to a third distance (D2) in the secondary activation condition,
wherein the third distance (D2) between the first layer (26) and the second layer (28) in the secondary activated condition is larger than the first distance (D0) between the first layer (26) and the second layer (28) in the unactivated configuration of the gas generating agent (18) by 6 mm or more.

5. Laminar structure according to claim 4,
wherein the inner envelope (20) is adapted to release gas to the outer cavity (22) in response to gas pressure in the inner cavity (16) exceeding a predetermined secondary activation threshold,
wherein the secondary activation threshold is determined by temperature inside the inner cavity (16) and the time for which the inner envelope (20) is exposed to the temperature inside the inner cavity.

6. Laminar structure (10) according to claim 4 or 5,
wherein the inner envelope (20) is fluid tight and/or made of a non-stretchable material with respect to being subject to gas pressure produced in the inner cavity (16) in the primary activation condition and/or-made of a metal/polymers composite material.

7. Laminar structure (10) according to any of claims 1 to 6,
wherein the gas generating agent (18), in the unactivated configuration, is in the form of a liquid (18'), the activation temperature of the laminar structure (10) corresponding to a boiling temperature of the gas generating agent (18), or
wherein the gas generating agent (18), in the unactivated configuration, is in the form of a solid or a gel, the activation temperature of the laminar structure (10) corresponding to a sublimation or decomposition temperature of the gas generating agent (18); or
wherein the gas generating agent (18), in the unactivated configuration, is in the form of a liquid, a gel, a solid, or a mixture thereof, the activation temperature of the laminar structure (10) being a temperature which corresponds to the activation energy of a chemical reaction leading to release of at least one gaseous compound from the gas generating agent (18).

8. Laminar structure (10) according to any of claims 4 to 7,
wherein the inner envelope (20) includes a dosing aid (19), the dosing aid (19) extending into the inner cavity (16) and having a portion to which the gas generating agent (18) is applied, said portion being included in the inner cavity (16),
wherein the dosing aid (19) is made of a material that is able to absorb or adsorb the gas generating agent (18) in the unactivated configuration of the gas generating agent (18).

9. Laminar structure (10) according to any of claims 4 to 8,
including an inner envelope cluster formed by at least two inner envelopes (20a, 20b) bonded together and/or
comprising a plurality of inner cavities (22), each of the inner cavities (22) being encased by a respective inner envelope (20), the inner envelopes (20) being arranged next to each other with distance (X) to each other.

10. Laminar structure (10) according to any of claims 1 to 9,
being configured to reversibly change, in response to an increase in temperature, the distance (D) between the first layer (26) and the second layer (28), from the first distance (D0) in the unactivated configuration of the gas generating agent (18) to a larger distance in an activated configuration of the gas generating agent (18), and/or, in response to a decrease in temperature, from the larger distance in an activated configuration of the gas generating agent (18) to the first distance (D0) in the unactivated configuration of the gas generating agent (18).

11. Laminar structure (10) according to any of claims 1 to 10,
further comprising an outer envelope (24) enclosing the outer cavity (22), wherein a volume of the inner cavity (16) and of the outer cavity (22) increases in response to the increase in gas pressure inside the inner cavity (16),
wherein the outer cavity (22) is enclosed by a semipermeable outer envelope (24).

12. Laminar structure (10) according to claim 11,
wherein the semipermeable outer envelope (24) includes a water absorbing material, in particular polyurethane.

13. Laminar structure (10) according to claim 11 or 12,
wherein the outer envelope (24) is made of at least two outer envelope layers being bonded together,
wherein the outer envelope (24) comprises a first outer envelope layer of non-stretchable material, and a second outer envelope layer of stretchable material.

14. Laminar structure (10) according to any of claims 11 to 13,
comprising a plurality of outer envelopes (24), wherein the outer envelopes (24) are arranged contiguously to each other,
wherein the first layer (26), and the second layer (28) are located adjacent to each other, the first and second layers (26, 28) being bonded together along at least one bonding portion (27a, 27b, 27c, 27d), such as to form the outer envelopes (24) enclosing the outer cavities (22) by the first and second layers (26, 28).

15. Laminar structure (10) according to any of claims 11 to 14,
wherein the outer cavity (22) comprises a plurality of outer subcavities being in gas communication with each other.

16. Laminar structure (10) according to any of claims 11 to 14,
comprising a plurality of outer cavities (22a - 22e), each of the outer cavities (22a - 22e), in the unactivated configuration of the gas generating agent (18), being separated from its adjacent outer cavities via respective bonding portions (27a - 27e), the bonding portions (27c - 27d) including predetermined breaking portions, respectively, which are adapted to break when being subject to gas pressure produced in the secondary activation condition, such as to allow gas communication between a plurality of adjacent outer cavities in the secondary activation condition.

17. Laminar structure according to any of claims 11 to 15,
wherein the inner cavity (16) has, in the activated configuration of the gas generating agent (18), a volume increase of between 10 and 2000 with respect to the volume of the inner cavity (16) the unactivated configuration of the gas generating agent (18),
wherein the outer cavity (22) has, in the activated configuration of the gas generating agent (18), a volume increase between 10 and 2000 with respect to the volume of the outer cavity (22) in the unactivated configuration of the gas generating agent (18).

18. Use of an envelope structure for providing a laminar structure (10) providing adaptive thermal insulation, the envelope structure comprising an inner envelope (20) enclosing at least one inner cavity (16), an outer envelope (24) enclosing at least one outer cavity (22), the inner envelope (20) being included in the outer cavity (22), and a gas generating agent (18) having an unactivated configuration and an activated configuration,
the gas generating agent (18) being adapted to change from the unactivated configuration to the activated configuration, such as to increase a gas pressure inside the inner cavity (16), in response to an increase in temperature in the inner cavity (16),
the envelope structure being configured such that a volume of the inner cavity (16) and the outer cavity (22) increases in response to the increase in gas pressure inside the inner cavity (16), **characterized in that** the outer envelope (24) is water vapor permeable and gas impermeable with respect to at least one unpolar gas produced by gas generating agent (18); wherein the first and second layers (26, 28) are bonded together sufficiently gas tight to make sure that gas remains included in the outer cavity (24) for sufficiently long time after activation of the gas generating agent (18).

19. Fabric (50) with a composite structure, the composite structure comprising a laminar structure (10) providing adaptive thermal insulation or an envelope structure according to any of the preceding claims.

20. Fabric (50) according to claim 19,
wherein the fabric (50) is adapted for use in a fire protective garment and/or comprises a Ret of less than 150 m²Pa/W, preferably less than 30 m²Pa/W, more preferably less than 20m²Pa/W.

21. Fabric (50) according to claim 19 and 20,
further comprising a barrier structure (38), wherein the barrier structure (38) comprises at least one water vapor permeable and water proof layer, the water vapor permeable and water proof layer comprising a water vapor permeable and water proof membrane.

## Patentansprüche

1. Laminatstruktur (10), die eine adaptive Wärmeisolierung schafft, aufweisend
- eine erste Schicht (26) und eine zweite Schicht (28), die mindestens eine äußere Umhüllung (24) bilden, die einen äußeren Hohlraum (22) umschließt, der zwischen der ersten Schicht (26) und der zweiten Schicht (28) vorgesehen ist,
- mindestens eine innere Umhüllung (20), die einen inneren Hohlraum (16) umschließt, der in dem äußeren Hohlraum (22) enthalten ist, und
- ein Gaserzeugungsmittel (18), das eine inaktivierte Konfiguration und eine aktivierte Konfiguration aufweist,
- wobei das Gaserzeugungsmittel (18) dazu ausgebildet ist, in Reaktion auf einen Temperaturanstieg in dem inneren Hohlraum (16) von der inaktivierten Konfiguration in die aktivierte Konfiguration zu wechseln, um dadurch einen Gasdruck zumindest im Inneren des inneren Hohlraums (16) zu erhöhen,
- wobei die erste Schicht (26), die zweite Schicht (28), der äußere Hohlraum (22) und der innere Hohlraum (16) derart angeordnet sind, dass eine Distanz (D) zwischen der ersten Schicht (26) und der zweiten Schicht (28) in Reaktion auf den Anstieg des Gasdrucks im Inneren des inneren Hohlraums (16) zunimmt;
**dadurch gekennzeichnet,**
**dass** die äußere Umhüllung (24) wasserdampfdurchlässig und gasdurchlässig in Bezug auf mindestens ein durch das Gaserzeugungsmittel (18) erzeugtes unpolares Gas ist;
wobei die erste und die zweite Schicht (26, 28) ausreichend gasdicht miteinander verbunden sind, damit sichergestellt ist, dass das mindestens eine unpolare Gas für eine ausreichend lange Zeitdauer nach Aktivierung des Gaserzeugungsmittels (18) in dem äußeren Hohlraum (24) eingeschlossen bleibt.

2. Laminatstruktur nach Anspruch 1,
die in einer aktivierten Konfiguration des Gaserzeugungsmittels (18) einen primären Aktivierungszustand der Laminatstruktur und einen sekundären Aktivierungszustand der Laminatstruktur aufweist, wobei in dem primären Aktivierungszustand das Gaserzeugungsmittel (18) in dem inneren Hohlraum (16) eingeschlossen ist und in dem sekundären Aktivierungszustand das Gaserzeugungsmittel (18) zu dem äußeren Hohlraum (22) freigesetzt wird.

3. Laminatstruktur nach Anspruch 2,
wobei das Gaserzeugungsmittel (18) dazu ausgebildet ist, Gas in dem inneren Hohlraum (16) in Reaktion darauf zu erzeugen, dass eine Temperatur in dem inneren Hohlraum (16) eine vorbestimmte erste Aktivierungstemperatur übersteigt, so dass die Distanz (D) zwischen der ersten Schicht (26) und der zweiten Schicht (28) von einer ersten Distanz (D0) in der inaktivierten Konfiguration des Gaserzeugungsmittels (18) auf eine zweite Distanz (D1) in dem primären Aktivierungszustand ansteigt,
wobei die zweite Distanz (D1) zwischen der ersten Schicht (26) und der zweiten Schicht (28) in dem primären Aktivierungszustand um 1 mm oder mehr, vorzugsweise um 3 mm oder mehr, größer ist als die erste Distanz (D0) zwischen der ersten Schicht (26) und der zweiten Schicht (28) in der inaktivierten Konfiguration des Gaserzeugungsmittels (18).

4. Laminatstruktur nach Anspruch 2 oder 3,
wobei die Laminatstruktur weiterhin eine innere Umhüllung (20) aufweist, die den inneren Hohlraum (16) umschließt und dazu ausgebildet ist, Gas zu dem äußeren Hohlraum (22) freizusetzen, so dass die Distanz (D) zwischen der ersten Schicht (26) und der zweiten Schicht (28) von der zweiten Distanz (D1) in dem primären Aktivierungszustand auf eine dritte Distanz (D2) in dem sekundären Aktivierungszustand ansteigt,
wobei die dritte Distanz (D2) zwischen der ersten Schicht (26) und der zweiten Schicht (28) in dem sekundären Aktivierungszustand um 6 mm oder mehr größer ist als die erste Distanz (D0) zwischen der ersten Schicht (26) und der zweiten Schicht (28) in der inaktivierten Konfiguration des Gaserzeugungsmittels (18).

5. Laminatstruktur nach Anspruch 4,
wobei die innere Umhüllung (20) dazu ausgebildet ist, Gas zu dem äußeren Hohlraum (22) in Reaktion darauf freizusetzen, dass der Gasdruck in dem inneren Hohlraum (16) einen vorbestimmten Sekundäraktivierungs-Schwellenwert übersteigt,
wobei der Sekundäraktivierungs-Schwellenwert bestimmt wird durch die Temperatur im Inneren des inneren Hohlraums (16) sowie die Zeitdauer, über die die innere Umhüllung (20) der Temperatur im Inneren des inneren Hohlraums ausgesetzt ist.

6. Laminatstruktur (10) nach Anspruch 4 oder 5,
wobei die innere Umhüllung (20) fluiddicht und/oder aus einem nicht dehnbaren Material hergestellt ist, und zwar im Hinblick darauf, dass sie dem in dem primären Aktivierungszustand in dem inneren Hohlraum (16) erzeugten Gasdruck ausgesetzt ist, und/oder aus einem Metall/Polymer-Verbundmaterial hergestellt ist.

7. Laminatstruktur (10) nach einem der Ansprüche 1 bis 6,
wobei das Gaserzeugungsmittel (18) in der inaktivierten Konfiguration in Form einer Flüssigkeit (18') vorliegt, wobei die Aktivierungstemperatur der Laminatstruktur (10) einem Siedepunkt des Gaserzeugungsmittels (18) entspricht, oder
wobei das Gaserzeugungsmittel (18) in der inaktivierten Konfiguration in Form eines Feststoffs oder eines Gels vorliegt, wobei die Aktivierungstemperatur der Laminatstruktur (10) einer Sublimations- oder Zersetzungstemperatur des Gaserzeugungsmittels (18) entspricht; oder
wobei das Gaserzeugungsmittel (18) in der inaktivierten Konfiguration in Form einer Flüssigkeit, eines Gels, eines Feststoffs oder einer Mischung davon vorliegt, wobei die Aktivierungstemperatur der Laminatstruktur (10) eine Temperatur ist, die der Aktivierungsenergie einer chemischen Reaktion entspricht, die zur Freisetzung von mindestens einer gasförmigen Verbindung aus dem Gaserzeugungsmittel (18) führt.

8. Laminatstruktur (10) nach einem der Ansprüche 4 bis 7,
wobei die innere Umhüllung (20) eine Dosierhilfe (19) aufweist, wobei sich die Dosierhilfe (19) in den inneren Hohlraum (16) hinein erstreckt und einen Bereich aufweist, der mit dem Gaserzeugungsmittel (18) beaufschlagt wird, wobei der Bereich in dem inneren Hohlraum (16) enthalten ist,
wobei die Dosierhilfe (19) aus einem Material hergestellt ist, das in der Lage ist, das Gaserzeugungsmittel (18) in der inaktivierten Konfiguration des Gaserzeugungsmittels (18) zu absorbieren oder zu adsorbieren.

9. Laminatstruktur (10) nach einem der Ansprüche 4 bis 8,
die eine aus mindestens zwei miteinander verbundenen inneren Umhüllungen (20a, 20b) gebildeten Cluster von inneren Umhüllungen aufweist und/oder eine Mehrzahl von inneren Hohlräumen (22) aufweist, wobei jeder der inneren Hohlräume (22) von einer jeweiligen inneren Umhüllung (20) umschlossen ist, wobei die inneren Umhüllungen (20) mit Abstand (X) voneinander nebeneinander angeordnet sind.

10. Laminatstruktur nach einem der Ansprüche 1 bis 9,
die dazu ausgebildet ist, in Reaktion auf einen Temperaturanstieg die Distanz (D) zwischen der ersten Schicht (26) und der zweiten Schicht (28) von der ersten Distanz (D0) in der inaktivierten Konfiguration des Gaserzeugungsmittels (16) in eine größere Distanz in einer aktivierten Konfiguration des Gaserzeugungsmittels (16) und/oder in Reaktion auf einen Temperaturabfall von der größeren Distanz in einer aktivierten Konfiguration des Gaserzeugungsmittels (18) in die erste Distanz (D0) in der inaktivierten Konfiguration des Gaserzeugungsmittels (18) in reversibler Weise zu ändern.

11. Laminatstruktur (10) nach einem der Ansprüche 1 bis 10,
weiterhin mit einer äußeren Umhüllung (24), die den äußeren Hohlraum (22) umschließt, wobei ein Volumen des inneren Hohlraums (16) und des äußeren Hohlraums (22) in Reaktion auf den Anstieg des Gasdrucks im Inneren des inneren Hohlraums (16) größer wird,
wobei der äußere Hohlraum (22) von einer semipermeablen äußeren Umhüllung (24) umschlossen ist.

12. Laminatstruktur (10) nach Anspruch 11,
wobei die semipermeable äußere Umhüllung (24) ein wasserabsorbierendes Material, insbesondere Polyurethan, beinhaltet.

13. Laminatstruktur (10) nach Anspruch 11 oder 12,
wobei die äußere Umhüllung (24) aus mindestens zwei äußeren Umhüllungsschichten hergestellt ist, die miteinander verbunden sind,
wobei die äußere Umhüllung (24) eine erste äußere Umhüllungsschicht aus nicht dehnbarem Material sowie eine zweite äußere Umhüllungsschicht aus dehnbarem Material aufweist.

14. Laminatstruktur (10) nach einem der Ansprüche 11 bis 13,
die eine Mehrzahl von äußeren Umhüllungen (24) aufweist,
wobei die äußeren Umhüllungen (24) zusammenhängend angeordnet sind, wobei die erste Schicht (26) und die zweite Schicht (28) einander benachbart angeordnet sind, wobei die erste und die zweite Schicht (26, 28) entlang von mindestens einem Verbindungsbereich (27a, 27b, 27c, 27d) derart miteinander verbunden sind, dass die die äußeren Hohlräume (22) umschließenden äußeren Umhüllungen (24) durch die erste und die zweite Schicht (26, 28) gebildet sind.

15. Laminatstruktur (10) nach einem der Ansprüche 11 bis 14,
wobei der äußere Hohlraum (22) eine Mehrzahl von äußeren Unterhohlräumen aufweist, die miteinander in Gasverbindung stehen.

16. Laminatstruktur (10) nach einem der Ansprüche 11 bis 14,
die eine Mehrzahl von äußeren Hohlräumen (22a - 22e) aufweist, wobei jeder der äußeren Hohlräume (22a - 22e) in der inaktivierten Konfiguration des Gaserzeugungsmittels (18) von seinen benachbarten äußeren Hohlräumen über jeweilige Verbindungsbereiche (27a - 27e) getrennt sind, wobei die Verbindungsbereiche (27a - 27e) jeweils vorbestimmte Bruchbereiche aufweisen, die dazu ausgebildet sind, zu brechen, wenn sie einem in dem sekundären Aktivierungszustand erzeugten Gasdruck ausgesetzt sind, so dass in dem sekundären Aktivierungszustand eine Gasverbindung zwischen einer Mehrzahl von einander benachbarten äußeren Hohlräumen ermöglicht ist.

17. Laminatstruktur nach einem der Ansprüche 11 bis 15,
wobei der innere Hohlraum (16) in der aktivierten Konfiguration des Gaserzeugungsmittels (18) einen Volumenanstieg von zwischen 10 und 2000 in Bezug auf das Volumen des inneren Hohlraums (16) in der inaktivierten Konfiguration des Gaserzeugungsmittels (18) aufweist,
wobei der äußere Hohlraum (18) in der aktivierten Konfiguration des Gaserzeugungsmittels (18) einen Volumenanstieg von zwischen 10 und 2000 in Bezug auf das Volumen des äußeren Hohlraums (16) in der inaktivierten Konfiguration des Gaserzeugungsmittels (18) aufweist.

18. Verwendung einer Umhüllungsstruktur zum Bereitstellen einer Laminatstruktur (10), die eine adaptive Wärmeisolierung schafft, wobei die Umhüllungsstruktur eine innere Umhüllung (20), die mindestens einen inneren Hohlraum (16) umschließt, eine äußere Umhüllung (24), die mindestens einen äußeren Hohlraum (22) umschließt, wobei die innere Umhüllung (20) in dem äußeren Hohlraum (22) enthalten ist, sowie ein Gaserzeugungsmittel (18) mit einer inaktivierten Konfiguration und einer aktivierten Konfiguration aufweist, wobei das Gaserzeugungsmittel (18) dazu ausgebildet ist, von der inaktivierten Konfiguration in die aktivierte Konfiguration zu wechseln, um dadurch einen Gasdruck im Inneren des inneren Hohlraums (16) in Reaktion auf einen Temperaturanstieg in dem inneren Hohlraum (16) zu erhöhen,
wobei die Umhüllungsstruktur derart ausgebildet ist, dass ein Volumen des inneren Hohlraums (16) und des äußeren Hohlraums (22) in Reaktion auf den Anstieg des Gasdrucks im Inneren des inneren Hohlraums (16) größer wird,
**dadurch gekennzeichnet, dass** die äußere Umhüllung (24) wasserdampfdurchlässig und gasundurchlässig in Bezug auf mindestens ein von dem Gaserzeugungsmittel (18) erzeugtes unpolares Gas ist; wobei die erste und die zweite Schicht (26, 28) ausreichend gasdicht miteinander verbunden sind, damit sichergestellt ist, dass Gas für eine ausreichend lange Zeitdauer nach der Aktivierung des Gaserzeugungsmittels (18) in dem äußeren Hohlraum (24) eingeschlossen bleibt.

19. Textiles Gebilde (50) mit einer Verbundstruktur,
wobei die Verbundstruktur eine adaptive Wärmeisolierung oder eine Umhüllungsstruktur nach einem der vorhergehenden Ansprüche bereitstellt.

20. Textiles Gebilde (50) nach Anspruch 19,
wobei das textile Gebilde (50) zur Verwendung in Brandschutzbekleidung ausgebildet ist und/oder einen Ret von weniger als 150 m²Pa/W, vorzugsweise weniger als 30 m²Pa/W und noch bevorzugter von weniger als 20 m²Pa/W aufweist.

21. Textiles Gebilde (50) nach Anspruch 19 und 20,
das weiterhin eine Barrierenstruktur (38) aufweist, wobei die Barrierenstruktur (38) mindestens eine wasserdampfdurchlässige und wasserdichte Schicht aufweist, wobei die wasserdampfdurchlässige und wasserdichte Schicht eine wasserdampfdurchlässige und wasserdichte Membran aufweist.

## Revendications

1. Structure laminaire (10) procurant une isolation thermique adaptative, comprenant :
- une première couche (26) et une deuxième couche (28) formant au moins une enveloppe externe (24) renfermant une cavité externe (22) prévue pour venir s'intercaler entre la première couche (26) et la deuxième couche (28) ;
- au moins une enveloppe interne (20) renfermant une cavité interne (16) qui est incluse dans la cavité externe (22) ; et
- un agent générateur de gaz (18) possédant une configuration inactivée et une configuration activée ;
- l'agent générateur de gaz (18) étant conçu pour passer de la configuration inactivée à la configuration activée, de façon à augmenter une pression de gaz au moins à l'intérieur de la cavité interne (16) en réponse à une élévation de la température régnant dans la cavité interne (16) ;
- la première couche (26), la deuxième couche (28), la cavité externe (22) et la cavité interne (16) étant conçues d'une manière telle qu'une distance (D) entre la première couche (26) et la deuxième couche (28) augmente en réponse à l'augmentation de la pression de gaz régnant à l'intérieur de la cavité interne (16) ;
**caractérisée en ce que** l'enveloppe externe (24) est perméable à la vapeur d'eau et imperméable aux gaz en ce qui concerne au moins un gaz non polaire produit par l'agent de génération de gaz (18) ;
dans laquelle la première et la deuxième couche (26, 28) sont reliées l'une à l'autre d'une manière suffisamment étanche aux gaz afin de s'assurer que ledit au moins un gaz non polaire reste inclus dans la cavité externe (24) pendant un laps de temps suffisamment long après l'activation de l'agent de génération de gaz (18).

2. Structure laminaire selon la revendication 1, possédant, dans une configuration activée de l'agent de génération de gaz (18), un état d'activation primaire de la structure laminaire et un état d'activation secondaire de la structure laminaire, l'agent de génération de gaz (18) étant renfermé dans la cavité interne (16) dans l'état d'activation primaire et l'agent de génération de gaz (18) étant relâché en direction de la cavité externe (22) dans l'état d'activation secondaire.

3. Structure laminaire selon la revendication 2, dans laquelle l'agent de génération de gaz (18) est conçu pour générer du gaz dans la cavité interne (16) en réponse à un dépassement de la température régnant dans la cavité interne (16) par rapport à une première température d'activation prédéterminée, d'une manière telle que la distance (D) entre la première couche (26) et la deuxième couche (28) augmente à partir d'une première distance (D0) dans l'état inactivée de l'agent de génération de gaz (18) jusqu'à une deuxième distance (D1) dans l'état d'activation primaire ;
dans laquelle la deuxième distance (D1) entre la première couche (26) et la deuxième couche (28) dans l'état d'activation primaire est supérieure à la première distance (D0) entre la première couche (26) et la deuxième couche (28) dans l'état inactivé de l'agent de génération de gaz (18), à concurrence de 1 mm ou plus, de préférence de 3 mm ou plus.

4. Structure laminaire selon la revendication 2 ou 3, dans laquelle la structure laminaire comprend en outre une enveloppe interne (20) renfermant la cavité interne (16) et conçue pour libérer du gaz en direction de la cavité externe (22), d'une manière telle que la distance (D) entre la première couche (26) et la deuxième couche (28) augmente à partir de la deuxième distance (D1) dans l'état d'activation primaire jusqu'à une troisième distance (D2) dans l'état d'activation secondaire ;
dans laquelle la troisième distance (D2) entre la première couche (26) et la deuxième couche (28) dans l'état activé secondaire est supérieure à la première distance (D0) entre la première couche (26) et la deuxième couche (28) dans l'état inactivé de l'agent de génération de gaz (18), à concurrence de 6 mm ou plus.

5. Structure laminaire selon la revendication 4, dans laquelle l'enveloppe interne (20) est conçue pour libérer du gaz en direction de la cavité externe (22) en réponse à un dépassement de la pression de gaz régnant dans la cavité interne (16) par rapport à un seuil prédéterminé d'activation secondaire ;
dans laquelle le seuil d'activation secondaire est déterminé par la température régnant à l'intérieur de la cavité interne (16) et par le laps de temps au cours duquel l'enveloppe interne (20) est exposée à la température régnant à l'intérieur de la cavité interne.

6. Structure laminaire (10) selon la revendication 4 ou 5, dans laquelle l'enveloppe interne (20) est étanche aux fluides et/ou est constituée d'un matériau non extensible en ce qui concerne le fait d'être soumis à la pression de gaz qui se produit dans la cavité interne (16) dans l'état d'activation primaire et/ou est constituée d'un matériau composite à base de métal/de polymères.

7. Structure laminaire (10) selon l'une quelconque des revendications 1 à 6,
dans laquelle l'agent générant un gaz (18), dans la configuration inactivée, se présente sous la forme d'un liquide (18'), la température d'activation de la structure laminaire (10) correspondant à une température d'ébullition de l'agent générant un gaz (18) ; ou
dans laquelle l'agent générant un gaz (18), dans la configuration inactivée, se présente sous la forme d'un solide ou d'un gel, la température d'activation de la structure laminaire (10) correspondant à une température de sublimation ou de décomposition de l'agent générant un gaz (18) ; ou
dans laquelle l'agent générant un gaz (18), dans la configuration inactivée, se présente sous la forme d'un liquide, d'un gel, d'un solide, ou d'un de leurs mélanges, la température d'activation de la structure laminaire (10) représentant une température qui correspond à l'énergie d'activation d'une réaction chimique donnant lieu à une libération d'au moins un composé gazeux à partir de l'agent de génération de gaz (18).

8. Structure laminaire (10) selon l'une quelconque des revendications 4 à 7,
dans laquelle l'enveloppe interne (20) englobe un auxiliaire de dosage (19), l'auxiliaire de dosage (19) s'étendant jusque dans la cavité interne (16) et possédant une portion sur laquelle agit l'agent de génération de gaz, ladite portion étant incluse dans la cavité interne (16) ;
dans laquelle l'auxiliaire de dosage (19) est constitué d'un matériau qui est capable d'absorber ou d'adsorber l'agent de génération de gaz (18) dans la configuration inactivée de l'agent de génération de gaz (18).

9. Structure laminaire (10) selon l'une quelconque des revendications 4 à 8, englobant un groupe d'enveloppes internes formé par au moins deux enveloppes internes (20a, 20b) reliées l'une à l'autre et/ou comprenant plusieurs cavités internes (22), chacune des cavités internes (22) étant entourée par une enveloppe interne respective (20), les enveloppes internes (20) étant disposées les unes à côté des autres avec une distance (X) les unes par rapport aux autres.

10. Structure laminaire (10) selon l'une quelconque des revendications 1 à 9, configurée pour un changement réversible, en réponse à une élévation de la température, de la distance (D) entre la première couche (26) et la deuxième couche (28), à partir de la première distance (D0) dans la configuration inactivée de l'agent de génération de gaz (18) jusqu'à une distance supérieure dans une configuration activée de l'agent de génération de gaz (18) et/ou, en réponse à une diminution de la température, à partir de la distance supérieure dans une configuration activée de l'agent de génération de gaz (18) jusqu'à la première distance (D0) dans la configuration inactivée de l'agent de génération de gaz (18).

11. Structure laminaire (10) selon l'une quelconque des revendications 1 à 10, comprenant en outre une enveloppe externe (24) renfermant la cavité externe (22) ; dans laquelle un volume de la cavité interne (16) et de la cavité externe (22) augmente en réponse à l'augmentation de la pression du gaz régnant à l'intérieur de la cavité interne (16) ; dans laquelle la cavité externe (22) est renfermée par une enveloppe externe semiperméable (24).

12. Structure laminaire (10) selon la revendication 11,
dans laquelle l'enveloppe externe semiperméable (24) englobe un matériau absorbant l'eau, en particulier du polyuréthane.

13. Structure laminaire (10) selon la revendication 11 ou 12, dans laquelle l'enveloppe externe (24) est réalisée à partir d'au moins deux couches d'enveloppes externes qui sont reliées l'un à l'autre ;
dans laquelle l'enveloppe externe (24) comprend une première couche d'enveloppe externe constituée d'un matériau non extensible et une seconde couche d'enveloppe externe constituée d'un matériau extensible.

14. Structure laminaire (10) selon l'une quelconque des revendications 11 à 13, comprenant plusieurs enveloppes externes (24) ; dans laquelle les enveloppes externes (24) sont disposées en position contiguë les unes par rapport aux autres ; dans laquelle la première couche (26) et la deuxième couche (28) sont disposées en position réciproquement adjacente, la première et la deuxième couche (26, 28) étant reliées l'une à l'autre le long d'une d'au moins une portion de liaison (27a, 27b, 27c, 27d) de façon à obtenir les enveloppes externes (24) renfermant les cavités externes (22) via la première et la deuxième couche (26, 28).

15. Structure laminaire (10) selon l'une quelconque des revendications 11 à 14,
dans laquelle la cavité externe (22) comprend plusieurs sous-cavités externes mises en communication de gaz les unes avec les autres.

16. Structure laminaire (10) selon l'une quelconque des revendications 11 à 14, comprenant plusieurs cavités externes (22a - 22e), chacune des cavités externes (22a - 22e), dans la configuration inactivée de l'agent de génération de gaz (18), étant séparée de ses cavités externes adjacentes par des portions de liaison respectives (27a - 27e), les portions de liaison (27c - 27d) englobant des portions de rupture prédéterminées, respectivement qui sont conçues pour se rompre lorsqu'elles sont soumises à une pression de gaz générée dans l'état d'activation secondaire, de façon à permettre une communication de gaz entre plusieurs cavités externes adjacentes dans l'état d'activation secondaire.

17. Structure laminaire (10) selon l'une quelconque des revendications 11 à 15,
dans laquelle la cavité interne (16) possède, dans la configuration activée de l'agent de génération de gaz (18), une augmentation de volume entre 10 et 2000 par rapport au volume de la cavité interne (16) dans la configuration inactivée de l'agent de génération de gaz (18) ;
dans laquelle la cavité externe (22) possède, dans la configuration activée de l'agent de génération de gaz (18), une augmentation de volume entre 10 et 2000 par rapport au volume de la cavité externe (22) dans la configuration inactivée de l'agent de génération de gaz (18).

18. Utilisation d'une structure d'enveloppe pour obtenir une structure laminaire (10) procurant une isolation thermique adaptative, la structure d'enveloppe comprenant : une enveloppe interne (20) renfermant au moins une cavité interne (16) ; une enveloppe externe (24) renfermant au moins une cavité externe (22), l'enveloppe interne (20) étant incluse dans la cavité externe (22) ; et un agent de génération de gaz (18) possédant une configuration inactivée et une configuration activée, l'agent de génération de gaz (18) étant conçu pour passer de la configuration inactivée à la configuration activée de façon à augmenter une pression de gaz régnant à l'intérieur de la cavité interne (16) en réponse à une élévation de la température régnant dans la cavité interne (16), la structure enveloppe étant configurée d'une manière telle qu'un volume de la cavité interne (16) et de la cavité externe (22) augmente en réponse à l'augmentation de la pression de gaz régnant à l'intérieur de la cavité interne (16) ; **caractérisé en ce que** l'enveloppe externe (24) est perméable à la vapeur d'eau et imperméable aux gaz en ce qui concerne au moins un gaz non polaire produit par l'agent de génération de gaz (18) ; dans laquelle la première et la deuxième couche (26, 28) sont reliées l'une à l'autre d'une manière suffisamment étanche aux gaz afin de garantir que le gaz reste inclus dans la cavité externe (24) pendant un laps de temps suffisamment long après l'activation de l'agent de génération de gaz (18).

19. Étoffe (50) comprenant une structure composite, la structure composite comprenant une structure laminaire (10) procurant une isolation thermique adaptative ou une structure d'enveloppe selon l'une quelconque des revendications précédentes.

20. Étoffe (50) selon la revendication 19, dans laquelle l'étoffe (50) est conçue pour son utilisation dans un vêtement procurant une protection contre le feu et/ou comprend un coefficient RET inférieur à 150 m²Pa/W, de préférence inférieur à 30 m²Pa/W, de manière plus préférée inférieur à 20 m²Pa/W.

21. Étoffe (50) selon les revendications 19 et 20, comprenant en outre une structure (38) faisant office de barrière, dans lequel la structure (38) faisant office de barrière comprend au moins une couche perméable à la vapeur d'eau et étanche à l'eau, la couche perméable à la vapeur d'eau et étanche à l'eau comprenant une membrane perméable à la vapeur d'eau et étanche à l'eau.
